(19) **Europäisches Patentamt European Patent Office Office européen des brevets**

(11) **EP 4 753 174 A1**

(12) **EUROPEAN PATENT APPLICATION**
published in accordance with Art. 153(4) EPC

(43) Date of publication:
03.06.2026 Bulletin 2026/23

(21) Application number: 24855713.4

(22) Date of filing: 15.08.2024

(51) International Patent Classification (IPC):
*H04B 17/309* (2015.01)

(52) Cooperative Patent Classification (CPC):
H04B 7/06; H04B 17/30; H04B 17/309; H04L 5/00

(86) International application number:
PCT/CN2024/112428

(87) International publication number:
WO 2025/039988 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.08.2023 CN 202311052476

(71) Applicant: HUAWEI TECHNOLOGIES CO., LTD.
Shenzhen 518129 (CN)

(72) Inventors:
• GAO, Junhui
Shenzhen, Guangdong 518129 (CN)
• YUAN, Yiling
Shenzhen, Guangdong 518129 (CN)
• WANG, Xiaohan
Shenzhen, Guangdong 518129 (CN)
• JIN, Huangping
Shenzhen, Guangdong 518129 (CN)

(74) Representative: Maiwald GmbH
Engineering
Elisenhof
Elisenstrasse 3
80335 München (DE)

(54) **CHANNEL MEASUREMENT METHOD AND COMMUNICATION APPARATUS**

(57) This application provides a channel measurement method and a communication apparatus, to improve accuracy of a channel measurement result, and may be applied to a communication system. The method includes: A terminal device receives first information indicating a channel state information reference signal CSI-RS resource occupied by a CSI-RS, receives the CSI-RS on the CSI-RS resource, and sends channel state information CSI. The CSI-RS resource occupied by the CSI-RS meets one or more of the following: including a first CSI-RS resource, where an RB set occupied by the first CSI-RS resource corresponds to a plurality of orthogonal codes; including a second CSI-RS resource, where start time domain positions corresponding to an RB on which a CSI-RS in the second CSI-RS resource is located include a start time domain position in a first set and a start time domain position in a second set; including a plurality of CSI-RS resources; or including a third CSI-RS resource, where different port sets of the third CSI-RS resource correspond to different RB sets.

FIG. 12

## Description

This application claims priority to Chinese Patent Application No. 202311052476.5, filed with the China National Intellectual Property Administration on August 18, 2023 and entitled "CHANNEL MEASUREMENT METHOD AND COMMUNICATION APPARATUS", which is incorporated herein by reference in its entirety.

## TECHNICAL FIELD

This application relates to the communication field, and in particular, to a channel measurement method and a communication apparatus.

## BACKGROUND

In existing related technologies, a channel state information-resource port (channel state information-resource port, CSI-RSP) configuration can support up to a 32-antenna-port solution. For a communication system with larger-scale antennas, for example, 64, 128, or 256 transmit antennas, because a quantity of configurable antenna ports is limited, a terminal device cannot obtain complete channel state information in a space domain dimension. Consequently, accuracy of a channel measurement result is low.

## SUMMARY

Embodiments of this application provide a channel measurement method and a communication apparatus, to resolve a problem that channel state information in a space domain dimension is incomplete, thereby improving accuracy of a channel measurement result.

To achieve the foregoing objective, this application uses the following technical solutions.

According to a first aspect, a channel measurement method is provided. The channel measurement method includes: A terminal device receives first information from a network device. The first information indicates a CSI-RS resource occupied by a channel state information reference signal CSI-RS. The CSI-RS resource occupied by the CSI-RS meets one or more of the following: the CSI-RS resource occupied by the CSI-RS includes a first CSI-RS resource, where a resource block RB set occupied by the first CSI-RS resource corresponds to a plurality of orthogonal codes; the CSI-RS resource occupied by the CSI-RS includes a second CSI-RS resource, where start time domain positions corresponding to an RB on which a CSI-RS in the second CSI-RS resource is located include a start time domain position in a first set and a start time domain position in a second set, the first set and the second set each include at least one start time domain position, and any start time domain position in the second set is different from a start time domain position in the first set; the CSI-RS resource occupied by the CSI-RS includes a plurality of CSI-RS resources; or the CSI-RS resource occupied by the CSI-RS includes a third CSI-RS resource, where different port sets of the third CSI-RS resource correspond to different RB sets. The terminal device receives the CSI-RS from the network device on the CSI-RS resource occupied by the CSI-RS. The terminal device sends channel state information CSI to the network device. The CSI is obtained by measuring the CSI-RS.

Based on the channel measurement method provided in the first aspect, the terminal device may receive the first information, receive the CSI-RS based on the CSI-RS resource that is occupied by the CSI-RS and that is indicated by the first information, and perform channel measurement. The CSI-RS resource occupied by the CSI-RS is the first CSI-RS resource, where the first CSI-RS resource corresponds to the plurality of orthogonal codes; and/or the CSI-RS resource occupied by the CSI-RS is the second CSI-RS resource, where the start time domain position of the second CSI-RS resource includes the start time domain position in the first set and the start time domain position in the second set; and/or the CSI-RS occupies the plurality of CSI-RS resources; and/or the CSI-RS resource occupied by the CSI-RS is the third CSI-RS resource, where different port sets in the third CSI-RS resource correspond to different RBs. In this way, a total quantity of ports corresponding to the CSI-RS resource occupied by the CSI-RS can be increased, to obtain more complete channel state information in a space domain dimension, and therefore improve accuracy of a channel measurement result.

In a possible design solution, the first information includes the plurality of orthogonal codes corresponding to the RB set occupied by the first CSI-RS resource, so that a plurality of groups of port sets are distinguished by using the plurality of orthogonal codes, and therefore resource utilization can be improved.

In a possible design solution, a quantity of start time domain positions in the first set and a quantity of start time domain positions in the second set each are related to one or more of the following: a quantity of ports of the CSI-RS in the second CSI-RS resource, a code division multiplexing CDM type of the CSI-RS in the second CSI-RS resource, or a quantity of start frequency domain positions of a CDM group corresponding to the RB on which the CSI-RS in the second CSI-RS resource is located.

In a possible design solution, the quantity of ports of the CSI-RS in the second CSI-RS resource is 48, the CDM type of the CSI-RS in the second CSI-RS resource is that two ports are multiplexed on two resource elements REs, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$ and a time domain unit $l_1$, and the start time domain position in the second set includes a time domain unit $l_2$ and a time domain unit $l_3$. In this way, a quantity of time domain positions corresponding to the CSI-RS resource occupied by the CSI-RS can be doubled, to indicate a CSI-RS resource with 48 ports.

In a possible design solution, the quantity of ports of the CSI-RS in the second CSI-RS resource is 48, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$ and a time domain unit $l_1$, and the start time domain position in the second set includes a time domain unit $l_2$ and a time domain unit $l_3$. In this way, a quantity of time domain positions corresponding to the CSI-RS resource occupied by the CSI-RS can be doubled, to indicate a CSI-RS resource with 48 ports.

In a possible design solution, the quantity of ports of the CSI-RS in the second CSI-RS resource is 48, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$, and the start time domain position in the second set includes a time domain unit $l_1$. In this way, a quantity of time domain positions corresponding to the CSI-RS resource occupied by the CSI-RS can be doubled, to indicate a CSI-RS resource with 48 ports.

In a possible design solution, the quantity of ports of the CSI-RS in the second CSI-RS resource is 64, the CDM type of the CSI-RS in the second CSI-RS resource is that two ports are multiplexed on two REs, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$ and a time domain unit $l_1$, and the start time domain position in the second set includes a time domain unit $l_2$ and a time domain unit $l_3$. In this way, a quantity of time domain positions corresponding to the CSI-RS resource occupied by the CSI-RS can be doubled, to indicate a CSI-RS resource with 64 ports.

In a possible design solution, the quantity of ports of the CSI-RS in the second CSI-RS resource is 64, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$ and a time domain unit $l_1$, and the start time domain position in the second set includes a time domain unit $l_2$ and a time domain unit $l_3$. A quantity of time domain positions corresponding to the CSI-RS resource occupied by the CSI-RS can be doubled, to indicate a CSI-RS resource with 64 ports.

In a possible design solution, the quantity of ports of the CSI-RS in the second CSI-RS resource is 64, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$, and the start time domain position in the second set includes a time domain unit $l_1$. A quantity of time domain positions corresponding to the CSI-RS resource occupied by the CSI-RS can be doubled, to indicate a CSI-RS resource with 64 ports.

In a possible design solution, a frequency domain density of the third CSI-RS resource is less than or equal to a first density threshold. In this way, a same quantity of CSI-RS ports can occupy fewer frequency domain resources, so that CSI-RS pilot overheads are reduced.

Optionally, the first density threshold is 0.5.

Optionally, the first information further indicates that a same port of the third CSI-RS resource corresponds to different RBs in two adjacent CSI-RS measurements. In this way, overheads can be reduced.

Further, on the third CSI-RS resource, an RB corresponding to a port p in a $k^{th}$ CSI-RS measurement satisfies the following relationship: $P(k, p) = (P(0, p) + k) \bmod N$. p represents a port index, k represents the $k^{th}$ measurement, $P(0, p)$ represents a start frequency domain index of the port p in an initial CSI-RS measurement, $P(k, p)$ is a frequency domain index of the port p in the $k^{th}$ CSI-RS measurement, N represents a parameter determined based on the frequency domain density of the third CSI-RS resource, and $k$ is a positive integer greater than or equal to 1.

Further, the first information further indicates that the same port of the third CSI-RS resource corresponds to non-contiguous RBs in the two adjacent CSI-RS measurements. In this way, for a same port, CSI-RSs on more RBs can be measured, so that the accuracy of the channel measurement result is further improved.

Further, the first information further indicates a quantity of RBs between the RBs occupied by the same port of the third CSI-RS resource in the two adjacent CSI-RS measurements. In this way, for a same port, CSI-RSs on more non-contiguous RBs can be measured, so that the accuracy of the channel measurement result can be further improved in a frequency selective channel.

In a possible design solution, the first information includes one or more of the following of each CSI-RS resource in the CSI-RS resource occupied by the CSI-RS: a quantity of ports corresponding to an RB on which the CSI-RS resource is located, a CDM type of the CSI-RS in the CSI-RS resource, a start time domain position corresponding to the RB on which the CSI-RS in the CSI-RS resource is located, and a start frequency domain position of a CDM group corresponding to the RB on which the CSI-RS in the CSI-RS resource is located, to indicate information about the CSI-RS resource occupied by the CSI-RS.

According to a second aspect, a channel measurement method is provided. The channel measurement method includes: A network device sends first information to a terminal device. The first information indicates a CSI-RS resource occupied by a channel state information reference signal CSI-RS. The CSI-RS resource occupied by the CSI-RS meets one or more of the following: the CSI-RS resource occupied by the CSI-RS includes a first CSI-RS resource, where a resource block RB set occupied by the first CSI-RS resource corresponds to a plurality of orthogonal codes; the CSI-RS resource occupied by the CSI-RS includes a second CSI-RS resource, where start time domain positions corresponding to an RB on which a CSI-RS in the second CSI-RS resource is located include a start time domain position in a first set and a start time domain position in a second set, the first set and the second set each include at least one start time domain position, and any start time domain position in the second set is different from a start time domain position in the first set; the CSI-RS resource occupied by the CSI-RS includes a plurality of CSI-RS resources; or the CSI-RS resource occupied by the CSI-RS includes a third CSI-RS resource, where different port sets of the third CSI-RS resource correspond to different RB sets. The network device sends the CSI-RS to the terminal device on the CSI-RS resource occupied by the CSI-RS. The network device receives channel state information CSI from the terminal device. The CSI is obtained by measuring the CSI-RS.

In a possible design solution, the first information includes the plurality of orthogonal codes corresponding to the RB set occupied by the first CSI-RS resource.

In a possible design solution, a quantity of start time domain positions in the first set and a quantity of start time domain positions in the second set each are related to one or more of the following: a quantity of ports of the CSI-RS in the second CSI-RS resource, a code division multiplexing CDM type of the CSI-RS in the second CSI-RS resource, or a quantity of start frequency domain positions of a CDM group corresponding to the RB on which the CSI-RS in the second CSI-RS resource is located.

In a possible design solution, the quantity of ports of the CSI-RS in the second CSI-RS resource is 48, the CDM type of the CSI-RS in the second CSI-RS resource is that two ports are multiplexed on two resource elements REs, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 48, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 48, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$, and the start time domain position in the second set includes a time domain unit $l_1$.

In a possible design solution, the quantity of ports of the CSI-RS in the second CSI-RS resource is 64, the CDM type of the CSI-RS in the second CSI-RS resource is that two ports are multiplexed on two REs, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a resource element $k_3$,

the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 64, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 64, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$, and the start time domain position in the second set includes a time domain unit $l_1$.

In a possible design solution, a CSI-RS frequency domain density of the third CSI-RS resource is less than or equal to a first density threshold. In this way, a same quantity of CSI-RS ports can occupy fewer frequency domain resources, so that CSI-RS pilot overheads are reduced.

Optionally, the first density threshold is 0.5.

Optionally, the first information further indicates that a same port of the third CSI-RS resource corresponds to different RBs in two adjacent CSI-RS measurements.

Further, on the third CSI-RS resource, an RB corresponding to a port $p$ in a $k^{th}$ CSI-RS measurement satisfies the following relationship: $P(k, p) = (P(0, p) + k)$ mod $N$. $p$ represents a port index, $k$ represents the $k^{th}$ measurement, $P(0, p)$ represents a start frequency domain index of the port $p$ in an initial CSI-RS measurement, $P(k, p)$ is a frequency domain index of the port $p$ in the $k^{th}$ CSI-RS measurement, $N$ represents a parameter determined based on the frequency domain density of the third CSI-RS resource, and $k$ is a positive integer greater than or equal to 1.

Further, the first information further indicates that the same port of the third CSI-RS resource corresponds to non-contiguous RBs in the two adjacent CSI-RS measurements.

Further, the first information further indicates a quantity of RBs between the RBs occupied by the same port of the third CSI-RS resource in the two adjacent CSI-RS measurements.

In a possible design solution, the first information includes one or more of the following of each CSI-RS resource in the CSI-RS resource occupied by the CSI-RS: a quantity of ports corresponding to an RB on which the CSI-RS resource is located, a CDM type of the CSI-RS in the CSI-RS resource, a start time domain position corresponding to an RB on which a CSI-RS in each CSI-RS resource is located, and a start frequency domain position of a CDM group corresponding to the RB on which the CSI-RS in each CSI-RS resource is located.

In addition, for technical effect of the channel measurement method according to the second aspect, refer to the technical effect of the channel measurement method according to the first aspect. Details are not described herein again.

According to a third aspect, a communication apparatus is provided. The communication apparatus is configured to perform the channel measurement method according to any one of the implementations of the first aspect and the second aspect.

In this application, the communication apparatus according to the third aspect may be the terminal device in the first aspect or the network device in the second aspect, a chip (system) or another part or component that may be disposed in the terminal device or the network device, or an apparatus including the terminal device or the network device.

It should be understood that the communication apparatus according to the third aspect includes a corresponding module, unit, or means (means) for implementing the channel measurement method according to either the first aspect or the second aspect. The module, unit, or means may be implemented by hardware, may be implemented by software, or may be implemented by hardware executing corresponding software. The hardware or the software includes one or more modules or units configured to perform functions related to the channel measurement method.

According to a fourth aspect, a communication apparatus is provided. The communication apparatus includes a processor, and the processor is configured to perform the channel measurement method according to any one of the possible implementations of the first aspect and the second aspect.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In a possible design solution, the communication apparatus according to the fourth aspect may further include a memory. The memory and the processor may be integrated together, or may be disposed separately. The memory may be configured to store a computer program and/or data related to the channel measurement method according to either the first aspect or the second aspect.

In this application, the communication apparatus according to the fourth aspect may be the terminal device in the first aspect or the network device in the second aspect, a chip (system) or another part or component that may be disposed in the terminal device or the network device, or an apparatus including the terminal device or the network device.

According to a fifth aspect, a communication apparatus is provided. The communication apparatus includes a processor. The processor is coupled to a memory, and the processor is configured to execute a computer program stored in the memory, to enable the communication apparatus to perform the channel measurement method according to any one of the possible implementations of the first aspect and the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this application, the communication apparatus according to the fifth aspect may be the terminal device in the first aspect or the network device in the second aspect, a chip (system) or another part or component that may be disposed in the terminal device or the network device, or an apparatus including the terminal device or the network device.

According to a sixth aspect, a communication apparatus is provided. The communication apparatus includes a processor and a memory. The memory is configured to store a computer program. When the processor executes the computer program, the communication apparatus is enabled to perform the channel measurement method according to any one of the implementations of the first aspect and the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this application, the communication apparatus according to the sixth aspect may be the terminal device in the first aspect or the network device in the second aspect, a chip (system) or another part or component that may be disposed in the terminal device or the network device, or an apparatus including the terminal device or the network device.

According to a seventh aspect, a communication apparatus is provided. The communication apparatus includes a processor. The processor is configured to: be coupled to a memory; and after reading a computer program in the memory, perform, based on the computer program, the channel measurement method according to any one of the implementations of the first aspect and the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be the terminal device in the first aspect or the network device in the second aspect, a chip (system) or another part or component that may be disposed in the terminal device or the network device, or an apparatus including the terminal device or the network device.

According to an eighth aspect, a processor is provided. The processor is configured to perform the channel measurement method according to any one of the possible implementations of the first aspect and the second aspect.

According to a ninth aspect, a communication system is provided. The communication system includes one or more terminal devices and one or more network devices.

According to a tenth aspect, a computer-readable storage medium is provided. The computer-readable storage medium includes a computer program or instructions. When the computer program or the instructions are run on a computer, the computer is enabled to perform the channel measurement method according to any one of the possible implementations of the first aspect and the second aspect.

According to an eleventh aspect, a computer program product is provided. The computer program product includes a computer program or instructions. When the computer program or the instructions are run on a computer, the computer is enabled to perform the channel measurement method according to any one of the possible implementations of the first aspect and the second aspect.

In addition, for technical effect of the communication apparatuses according to the third aspect to the eleventh aspect, refer to the technical effect of the channel measurement methods according to the first aspect and the second aspect. Details are not described herein again.

## BRIEF DESCRIPTION OF DRAWINGS

FIG. 1 is a schematic flowchart of channel measurement according to an embodiment of this application;

FIG. 2 is a diagram of a CSI-RS-occupied time-frequency resource corresponding to one port according to an embodiment of this application;

FIG. 3 is a diagram of CSI-RS-occupied time-frequency resources and a CSI-RS-occupied CDM group that correspond to two ports according to an embodiment of this application;

FIG. 4 is a diagram of CSI-RS-occupied time-frequency resources and CSI-RS-occupied CDM groups that correspond to four ports according to an embodiment of this application;

FIG. 5 is a diagram of CSI-RS-occupied time-frequency resources and CSI-RS-occupied CDM groups that correspond to eight ports according to an embodiment of this application;

FIG. 6 is a diagram of CSI-RS-occupied time-frequency resources and CSI-RS-occupied CDM groups that correspond to 12 ports according to an embodiment of this application;

FIG. 7 is a diagram of CSI-RS-occupied time-frequency resources and CSI-RS-occupied CDM groups that correspond to 16 ports according to an embodiment of this application;

FIG. 8 is a diagram of CSI-RS-occupied time-frequency resources and CSI-RS-occupied CDM groups that correspond to 24 ports according to an embodiment of this application;

FIG. 9 is a diagram of CSI-RS-occupied time-frequency resources and CSI-RS-occupied CDM groups that correspond to 32 ports according to an embodiment of this application;

FIG. 10 is a diagram of CSI-RS-occupied RBs at different frequency domain densities according to an embodiment of this application;

FIG. 11 is a diagram of an architecture of a communication system according to an embodiment of this application;

FIG. 12 is a schematic flowchart of a channel measurement method according to an embodiment of this application;

FIG. 13 is a diagram of correspondences between an RB-level OCC, ports, and resources according to an embodiment of this application;

FIG. 14 is a schematic flowchart of another channel measurement method according to an embodiment of this application;

FIG. 15 is a diagram of CSI-RS-occupied time-frequency resources and CSI-RS-occupied CDM groups that correspond to 48 ports according to an embodiment of this application;

FIG. 16 is a diagram of CSI-RS-occupied time-frequency resources and CSI-RS-occupied CDM groups that correspond to 64 ports according to an embodiment of this application;

FIG. 17 is a schematic flowchart of another channel measurement method according to an embodiment of this application;

FIG. 18 is another diagram of CSI-RS-occupied time-frequency resources and CSI-RS-occupied CDM groups that correspond to 48 ports according to an embodiment of this application;

FIG. 19 is a schematic flowchart of another channel measurement method according to an embodiment of this application;

FIG. 20 is another diagram of CSI-RS-occupied time-frequency resources and CSI-RS-occupied CDM groups that correspond to 48 ports according to an embodiment of this application;

FIG. 21 is a diagram of RBs occupied by ports according to an embodiment of this application;

FIG. 22 is another diagram of RBs occupied by ports according to an embodiment of this application;

FIG. 23 is a diagram of relationships between ports, RBs, and an OCC in a solution combining an RB-level OCC and combing according to an embodiment of this application;

FIG. 24 is a diagram of a relationship between ports and resources in a solution combining combing and newly added CSI-RS resources according to an embodiment of this application;

FIG. 25 is a diagram of a structure of a communication apparatus according to an embodiment of this application; and

FIG. 26 is a diagram of a structure of another communication apparatus according to an embodiment of this application.

## DESCRIPTION OF EMBODIMENTS

For ease of understanding embodiments of this application, the following first describes technical terms and technologies in embodiments of this application.

Time domain unit: One time domain unit may include at least one time domain symbol (symbol), for example, an orthogonal frequency division multiplexing (orthogonal frequency division multiplexing, OFDM) symbol. A time length of one time domain symbol differs at different subcarrier spacings (subcarrier spacings, SCSs). A larger subcarrier spacing indicates a shorter time length of the time domain symbol, and a smaller subcarrier spacing indicates a longer time length of the time domain symbol. For ease of understanding, in the following embodiments, an example in which one time domain unit includes one time domain symbol is used for description. It may be understood that the time domain unit may alternatively be obtained through division based on another possible time granularity. Details are not described herein. In addition, in embodiments of this application, a time domain unit $h$ is a time domain unit whose index is $h$ in a resource block (resource block, RB). $h$ is a positive integer.

Frequency domain unit: One frequency domain unit may include at least one subcarrier (subcarrier). It may be understood that the frequency domain unit may alternatively be obtained through division based on another possible frequency domain granularity. Details are not described herein. A frequency domain unit g is a frequency domain unit whose index is g in an RB. g is a positive integer.

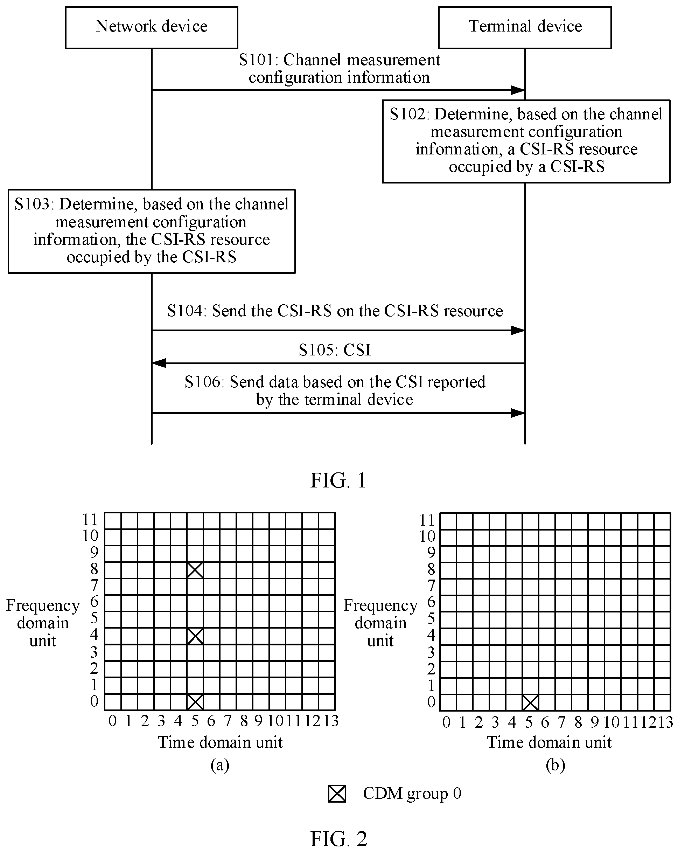

FIG. 1 is a flowchart of a channel measurement method according to an embodiment of this application. As shown in FIG. 1, the channel measurement method includes the following steps S101 to S106.

S101: A network device sends channel measurement configuration information to a terminal device.

The channel measurement configuration information indicates a configuration parameter for performing channel measurement, for example, a parameter for configuring a time domain resource and a frequency domain resource. For example, the channel measurement configuration information may indicate a resource used to carry a channel state information reference signal (channel state information reference signal, CSI-RS), that is, a CSI-RS resource.

The channel measurement configuration information may indicate the CSI-RS resource by using the following plurality of items: a quantity of ports of the CSI-RS in the CSI-RS resource, a frequency domain density of the CSI-RS resource, a code division multiplexing (code division multiplexing, CDM) type (type) of the CSI-RS in the CSI-RS resource, a start frequency domain position of a CDM group corresponding to an RB on which a CSI-RS in the CSI-RS resource is located, and a start time domain position corresponding to the RB on which the CSI-RS in the CSI-RS resource is located.

The frequency domain density of the CSI-RS resource may be a ratio of a quantity of resource elements (resource elements, REs) occupied by the CSI-RS resource in an RB set occupied by the CSI-RS resource, to a quantity of ports corresponding to the CSI-RS in the RB set, to a quantity of RBs in the RB set.

The frequency domain density of the CSI-RS resource may meet a relationship shown in the following formula (1):

$$\rho = r1/p1/r2 \tag{1}$$

$\rho$ represents the frequency domain density of the CSI-RS resource, r1 represents a quantity of CSI-RS-occupied REs in the RB set, p1 represents a quantity of ports corresponding to the CSI-RS-occupied REs in the RB set, and r2 represents the quantity of RBs in the RB set.

For example, if a quantity of RBs in an RB set occupied by the CSI-RS resource is 2, a quantity of CSI-RS-occupied REs in the RB set is 48, and a quantity of ports corresponding to the CSI-RS in the RB set is 24, the frequency domain density of the CSI-RS resource is 1. If a quantity of RBs in an RB set occupied by the CSI-RS resource is 2, a quantity of REs occupied by the CSI-RS in the RB set is 24, and a quantity of ports corresponding to the CSI-RS in the RB set is 24, the frequency domain density of the CSI-RS resource is 0.5.

Optionally, the CSI-RS resource may be a non-zero power channel state information (non-zero power channel state information reference signal, NZP CSI-RS) resource. This is merely used as an example herein. During actual implementation, the CSI-RS resource may alternatively be another possible resource, and details are not described herein.

S102: The terminal device determines, based on the channel measurement configuration information, the CSI-RS resource occupied by the CSI-RS.

In this embodiment of this application, at least one first combination may be preconfigured in the terminal device. Each first combination includes a quantity of ports of the CSI-RS in a CSI-RS resource, a frequency domain density of the CSI-RS resource, a CDM type of the CSI-RS in the CSI-RS resource, and a time-frequency position corresponding to an RB on which a CSI-RS in the CSI-RS resource is located. The time-frequency position corresponding to the RB on which the CSI-RS in the CSI-RS resource is located includes a time domain position corresponding to the RB on which the CSI-RS in the CSI-RS resource is located and a frequency domain position of a CDM group corresponding to the RB on which the CSI-RS in the CSI-RS resource is located. The time domain position corresponding to the RB on which the CSI-RS in the CSI-RS resource is located includes a start time domain position corresponding to the RB on which the CSI-RS in the CSI-RS resource is located, and the frequency domain position of the CDM group corresponding to the RB on which the CSI-RS in the CSI-RS resource is located includes a start frequency domain position of the CDM group corresponding to the RB on which the CSI-RS in the CSI-RS resource is located. The time domain position corresponding to the RB on which the CSI-RS in the CSI-RS resource is located may include time domain positions in two time domain position sets, and time domain positions in each time domain position set are consecutive. The start time domain position corresponding to the RB on which the CSI-RS in the CSI-RS resource is located is a start time domain position of each of the two time domain position sets. The two start time domain positions may also be referred to as a 1st start time domain position and a 2nd start time domain position. When a time unit includes one time domain symbol, the 1st start time domain position may also be referred to as a 1st start time domain symbol, and the 2nd start time domain position may also be referred to as a 2nd start time domain symbol.

Optionally, the first combination may further include one or more of the following: an index of at least one CDM group corresponding to the CSI-RS resource, an index of a frequency domain unit, in a CDM group, of a CSI-RS-occupied RE in the CSI-RS resource, an index of a time domain unit, in a CDM group, of the RE occupied by the CSI-RS resource, or a row index.

It may be understood that the index of the CDM group may also be referred to as an identifier of the CDM group or may have another possible name, the index of the frequency domain unit may also be referred to as an identifier of the frequency domain unit or may have another possible name, the index of the time domain unit may also be referred to as an identifier of the time domain unit or may have another possible name, and the row index may also be referred to as a row identifier or may have another possible name. Details are not described herein.

For an example of the first combination, refer to related descriptions in the following Table 1. Details are not described herein.

The terminal device may determine the CSI-RS resource based on the channel measurement configuration information and the first combination. For a specific implementation, refer to related descriptions in the following Table 1 to Table 13. Details are not described herein.

S103: The network device determines the CSI-RS resource occupied by the CSI-RS.

The at least one first combination may be preconfigured in the network device. The network device may first determine the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located. Then, the network device determines the CSI-RS resource based on the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, the start time domain position corresponding to the RB on which the CSI-RS in the CSI-RS resource is located, and the first combination.

For a specific implementation principle of S103, refer to related descriptions in S102. Details are not described herein again.

S104: The network device sends the CSI-RS to the terminal device on the CSI-RS resource. Correspondingly, the terminal device receives the CSI-RS from the network device on the CSI-RS resource.

In a communication system, for example, a new radio (new radio, NR) system, a network device sends a CSI-RS on a CSI-RS resource for a terminal device to detect a downlink channel, and the terminal device receives the CSI-RS on the preconfigured CSI-RS resource to perform channel estimation. In addition, the terminal device may further receive an interference measurement signal on a preconfigured interference measurement resource to perform interference measurement. The terminal device performs calculation based on measurement results on the CSI-RS resource and the interference measurement resource, to obtain a final channel state information (channel state information, CSI) report quantity. A process including the following steps may be referred to as a CSI calculation process: a process in which the terminal device measures the CSI-RS on the CSI-RS resource, measures the interference measurement signal on the interference measurement resource, and obtains the CSI report quantity. The CSI report quantity may include one or more of the following: a channel rank indicator (rank indicator, RI), a channel state indicator (channel quality indicator, CQI) (determined based on both a measurement result of the CSI-RS and an interference measurement result), and a precoding matrix indicator (precoding matrix indicator, PMI). The RI is used to determine a quantity of streams for data transmission from the network device to the terminal device. The CQI is used to determine a modulation order and a code rate of channel coding for data transmission from the network device to the terminal device. The PMI is used to determine precoding for data transmission from the network device to the terminal device.

S105: The terminal device reports CSI to the network device based on a measurement result of the CSI-RS.

It may be understood that the CSI includes a CSI report quantity. Therefore, the CSI includes information in the CSI report quantity.

In addition, the method provided in FIG. 1 may further include S106.

S106: The network device sends data based on the CSI reported by the terminal device.

It may be understood that, in the method provided in FIG. 1, an execution sequence of S101, S102, and S103 is not limited. For example, S103 may be performed before S101, or S102 may be performed after S103. Details are not described herein.

For an implementation principle of the first combination, refer to Table 1. After receiving the channel measurement configuration information from the network device, the terminal device may determine, in the first combination based on the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located, a time-frequency position occupied by the CSI-RS resource, that is, determine the CSI-RS resource, in other words, perform time-frequency resource mapping. It should be understood that a quantity of ports of the CSI-RS in a CSI-RS resource is a quantity of ports corresponding to an RB occupied by the CSI-RS, a CDM type of the CSI-RS in the CSI-RS resource is a CDM type corresponding to each RB occupied by the CSI-RS resource, a start frequency domain position of a CDM group corresponding to an RB on which a CSI-RS in the CSI-RS resource is located is a start frequency domain position of a CDM of the CSI-RS resource in each occupied RB, and a start time domain position corresponding to the RB on which the CSI-RS in the CSI-RS resource is located is a start time domain position of the CSI-RS resource in each occupied RB. The start frequency domain position of the CDM group corresponding to the RB on which the CSI-RS in the CSI-RS resource is located may be a start frequency domain unit of the CDM group, and the start time domain position corresponding to the RB on which the CSI-RS in the CSI-RS resource is located may be a time domain unit corresponding to the RB on which the CSI-RS in the CSI-RS resource is located. The CSI-RS resource may include a time domain resource and a frequency domain resource. The time domain resource may be expressed in a time domain unit, and the frequency domain resource may be expressed in a frequency domain unit. In the following embodiments, an example in which the time domain resource is expressed in a time domain unit and the frequency domain resource is expressed in a frequency domain unit is used for description. Details are not described below again.

Table 1

| Row index | $X$ | $\rho$ | CDM type of the CSI-RS in a CSI-RS resource | $(\bar{k}, \bar{l})$ | CDM group index $j$ | $k'$ | $l'$ |
|---|---|---|---|---|---|---|---|
| 1 | 1 | 3 | noCDM | $(k_0, l_0)$, $(k_0+4, l_0)$, $(k_0+8, l_0)$ | 0, 0, 0 | 0 | 0 |
| 2 | 1 | 1, 0.5 | noCDM | $(k_0, l_0)$ | 0 | 0 | 0 |
| 3 | 2 | 1, 0.5 | fd-CDM2 | $(k_0, l_0)$ | 0 | 0, 1 | 0 |
| 4 | 4 | 1 | fd-CDM2 | $(k_0, l_0)$, $(k_0+2, l_0)$ | 0, 1 | 0, 1 | 0 |
| 5 | 4 | 1 | fd-CDM2 | $(k_0, l_0)$, $(k_0, l_0+1)$ | 0, 1 | 0, 1 | 0 |
| 6 | 8 | 1 | fd-CDM2 | $(k_0, l_0)$, $(k_1, l_0)$, $(k_2, l_0)$, $(k_3, l_0)$ | 0, 1, 2, 3 | 0, 1 | 0 |
| 7 | 8 | 1 | fd-CDM2 | $(k_0, l_0)$, $(k_1, l_0)$, $(k_0, l_0+1)$, $(k_1, l_0+1)$ | 0, 1, 2, 3 | 0, 1 | 0 |
| 8 | 8 | 1 | cdm4-FD2-TD2 | $(k_0, l_0)$, $(k_1, l_0)$ | 0, 1 | 0, 1 | 0, 1 |
| 9 | 12 | 1 | fd-CDM2 | $(k_0, l_0)$, $(k_1, l_0)$, $(k_2, l_0)$, $(k_3, l_0)$, $(k_4, l_0)$, $(k_5, l_0)$ | 0, 1, 2, 3, 4, 5 | 0, 1 | 0 |
| 10 | 12 | 1 | cdm4-FD2-TD2 | $(k_0, l_0)$, $(k_1, l_0)$, $(k_2, l_0)$ | 0, 1, 2 | 0, 1 | 0, 1 |
| 11 | 16 | 1, 0.5 | fd-CDM2 | $(k_0, l_0)$, $(k_1, l_0)$, $(k_2, l_0)$, $(k_3, l_0)$, $(k_0, l_0+1)$, $(k_1, l_0+1)$, $(k_2, l_0+1)$, $(k_3, l_0+1)$ | 0, 1, 2, 3, 4, 5, 6, 7 | 0, 1 | 0 |
| 12 | 16 | 1, 0.5 | cdm4-FD2-TD2 | $(k_0, l_0)$, $(k_1, l_0)$, $(k_2, l_0)$, $(k_3,$ | 0, 1, 2, 3 | 0, 1 | 0, 1 |
| 13 | 24 | 1, 0.5 | fd-CDM2 | $(k_0, l_0)$, $(k_1, l_0)$, $(k_2, l_0)$, $(k_0, l_0+1)$, $(k_1, l_0+1)$, $(k_2, l_0+1)$, $(k_0, l_1)$, $(k_1, l_1)$, $(k_2, l_1)$, $(k_0, l_1+1)$, $(k_1, l_1+1)$, $(k_2, l_1+1)$ | 0, 1, 2, 3, 4, 5, 6, 7, 8, 9, 10, 11 | 0, 1 | 0 |
| 14 | 24 | 1, 0.5 | cdm4-FD2-TD2 | $(k_0, l_0)$, $(k_1, l_0)$, $(k_2, l_0)$, $(k_0, l_1)$, $(k_1, l_1)$, $(k_2, l_1)$ | 0, 1, 2, 3, 4, 5 | 0, 1 | 0, 1 |
| 15 | 24 | 1, 0.5 | cdm8-FD2-TD4 | $(k_0, l_0)$, $(k_1, l_0)$, $(k_2, l_0)$ | 0, 1, 2 | 0, 1 | 0, 1, 2, 3 |
| 16 | 32 | 1, 0.5 | fd-CDM2 | $(k_0, l_0)$, $(k_1, l_0)$, $(k_2, l_0)$, $(k_3, l_0)$, $(k_0, l_0+1)$, $(k_1, l_0+1)$, $(k_2, l_0+1)$, $(k_3, l_0+1)$, $(k_0, l_1)$, $(k_1, l_1)$, $(k_2, l_1)$, $(k_3, l_1)$, $(k_0, l_1+1)$, $(k_1, l_1+1)$, $(k_2, l_1+1)$, $(k_3, l_1+1)$ | 0, 1, 2, 3, 4, 5, 6, 7, 8, 9, 10, 11, 12, 13, 14, 15 | 0, 1 | 0 |
| 17 | 32 | 1, 0.5 | cdm4-FD2-TD2 | $(k_0, l_0)$, $(k_1, l_0)$, $(k_2, l_0)$, $(k_3, l_0)$, $(k_0, l_1)$, $(k_1, l_1)$, $(k_2, l_1)$, $(k_3, l_1)$ | 0, 1, 2, 3, 4, 5, 6, 7 | 0, 1 | 0, 1 |
| 18 | 32 | 1, 0.5 | cdm8-FD2-TD4 | $(k_0, l_0)$, $(k_1, l_0)$, $(k_2, l_0)$, $(k_3,$ | 0, 1, 2, 3 | 0, 1 | 0, 1, 2, 3 |

In the foregoing Table 1, $X$ represents a quantity of ports of the CSI-RS in a CSI-RS resource, $\rho$ represents a frequency domain density of the CSI-RS resource, $(\bar{k}, \bar{l})$ represents a start time-frequency resource position of a CDM group in an RB, $\bar{k}$ represents a start time domain position, for example, a start frequency domain unit, corresponding to an RB on which a CSI-RS in the CSI-RS resource is located, and $\bar{l}$ represents a start time domain position, for example, a start time domain unit, corresponding to the RB on which the CSI-RS in the CSI-RS resource is located. $j$ represents a CDM group index, $k'$ represents an index of a frequency domain unit, in a CDM group, of a CSI-RS-occupied RE in the CSI-RS resource, and $l'$ represents an index of a time domain unit, in a CDM group, of the RE occupied by the CSI-RS resource. $k_0$, $k_1, k_2, k_3, k_4$, and $k_5$ are indexes of frequency domain units. $l_0$ and $l_1$ are indexes of time domain units. $k_0, k_1, k_2, k_3, k_4, l_0$, and $l_1$ are constants.

It may be understood that, in this embodiment of this application, a frequency domain unit may be represented by an index of the frequency domain unit, that is, a frequency domain index; and a time domain unit may be represented by an index of the time domain unit, that is, a time domain index. Alternatively, the frequency domain index may be other information that may be used to identify the frequency domain unit, and the time domain index may be other information that may be used to identify the time domain unit. This is not limited in this embodiment of this application.

In addition, in Table 1, the row indexes are merely used as an example. During actual implementation, row indexes of different rows may be exchanged, or a start value of the row indexes may be 2 or another index value. Details are not described herein.

It may be understood that an index of the CSI-RS port in the CSI-RS resource may be determined based on the following formula (2) to formula (4):

$$p = 3000 + s + jL \qquad (2)$$

$$j = 0,1, \dots, N/L - 1 \qquad (3)$$

$$s = 0,1, \dots, L - 1 \qquad (4)$$

$p$ represents the index of the CSI-RS port in the CSI-RS resource, $j$ represents an index of a CDM group, $s$ represents an index of an orthogonal cover code (orthogonal cover code, OCC) sequence in the CDM group, and $N$ represents a total quantity of ports of the CSI-RS in the CSI-RS resource. $L$ represents a size of the CDM group, that is, a quantity of CDM groups corresponding to the CSI-RS port in the CSI-RS resource.

In the following embodiments, the CSI-RS port in the CSI-RS resource is referred to as a port for short, and details are not described below again.

In the CDM type of the CSI-RS in the CSI-RS resource, noCDM indicates that there is no port multiplexing, and one RE occupies only one port. A correspondence between an index of a port in a CDM group, a frequency domain OCC sequence $w_f(0)$, and a time domain OCC sequence $w_t(0)$ is shown in the following Table 2.

Table 2

| Index of a port in a CDM group | $w_f(0)$ | $w_t(0)$ |
|---|---|---|
| 0 | 1 | 1 |

In the CDM type of the CSI-RS in the CSI-RS resource, fd-CDM2 indicates that two ports are multiplexed on two REs, and port orthogonality is implemented for fd-CDM2 by using a frequency domain OCC whose length is 2. In this case, one CDM may be used to distinguish between two ports. A correspondence between an index of a port in a CDM group, a frequency domain OCC sequence $[w_f(0), w_f(1)]$, and a time domain OCC sequence $w_t(0)$ is shown in the following Table 3.

Table 3

| Index of a port in a CDM group | $[w_f(0), w_f(1)]$ | $w_t(0)$ |
|---|---|---|
| 0 | [+1, +1] | 1 |
| 1 | [+1, -1] | 1 |

In the CDM type of the CSI-RS in the CSI-RS resource, cdm4-FD2-TD2 indicates that four ports are multiplexed on a total of four REs corresponding to two frequency domain units and two time domain units, and port orthogonality is implemented for cdm4-FD2-TD2 by using a frequency domain OCC whose length is 2 and a time domain OCC whose length is 2. In this case, one CDM may be used to distinguish between four ports. A correspondence between an index of a port in a CDM group, a frequency domain OCC sequence $[w_f(0), w_f(1)]$, and a time domain OCC sequence $[w_t(0), w_t(1)]$ is shown in the following Table 4.

Table 4

| Index of a port in a CDM group | $[w_f(0), w_f(1)]$ | $[w_t(0), w_t(1)]$ |
|---|---|---|
| 0 | [+1, +1] | [+1, +1] |
| 1 | [+1, -1] | [+1, +1] |
| 2 | [+1, +1] | [+1, -1] |
| 3 | [+1, -1] | [+1, -1 ] |

In the CDM type of the CSI-RS in the CSI-RS resource, cdm8-FD2-TD4 indicates that eight ports are multiplexed on a total of eight REs corresponding to two frequency domain units and four time domain units, and port orthogonality is implemented for cdm8-FD2-TD4 by using a frequency domain OCC whose length is 2 and a time domain OCC whose length is 4. In this case, one CDM may be used to distinguish between eight ports. A correspondence between an index of a port in a CDM group, a sequence $[w_f(0), w_f(1)]$ corresponding to the frequency domain, and a sequence $[w_t(0), w_t(1), w_t(2), w_t(3)]$ corresponding to the time domain is shown in the following Table 5.

Table 5

| Index of a port in a CDM group | $[w_f(0), w_f(1)]$ | $[w_t(0), w_t(1), w_t(2), w_t(3)]$ |
|---|---|---|
| 0 | [+1, +1] | [+1, +1, +1, +1] |
| 1 | [+1, -1] | [+1, +1, +1, +1] |
| 2 | [+1, +1] | [+1, -1, +1, -1] |
| 3 | [+1, -1] | [+1, -1, +1, -1] |
| 4 | [+1, +1] | [+1, +1, -1, -1] |
| 5 | [+1, -1] | [+1, +1, -1, -1] |
| 6 | [+1, +1] | [+1, -1, -1, +1] |
| 7 | [+1, -1] | [+1, -1, -1, +1] |

For ease of understanding, the following describes, with reference to the quantity of ports of the CSI-RS in the CSI-RS resource and the channel measurement configuration information by using examples, how the terminal device determines the time-frequency resource of the CSI-RS resource, that is, performs resource mapping. In the following examples, it is assumed that $k_0=0$, $k_1=2$, $k_2=4$, $k_3=6$, $k_4=8$, $k_5=10$, $l_0=5$, and $l_1=9$ in Table 1. It may be understood that $k_0$, $k_1$, $k_2$, $k_3$, $k_4$, $k_5$, $l_0$, and $l_1$ in Table 1 may alternatively be other values. This is merely an example herein, and details are not described again.

(1) The quantity of ports of the CSI-RS in the CSI-RS resource is 1. It is assumed that the CDM group corresponding to the CSI-RS-occupied RB in the CSI-RS resources includes a CDM group 0, and $X$, $\rho$, the CDM type of the CSI-RS in the CSI-RS resource, the start frequency domain position of the CDM group corresponding to the RB on which the CSI-RS in the CSI-RS resource is located, and the start time domain position of the CDM group that are indicated by the channel measurement configuration information are shown in a case 1-1 or a case 1-2 in the following Table 6.

Table 6

| Case | $X$ | $\rho$ | CDM type of the CSI-RS in the CSI-RS resource | Start frequency domain position of the CDM group corresponding to the RB on which the CSI-RS in the CSI-RS resource is located | Start time domain position corresponding to the RB on which the CSI-RS in the CSI-RS resource is located |
|---|---|---|---|---|---|
| Case 1-1 | 1 | 3 | noCDM2 | 0 | 5 |
| Case 1-2 | 1 | 1, 0.5 | noCDM2 | 0 | 5 |

In the case 1-1, the terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 1-1, that the case 1-1 corresponds to the 1st row in Table 1; and determines, based on the start frequency domain position of the CDM group corresponding to the RB on which the CSI-RS in the CSI-RS resource is located in the case 1-1, the start time domain position corresponding to the RB on which the CSI-RS in the CSI-RS resource is located in the case 1-1, and the 1st row in Table 1, that REs occupied by the CSI-RS resource in an RB include REs occupied by the CDM group 0, that is, REs corresponding to a time domain unit 5, a frequency domain unit 0, a frequency domain unit 4, and a frequency domain unit 8. In this case, a correspondence between the REs occupied by the CSI-RS resource and the CDM group 0 is shown in (a) in FIG. 2.

In the case 1-2, the terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 1-2, that the case 1-2 corresponds to the 2nd row in Table 1; and determines, based on the start frequency domain position of the CDM group corresponding to the RB on which the CSI-RS in the CSI-RS resource is located in the case 1-2, the start time domain position corresponding to the RB on which the CSI-RS in the CSI-RS resource is located in the case 1-2, and the 2nd row in Table 1, that an RE occupied by the CSI-RS resource in an RB includes an RE occupied by the CDM group 0, that is, an RE corresponding to a time domain unit 0 and a frequency domain unit 5. In this case, a correspondence between a time-frequency resource occupied by the CSI-RS resource and the CDM group 0 in the case 1-2 is shown in (b) in FIG. 2.

It may be understood that, in this embodiment of this application, a CDM group u represents a CDM group whose index is u. Details are not described below again. u is an integer greater than or equal to 0.

(2) The quantity of ports of the CSI-RS in the CSI-RS resource is 2.

It is assumed that the CDM group corresponding to the CSI-RS-occupied RB in the CSI-RS resources includes a CDM group 0, and $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located that are indicated by the channel measurement configuration information are shown in the following Table 7.

Table 7

| $X$ | $\rho$ | CDM type of the CSI-RS in the CSI-RS resource | Start frequency domain position of the CDM group corresponding to the RB on which the CSI-RS in the CSI-RS resource is located | Start time domain position corresponding to the RB on which the CSI-RS in the CSI-RS resource is located |
|---|---|---|---|---|
| 2 | 1, 0.5 | fd-CDM2 | 0 | 5 |

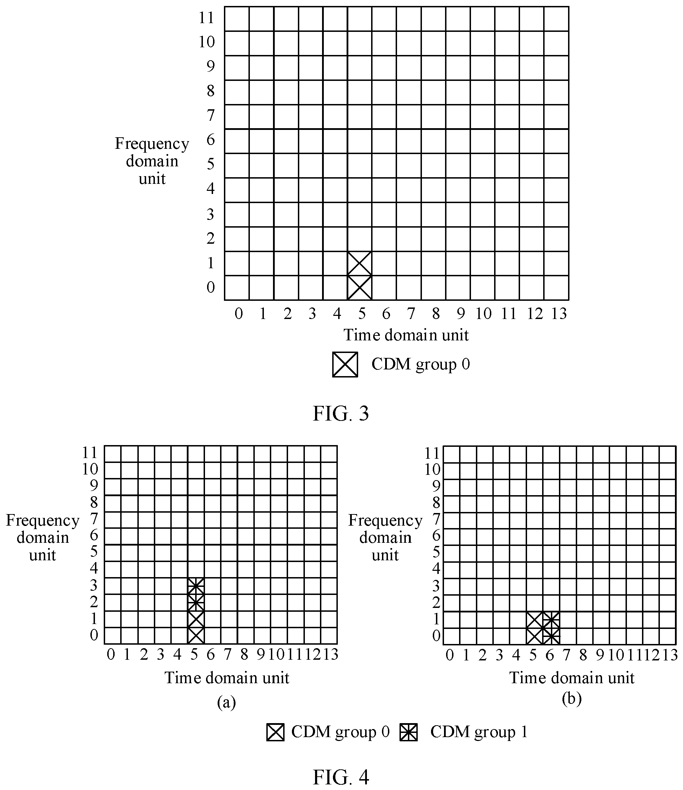

The terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in Table 7, that Table 7 corresponds to the 3rd row in Table 1; and determines, based on the start frequency domain position of the CDM group corresponding to the RB on which the CSI-RS in the CSI-RS resource is located in Table 7, the start time domain position corresponding to the RB on which the CSI-RS in the CSI-RS resource is located in Table 7, and the 3rd row in Table 1, that REs occupied by the CSI-RS resource in an RB include REs occupied by the CDM group 0, that is, REs corresponding to a time domain unit 5, a frequency domain unit 0, and a frequency domain unit 1. In this case, a correspondence between the REs occupied by the CSI-RS resource and the CDM group 0 is shown in FIG. 3.

(3) The quantity of ports of the CSI-RS in the CSI-RS resource is 4.

It is assumed that $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located that are indicated by the channel measurement configuration information are shown in a case 3-1 or a case 3-2 in the following Table 8.

Table 8

| Case | $X$ | $\rho$ | CDM type of the CSI-RS in the CSI-RS resource | Start frequency domain position of the CDM group corresponding to the RB on which the CSI-RS in the CSI-RS resource is located | Start time domain position corresponding to the RB on which the CSI-RS in the CSI-RS resource is located |
|---|---|---|---|---|---|
| Case 3-1 | 4 | 1 | fd-CDM2 | 0, 2 | 5 |
| Case 3-2 | 4 | 1 | fd-CDM2 | 0 | 5 |

In the case 3-1, CDM groups corresponding to the CSI-RS-occupied RB in the CSI-RS resource include a CDM group 0 and a CDM group 1. The terminal device determines, based on $X$, $\rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 3-1, that the case 3-1 corresponds to the 4th row in Table 1; and determines, based on the start frequency domain position of the CDM group corresponding to the RB on which the CSI-RS in the CSI-RS resource is located in the case 3-1, the start time domain position corresponding to the RB on which the CSI-RS in the CSI-RS resource is located in the case 3-1, and the 4th row in Table 1, that REs occupied by the CSI-RS resource in an RB include REs occupied by the CDM group 0 and REs occupied by the CDM group 1. In this case, the REs occupied by the CDM group 0 include REs corresponding to a frequency domain unit 0, a frequency domain unit 1, and a time domain unit 5; and the REs occupied by the CDM group 1 include REs corresponding to a frequency domain unit 2, a frequency domain unit 3, and the time domain unit 5. For a correspondence between time-frequency resources occupied by the CSI-RS resource and the CDM groups in the case 3-1, refer to (a) in FIG. 4.

In the case 3-2, CDM groups corresponding to the CSI-RS-occupied RB in the CSI-RS resource include a CDM group 0 and a CDM group 1. The terminal device determines, based on $X$, $\rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 3-2, that the case 3-2 corresponds to the 5th row in Table 1; and determines, based on the start frequency domain position of the CDM group corresponding to the RB on which the CSI-RS in the CSI-RS resource is located in the case 3-2, the start time domain position corresponding to the RB on which the CSI-RS in the CSI-RS resource is located in the case 3-2, and the 5th row in Table 1, that REs occupied by the CSI-RS resource in an RB include REs occupied by the CDM group 0 and REs occupied by the CDM group 1. In this case, the REs occupied by the CDM group 0 include REs corresponding to a frequency domain unit 0, a frequency domain unit 1, and a time domain unit 5; and the REs occupied by the CDM group 1 include REs corresponding to the frequency domain unit 0, the frequency domain unit 1, and a time domain unit 6. REs corresponding to the time domain unit 5, the time domain unit 6, the frequency domain unit 0, and the frequency domain unit 1 are included. In this case, for a correspondence between time-frequency resources occupied by the CSI-RS resource and the CDM groups in the case 3-2, refer to (b) in FIG. 4.

(4) The quantity of ports of the CSI-RS in the CSI-RS resource is 8.

It is assumed that $X$, $\rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located that are indicated by the channel measurement configuration information are shown in any row of a case 4-1 to a case 4-3 in the following Table 9.

Table 9

| Case | $X$ | $\rho$ | CDM Type | Start frequency domain position of the CDM group corresponding to the RB on which the CSI-RS in the CSI-RS resource is located | Start time domain position corresponding to the RB on which the CSI-RS in the CSI-RS resource is located |
|---|---|---|---|---|---|
| Case 4-1 | 8 | 1 | fd-CDM2 | 0, 2, 4, 6 | 5 |
| Case 4-2 | 8 | 1 | fd-CDM2 | 0, 2 | 5 |
| Case 4-3 | 8 | 1 | cdm4-FD2-TD2 | 0, 2 | 5 |

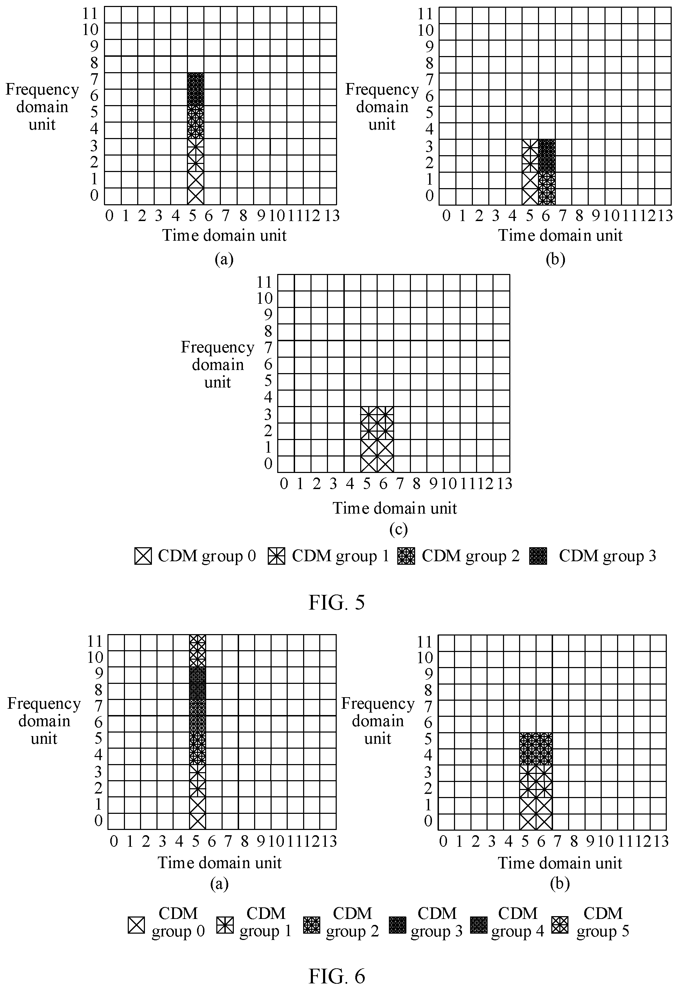

In the case 4-1, CDM groups corresponding to the CSI-RS-occupied RB in the CSI-RS resource include a CDM group 0 to a CDM group 3. The terminal device determines, based on $X$, $\rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 4-1, that the case 4-1 corresponds to the 6th row in Table 1; and determines, based on the start frequency domain position of the CDM group corresponding to the RB on which the CSI-RS in the CSI-RS resource is located in the case 4-1, the start time domain position corresponding to the RB on which the CSI-RS in the CSI-RS resource is located in the case 4-1, and the 6th row in Table 1, that REs occupied by the CSI-RS resource in an RB include REs occupied by each of the CDM group 0 to the CDM group 3. In this case, REs occupied by the CDM group 0 include REs corresponding to a frequency domain unit 0, a frequency domain unit 1, and a time domain unit 5; REs occupied by a CDM group 1 include REs corresponding to a frequency domain unit 2, a frequency domain unit 3, and the time domain unit 5; REs occupied by a CDM group 2 include REs corresponding to a frequency domain unit 4, a frequency domain unit 5, and the time domain unit 5; and REs occupied by the CDM group 3 include REs corresponding to a frequency domain unit 6, a frequency domain unit 7, and the time domain unit 5. For a correspondence between time-frequency resources occupied by the CSI-RS resource and the CDM groups in the case 4-1, refer to (a) in FIG. 5.

In the case 4-2, CDM groups corresponding to the CSI-RS-occupied RB in the CSI-RS resource include a CDM group 0 to a CDM group 3. The terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 4-2, that the case 4-2 corresponds to the 7th row in Table 1; and determines, based on the start frequency domain position of the CDM group corresponding to the RB on which the CSI-RS in the CSI-RS resource is located in the case 4-2, the start time domain position corresponding to the RB on which the CSI-RS in the CSI-RS resource is located in the case 4-2, and the 7th row in Table 1, that REs occupied by the CSI-RS resource in an RB include REs occupied by each of the CDM group 0 to the CDM group 3. In this case, REs occupied by the CDM group 0 include REs corresponding to a frequency domain unit 0, a frequency domain unit 1, and a time domain unit 5; REs occupied by a CDM group 1 include REs corresponding to a frequency domain unit 2, a frequency domain unit 3, and the time domain unit 5; REs occupied by a CDM group 2 include REs corresponding to the frequency domain unit 0, the frequency domain unit 1, and a time domain unit 6; and REs occupied by the CDM group 3 include REs corresponding to the frequency domain unit 2, the frequency domain unit 3, and the time domain unit 6. For a correspondence between time-frequency resources occupied by the CSI-RS resource and the CDM groups in the case 4-2, refer to (b) in FIG. 5.

In the case 4-3, CDM groups corresponding to the CSI-RS-occupied RB in the CSI-RS resource include a CDM group 0 and a CDM group 1. The terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 4-3, that the case 4-3 corresponds to the 8th row in Table 1; and determines, based on the start frequency domain position of the CDM group corresponding to the RB on which the CSI-RS in the CSI-RS resource is located in the case 4-3, the start time domain position corresponding to the RB on which the CSI-RS in the CSI-RS resource is located in the case 4-3, and the 8th row in Table 1, that REs occupied by the CSI-RS resource in an RB include REs occupied by the CDM group 0 and REs occupied by the CDM group 1. In this case, the REs occupied by the CDM group 0 include REs corresponding to a frequency domain unit 0, a frequency domain unit 1, a time domain unit 5, and a time domain unit 6; and the REs occupied by the CDM group 1 include REs corresponding to a frequency domain unit 2, a frequency domain unit 3, the time domain unit 5, and the time domain unit 6. For a correspondence between time-frequency resources occupied by the CSI-RS resource and the CDM groups in the case 4-3, refer to (c) in FIG. 5.

(5) The quantity of ports of the CSI-RS in the CSI-RS resource is 12.

It is assumed that $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located that are indicated by the channel measurement configuration information are shown in a case 5-1 or a case 5-2 in the following Table 10.

Table 10

| Case | $X$ | $\rho$ | CDM type of the CSI-RS in the CSI-RS resource | Start frequency domain position of the CDM group corresponding to the RB on which the CSI-RS in the CSI-RS resource is located | Start time domain position corresponding to the RB on which the CSI-RS in the CSI-RS resource is located |
|---|---|---|---|---|---|
| Case 5-1 | 12 | 1 | fd-CDM2 | 0, 2, 4, 6, 8, 10 | 5 |
| Case 5-2 | 12 | 1 | cdm4-FD2-TD2 | 0, 2, 4 | 5 |

In the case 5-1, CDM groups corresponding to the CSI-RS-occupied RB in the CSI-RS resource include a CDM group 0 to a CDM group 5. The terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 5-1, that the case 5-1 corresponds to the 9th row in Table 1; and determines, based on the start frequency domain position of the CDM group corresponding to the RB on which the CSI-RS in the CSI-RS resource is located in the case 5-1, the start time domain position corresponding to the RB on which the CSI-RS in the CSI-RS resource is located in the case 5-1, and the 9th row in Table 1, that REs occupied by the CSI-RS resource in an RB include REs occupied by each of the CDM group 0 to the CDM group 5. In this case, REs occupied by the CDM group 0 include REs corresponding to a frequency domain unit 0, a frequency domain unit 1, and a time domain unit 5; REs occupied by a CDM group 1 include REs corresponding to a frequency domain unit 2, a frequency domain unit 3, and the time domain unit 5; REs occupied by a CDM group 2 include REs corresponding to a frequency domain unit 4, a frequency domain unit 5, and the time domain unit 5; REs occupied by a CDM group 3 include REs corresponding to a frequency domain unit 6, a frequency domain unit 7, and the time domain unit 5; REs occupied by a CDM group 4 include REs corresponding to a frequency domain unit 8, a frequency domain unit 9, and the time domain unit 5; and REs occupied by the CDM group 5 include REs corresponding to a frequency domain unit 10, a frequency domain unit 11, and the time domain unit 5. For a correspondence between time-frequency resources occupied by the CSI-RS resource and the CDM groups in the case 5-1, refer to (a) in FIG. 6.

In the case 5-2, CDM groups corresponding to the CSI-RS-occupied RB in the CSI-RS resource include a CDM group 0 to a CDM group 2. The terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 5-2, that the case 5-2 corresponds to the 10th row in Table 1; and determines, based on the start frequency domain position of the CDM group corresponding to the RB on which the CSI-RS in the CSI-RS resource is located in the case 5-2, the start time domain position corresponding to the RB on which the CSI-RS in the CSI-RS resource is located in the case 5-2, and the 10th row in Table 1, that REs occupied by the CSI-RS resource in an RB include REs occupied by each of the CDM group 0 to the CDM group 3. In this case, REs occupied by the CDM group 0 include REs corresponding to a frequency domain unit 0, a frequency domain unit 1, a time domain unit 5, and a time domain unit 6; REs occupied by a CDM group 1 include REs corresponding to a frequency domain unit 2, a frequency domain unit 3, the time domain unit 5, and the time domain unit 6; and REs occupied by the CDM group 2 include REs corresponding to a frequency domain unit 4, a frequency domain unit 5, the time domain unit 5, and the time domain unit 6. For a correspondence between time-frequency resources occupied by the CSI-RS resource and the CDM groups in the case 5-2, refer to (b) in FIG. 6.

(6) The quantity of ports of the CSI-RS in the CSI-RS resource is 16.

It is assumed that $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located that are indicated by the channel measurement configuration information are shown in a case 6-1 or a case 6-2 in the following Table 11.

Table 11

| Case | $X$ | $\rho$ | CDM type of the CSI-RS in the CSI-RS resource | Start frequency domain position of the CDM group corresponding to the RB on which the CSI-RS in the CSI-RS resource is located | Start time domain position corresponding to the RB on which the CSI-RS in the CSI-RS resource is located |
|---|---|---|---|---|---|
| Case 6-1 | 16 | 1, 0.5 | fd-CDM2 | 0, 2, 4, 6 | 5 |
| Case 6-2 | 16 | 1, 0.5 | cdm4-FD2-TD2 | 0, 2, 4, 6 | 5 |

In the case 6-1, CDM groups corresponding to the CSI-RS-occupied RB in the CSI-RS resource include a CDM group 0 to a CDM group 7. The terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 6-1, that the case 6-1 corresponds to the 11th row in Table 1; and determines, based on the start frequency domain position of the CDM group corresponding to the RB on which the CSI-RS in the CSI-RS resource is located in the case 6-1, the start time domain position corresponding to the RB on which the CSI-RS in the CSI-RS resource is located in the case 6-1, and the 11th row in Table 1, that REs occupied by the CSI-RS resource in an RB include REs occupied by each of the CDM group 0 to the CDM group 7. In this case, REs occupied by the CDM group 0 include REs corresponding to a frequency domain unit 0, a frequency domain unit 1, and a time domain unit 5; REs occupied by a CDM group 1 include REs corresponding to a frequency domain unit 2, a frequency domain unit 3, and the time domain unit 5;

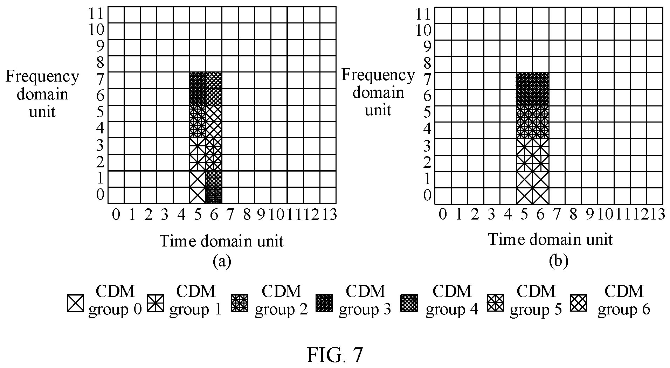

REs occupied by a CDM group 2 include REs corresponding to a frequency domain unit 4, a frequency domain unit 5, and the time domain unit 5; REs occupied by a CDM group 3 include REs corresponding to a frequency domain unit 6, a frequency domain unit 7, and the time domain unit 5; REs occupied by a CDM group 4 include REs corresponding to the frequency domain unit 0, the frequency domain unit 1, and a time domain unit 6; REs occupied by a CDM group 5 include REs corresponding to the frequency domain unit 2, the frequency domain unit 3, and the time domain unit 6; REs occupied by a CDM group 6 include REs corresponding to the frequency domain unit 4, the frequency domain unit 5, and the time domain unit 6; and REs occupied by the CDM group 7 include REs corresponding to the frequency domain unit 6, the frequency domain unit 7, and the time domain unit 6. A correspondence between time-frequency resources occupied by the CSI-RS resource and the CDM groups in the case 6-1 is shown in (a) in FIG. 7.

In the case 6-2, CDM groups corresponding to the CSI-RS-occupied RB in the CSI-RS resource include a CDM group 0 to a CDM group 3. The terminal device determines, based on $X$, $\rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 6-2, that the case 6-2 corresponds to the 12th row in Table 1; and determines, based on the start frequency domain position of the CDM group corresponding to the RB on which the CSI-RS in the CSI-RS resource is located in the case 6-2, the start time domain position corresponding to the RB on which the CSI-RS in the CSI-RS resource is located in the case 6-2, and the 12th row in Table 1, that REs occupied by the CSI-RS resource in an RB include REs occupied by each of the CDM group 0 to the CDM group 3. In this case, REs occupied by the CDM group 0 include REs corresponding to a frequency domain unit 0, a frequency domain unit 1, a time domain unit 5, and a time domain unit 6; REs occupied by a CDM group 1 include REs corresponding to a frequency domain unit 2, a frequency domain unit 3, the time domain unit 5, and the time domain unit 6; REs occupied by a CDM group 2 include REs corresponding to a frequency domain unit 4, a frequency domain unit 5, the time domain unit 5, and the time domain unit 6; and REs occupied by the CDM group 3 include REs corresponding to a frequency domain unit 6, a frequency domain unit 7, the time domain unit 5, and the time domain unit 6. A correspondence between time-frequency resources occupied by the CSI-RS resource and the CDM groups in the case 6-2 is shown in (b) in FIG. 7.

(7) The quantity of ports of the CSI-RS in the CSI-RS resource is 24.

It is assumed that $X$, $\rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located that are indicated by the channel measurement configuration information are shown in any row of a case 7-1 to a case 7-3 in the following Table 12.

Table 12

| Case | $X$ | $\rho$ | CDM type of the CSI-RS in the CSI-RS resource | Start frequency domain position of the CDM group corresponding to the RB on which the CSI-RS in the CSI-RS resource is located | Start time domain position corresponding to the RB on which the CSI-RS in the CSI-RS resource is located |
|---|---|---|---|---|---|
| Case 7-1 | 24 | 1, 0.5 | fd-CDM2 | 0, 2, 4 | 5, 9 |
| Case 7-2 | 24 | 1, 0.5 | cdm4-FD2-TD2 | 0, 2, 4 | 5, 9 |
| Case 7-3 | 24 | 1, 0.5 | cdm8-FD2-TD4 | 0, 2, 4 | 5 |

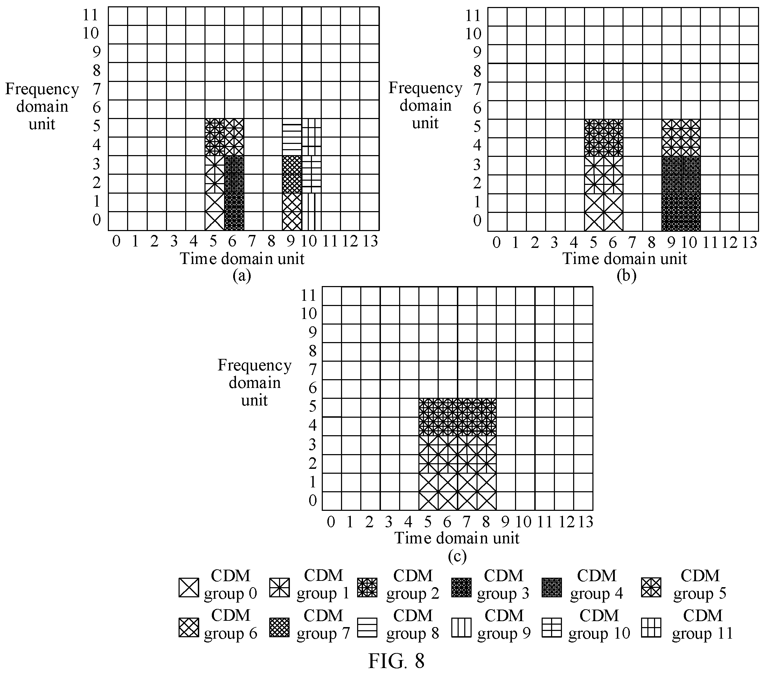

In the case 7-1, CDM groups corresponding to the CSI-RS-occupied RB in the CSI-RS resource include a CDM group 0 to a CDM group 11. The terminal device determines, based on $X$, $\rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 7-1, that the case 7-1 corresponds to the 13th row in Table 1; and determines, based on the start frequency domain position of the CDM group corresponding to the RB on which the CSI-RS in the CSI-RS resource is located in the case 7-1, the start time domain position corresponding to the RB on which the CSI-RS in the CSI-RS resource is located in the case 7-1, and the 13th row in Table 1, that REs occupied by the CSI-RS resource in an RB include REs occupied by each of the CDM group 0 to the CDM group 11. In this case, REs occupied by the CDM group 0 include REs corresponding to a frequency domain unit 0, a frequency domain unit 1, and a time domain unit 5; REs occupied by a CDM group 1 include REs corresponding to a frequency domain unit 2, a frequency domain unit 3, and the time domain unit 5; REs occupied by a CDM group 2 include REs corresponding to a frequency domain unit 4, a frequency domain unit 5, and the time domain unit 5; REs occupied by a CDM group 3 include REs corresponding to the frequency domain unit 0, the frequency domain unit 1, and a time domain unit 6; REs occupied by a CDM group 4 include REs corresponding to the frequency domain unit 2, the frequency domain unit 3, and the time domain unit 6; REs occupied by a CDM group 5 include REs corresponding to the frequency domain unit 4, the frequency domain unit 5, and the time domain unit 6; REs occupied by a CDM group 6 include REs corresponding to the frequency domain unit 0, the frequency domain unit 1, and a time domain unit 9; REs occupied by a CDM group 7 include REs corresponding to the frequency domain unit 2, the frequency domain unit 3, and the time domain unit 9; REs occupied by a CDM group 8 include REs corresponding to the frequency domain unit 4, the frequency domain unit 5, and the time domain unit 9; REs occupied by a CDM group 9 include REs corresponding to the frequency domain unit 0, the frequency domain unit 1, and a time domain unit 10; REs occupied by a CDM group 10 include REs corresponding to the frequency domain unit 2, the frequency domain unit 3, and the time domain unit 10; and REs occupied by the CDM group 11 include REs corresponding to the frequency domain unit 4, the frequency domain unit 5, and the time domain unit 10. For a correspondence between time-frequency resources occupied by the CSI-RS resource and the CDM groups in the case 7-1, refer to (a) in FIG. 8.

In the case 7-2, CDM groups corresponding to the CSI-RS-occupied RB in the CSI-RS resource include a CDM group 0 to a CDM group 5. The terminal device determines, based on $X, \rho$, the CDM type, the start frequency domain position of the CDM group corresponding to the RB on which the CSI-RS in the CSI-RS resource is located, and the start time domain position corresponding to the RB on which the CSI-RS in the CSI-RS resource is located in the case 7-2, that the case 7-2 corresponds to the 14th row in Table 1; and determines, based on the start frequency domain position of the CDM group corresponding to the RB on which the CSI-RS in the CSI-RS resource is located in the case 7-2, the start time domain position corresponding to the RB on which the CSI-RS in the CSI-RS resource is located in the case 7-2, and the 14th row in Table 1, that REs occupied by the CSI-RS resource in an RB include REs occupied by each of the CDM group 0 to the CDM group 5. In this case, REs occupied by the CDM group 0 include REs corresponding to a frequency domain unit 0, a frequency domain unit 1, a time domain unit 5, and a time domain unit 6; REs occupied by a CDM group 1 include REs corresponding to a frequency domain unit 2, a frequency domain unit 3, the time domain unit 5, and the time domain unit 6; REs occupied by a CDM group 2 include REs corresponding to a frequency domain unit 4, a frequency domain unit 5, the time domain unit 5, and the time domain unit 6; REs occupied by a CDM group 3 include REs corresponding to the frequency domain unit 0, the frequency domain unit 1, a time domain unit 9, and a time domain unit 10; REs occupied by a CDM group 4 include REs corresponding to the frequency domain unit 2, the frequency domain unit 3, the time domain unit 9, and the time domain unit 10; and REs occupied by the CDM group 5 include REs corresponding to the frequency domain unit 4, the frequency domain unit 5, the time domain unit 9, and the time domain unit 10. For a correspondence between time-frequency resources occupied by the CSI-RS resource and the CDM groups in the case 7-2, refer to (b) in FIG. 8.

In the case 7-3, CDM groups corresponding to the CSI-RS-occupied RB in the CSI-RS resource include a CDM group 0 to a CDM group 2. The terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 7-3, that the case 7-3 corresponds to the 15th row in Table 1; and determines, based on the start frequency domain position of the CDM group corresponding to the RB on which the CSI-RS in the CSI-RS resource is located in the case 7-3, the start time domain position corresponding to the RB on which the CSI-RS in the CSI-RS resource is located in the case 7-3, and the 15th row in Table 1, that REs occupied by the CSI-RS resource in an RB include REs occupied by each of the CDM group 0 to the CDM group 2. In this case, REs occupied by the CDM group 0 include REs corresponding to a frequency domain unit 0, a frequency domain unit 1, and a time domain unit 5 to a time domain unit 8; REs occupied by a CDM group 1 include REs corresponding to a frequency domain unit 2, a frequency domain unit 3, and the time domain unit 5 to the time domain unit 8; and REs occupied by the CDM group 2 include REs corresponding to a frequency domain unit 4, a frequency domain unit 5, and the time domain unit 5 to the time domain unit 8. For a correspondence between time-frequency resources occupied by the CSI-RS resource and the CDM groups in the case 7-3, refer to (c) in FIG. 8.

(8) The quantity of ports of the CSI-RS in the CSI-RS resource is 32.

It is assumed that $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located that are indicated by the channel measurement configuration information are shown in any row of a case 8-1 to a case 8-3 in the following Table 13.

Table 13

| Case | $X$ | $\rho$ | CDM type of the CSI-RS in the CSI-RS resource | Start frequency domain position of the CDM group corresponding to the RB on which the CSI-RS in the CSI-RS resource is located | Start time domain position corresponding to the RB on which the CSI-RS in the CSI-RS resource is located |
|---|---|---|---|---|---|
| Case 8-1 | 32 | 1, 0.5 | fd-CDM2 | 0, 2, 4, 6 | 5, 9 |
| Case 8-2 | 32 | 1, 0.5 | cdm4-FD2-TD2 | 0, 2, 4, 6 | 5, 9 |
| Case 8-3 | 32 | 1, 0.5 | cdm8-FD2-TD4 | 0, 2, 4, 6 | 5 |

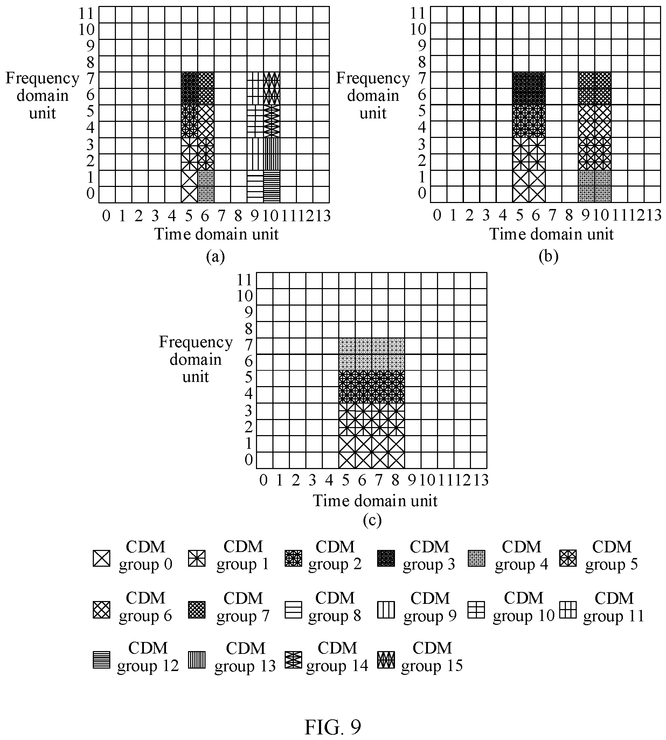

In the case 8-1, CDM groups corresponding to the CSI-RS-occupied RB in the CSI-RS resource include a CDM group 0 to a CDM group 15. The terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 8-1, that the case 8-1 corresponds to the 16th row in Table 1; and determines, based on the start frequency domain position of the CDM group corresponding to the RB on which the CSI-RS in the CSI-RS resource is located in the case 8-1, the start time domain position corresponding to the RB on which the CSI-RS in the CSI-RS resource is located in the case 8-1, and the 16th row in Table 1, that REs occupied by the CSI-RS resource in an RB include REs occupied by each of the CDM group 0 to the CDM group 15. In this case, REs occupied by the CDM group 0 include REs corresponding to a frequency domain unit 0, a frequency domain unit 1, and a time domain unit 5; REs occupied by a CDM group 1 include REs corresponding to a frequency domain unit 2, a frequency domain unit 3, and the time domain unit 5; REs occupied by a CDM group 2 include REs corresponding to a frequency domain unit 4, a frequency domain unit 5, and the time domain unit 5; REs occupied by a CDM group 3 include REs corresponding to a frequency domain unit 6, a frequency domain unit 7, and the time domain unit 5; REs occupied by a CDM group 4 include REs corresponding to the frequency domain unit 0, the frequency domain unit 1, and a time domain unit 6; REs occupied by a CDM group 5 include REs corresponding to the frequency domain unit 2, the frequency domain unit 3, and the time domain unit 6; REs occupied by a CDM group 6 include REs corresponding to the frequency domain unit 4, the frequency domain unit 5, and the time domain unit 6; REs occupied by a CDM group 7 include REs corresponding to the frequency domain unit 6, the frequency domain unit 7, and the time domain unit 5; REs occupied by a CDM group 8 include REs corresponding to the frequency domain unit 0, the frequency domain unit 1, and a time domain unit 9; REs occupied by a CDM group 9 include REs corresponding to the frequency domain unit 2, the frequency domain unit 3, and the time domain unit 9; REs occupied by a CDM group 10 include REs corresponding to the frequency domain unit 4, the frequency domain unit 5, and the time domain unit 9; REs occupied by a CDM group 11 include REs corresponding to the frequency domain unit 6, the frequency domain unit 7, and the time domain unit 9; REs occupied by a CDM group 12 include REs corresponding to the frequency domain unit 0, the frequency domain unit 1, and a time domain unit 10; REs occupied by a CDM group 13 include REs corresponding to the frequency domain unit 2, the frequency domain unit 3, and the time domain unit 10; REs occupied by a CDM group 14 include REs corresponding to the frequency domain unit 4, the frequency domain unit 5, and the time domain unit 10; and REs occupied by the CDM group 15 include REs corresponding to the frequency domain unit 6, the frequency domain unit 7, and the time domain unit 9. For a correspondence between time-frequency resources occupied by the CSI-RS resource and the CDM groups in the case 8-1, refer to (a) in FIG. 9.

In the case 8-2, CDM groups corresponding to the CSI-RS-occupied RB in the CSI-RS resource include a CDM group 0 to a CDM group 7. The terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 8-2, that the case 8-2 corresponds to the 17th row in Table 1; and determines, based on the start frequency domain position of the CDM group corresponding to the RB on which the CSI-RS in the CSI-RS resource is located in the case 8-2, the start time domain position corresponding to the RB on which the CSI-RS in the CSI-RS resource is located in the case 8-2, and the 17th row in Table 1, that REs occupied by the CSI-RS resource in an RB include REs occupied by each of the CDM group 0 to the CDM group 7. In this case, REs occupied by the CDM group 0 include REs corresponding to a frequency domain unit 0, a frequency domain unit 1, a time domain unit 5, and a time domain unit 6; REs occupied by a CDM group 1 include REs corresponding to a frequency domain unit 2, a frequency domain unit 3, the time domain unit 5, and the time domain unit 6; REs occupied by a CDM group 2 include REs corresponding to a frequency domain unit 4, a frequency domain unit 5, the time domain unit 5, and the time domain unit 6; REs occupied by a CDM group 3 include REs corresponding to a frequency domain unit 6, a frequency domain unit 7, the time domain unit 5, and the time domain unit 6; REs occupied by a CDM group 4 include REs corresponding to the frequency domain unit 0, the frequency domain unit 1, a time domain unit 9, and a time domain unit 10; REs occupied by a CDM group 5 include REs corresponding to the frequency domain unit 2, the frequency domain unit 3, the time domain unit 9, and the time domain unit 10; REs occupied by a CDM group 6 include REs corresponding to the frequency domain unit 4, the frequency domain unit 5, the time domain unit 9, and the time domain unit 10; and REs occupied by the CDM group 7 include REs corresponding to the frequency domain unit 6, the frequency domain unit 7, the time domain unit 9, and the time domain unit 10. For a correspondence between time-frequency resources occupied by the CSI-RS resource and the CDM groups in the case 8-2, refer to (b) in FIG. 9.

In the case 8-3, CDM groups corresponding to the CSI-RS-occupied RB in the CSI-RS resource include a CDM group 0 to a CDM group 3. The terminal device determines, based on $X, \rho$, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located in the case 8-3, that the case 8-3 corresponds to the 18th row in Table 1; and determines, based on the start frequency domain position of the CDM group corresponding to the RB on which the CSI-RS in the CSI-RS resource is located in the case 8-3, the start time domain position corresponding to the RB on which the CSI-RS in the CSI-RS resource is located in the case 8-3, and the 18th row in Table 1, that REs occupied by the CSI-RS resource in an RB include REs occupied by each of the CDM group 0 to the CDM group 3. In this case, REs occupied by the CDM group 0 include REs corresponding to a frequency domain unit 0, a frequency domain unit 1, and a time domain unit 5 to a time domain unit 8; REs occupied by a CDM group 1 include REs corresponding to a frequency domain unit 2, a frequency domain unit 3, and the time domain unit 5 to the time domain unit 8; REs occupied by a CDM group 2 include REs corresponding to a frequency domain unit 4, a frequency domain unit 5, and the time domain unit 5 to the time domain unit 8; and REs occupied by the CDM group 3 include REs corresponding to a frequency domain unit 6, a frequency domain unit 7, and the time domain unit 5 to the time domain unit 8. For a correspondence between time-frequency resources occupied by the CSI-RS resource and the CDM groups in the case 8-3, refer to (c) in FIG. 9.

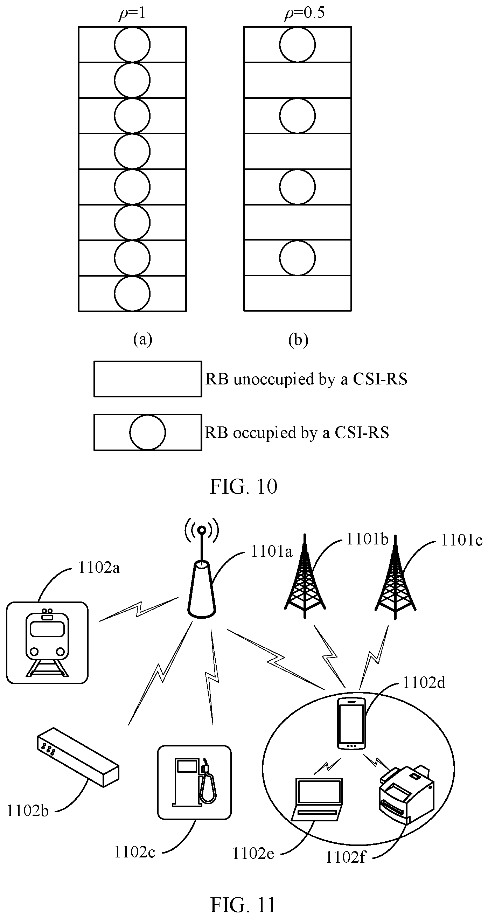

The following further describes an RB occupied by the CSI-RS within the CSI-RS resource under the foregoing various quantities of ports. Assuming that the CSI-RS corresponds to eight RBs within the CSI-RS resource, when $\rho=1$, the CSI-RS occupies a time-frequency resource of each RB within the CSI-RS resource. RBs occupied by the CSI-RS resource are shown in (a) in FIG. 10. When $\rho=0.5$, the CSI-RS occupies a time-frequency resource of one RB in every two RBs within the CSI-RS resource. RBs occupied by the CSI-RS within the CSI-RS resource are shown in (b) in FIG. 10.

In the foregoing solutions, the CSI-RS resource supports a small quantity of ports, for example, supports a maximum of 32 ports. Consequently, a quantity of configurable CSI-RS ports is limited. In a system with a larger antenna scale, a quantity of transmit antennas may be greater than 32, including, for example, 64, 128, or 256. In this case, a terminal device can obtain a small amount of channel state information in a space domain dimension. Consequently, accuracy of an obtained channel measurement result is low.

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, 4th generation (4th generation, 4G) mobile communication systems such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be further used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

First, in this application, "indicate" may include "directly indicate" and "indirectly indicate". When a piece of "information" is described to indicate A, the information may directly indicate A or indirectly indicate A, but it does not indicate that the information definitely carries A.

Information indicated by the piece of information is referred to as to-be-indicated information. In a specific implementation process, the to-be-indicated information may be indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated based on an arrangement sequence of pieces of information that is pre-agreed on (for example, specified in a protocol), to reduce indication overheads to some extent. In addition, a common part of all pieces of information may be further identified and indicated in a unified manner, to reduce indication overheads caused by separately indicating same information.

Furthermore, a specific indication manner may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device. The configuration information may include, for example, but not limited to, one or a combination of at least two of radio resource control (radio resource control, RRC) signaling, medium access control (medium access control, MAC) layer signaling, and physical layer signaling. The MAC layer signaling includes, for example, a MAC control element (control element, CE), and the physical (physical, PHY) layer signaling includes, for example, DCI.

Second, "first", "second", and various numeric numbers in the following embodiments are merely distinguished for ease of description, and are not intended to limit the scope of embodiments of this application. For example, the numbers are used to distinguish between different indication information.

Third, "predefinition" or "preconfiguration" may be implemented by pre-storing corresponding code or a corresponding table in a device (for example, including a terminal device and a network device) or in another manner that can indicate related information. A specific implementation of "predefinition" or "preconfiguration" is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fourth, a "protocol" in embodiments of this application may be a standard protocol in the communication field, and may include, for example, a 3GPP LTE protocol (for example, a technical specification in the TS 36 series), an NR protocol (for example, a technical specification in the TS 38 series), and a related protocol applied to a future communication system. This is not limited in this application.

A network architecture and a service scenario described in embodiments of this application are intended to describe the technical solutions of embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

For ease of understanding embodiments of this application, a communication system shown in FIG. 11 is first used as an example to describe in detail a communication system applicable to embodiments of this application. For example, FIG. 11 is a diagram of an architecture of a communication system to which a method according to an embodiment of this application is applicable.

As shown in FIG. 11, the communication system includes a network device and a terminal device.

For example, the network device may include a network device 1101a to a network device 1101c, and the terminal device may include a terminal device 1102a to a terminal device 1102f. The terminal device may be connected to the network device in a wireless manner, and the network device may be connected to a core network (not shown in FIG. 11) in a wired or wireless manner.

The terminal device may be a terminal having a transceiver function, or may be a chip or a chip system disposed in the terminal device. The terminal device may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine-type communication (machine-type communication, MTC) terminal, a computer having a wireless transceiver function, a virtual reality (virtual reality, VR) terminal, an augmented reality (augmented reality, AR) terminal, a smart home device (for example, a refrigerator, a television, an air conditioner, or an electricity meter), a smart robot, a robot arm, a workshop device, a wireless terminal in self-driving, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) or the like having a terminal function, a flight device (for example, a smart robot, a hot-air balloon, an uncrewed aerial vehicle, or an airplane), or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more parts or units. The terminal device may alternatively be another device having a terminal function. For example, the terminal device may alternatively be a device that functions as a terminal in D2D communication. A device form of the terminal device is not limited in embodiments of this application. An apparatus for implementing a function of the terminal device may be a terminal device, or may be an apparatus, for example, a chip system, that can support the terminal device in implementing the function. The apparatus may be mounted in the terminal device or used together with the terminal device. In embodiments of this application, the chip system may include a chip, or may include a chip and another discrete component.

The network device may be a device having a wireless transceiver function, or may be a chip or a chip system disposed in the device, and is located in an access network (access network, AN) of the communication system, to provide an access service for the terminal. For example, the network device may be referred to as a radio access network (radio access network, RAN) device, and may be specifically an access network device in a next-generation mobile communication system, for example, a 6G mobile communication system. For example, the network device may be a 6G base station. Alternatively, in the next-generation mobile communication system, the network device may be named in another manner, which falls within the protection scope of embodiments of this application. This is not limited in this application. Alternatively, the network device may include a gNB in 5G, for example, a new radio (new radio, NR) system, may include one or a group of antenna panels (including a plurality of antenna panels) of a base station in 5G, or may be a network node that forms a gNB, a transmission point (transmission reception point, TRP, or transmission point, TP), or a transmission measurement function (transmission measurement function, TMF). For example, the network device may be a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, or a 5G core network element. Alternatively, the network device may include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein. In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module. A form of the network device is not limited in embodiments of this application. An apparatus for implementing a function of the network device may be a network device, or may be an apparatus, for example, a chip system, that can support the network device in implementing the function. The apparatus may be mounted in the network device or used together with the network device.

It may be understood that, in FIG. 11, roles of the network device and the terminal device may be relative. For example, a terminal device 1102d in FIG. 11 may be configured as a mobile base station. For a terminal device 1102e or the terminal device 1102f that accesses the network device (any one of the network device 1101a to the network device 1101c) through the terminal device 1102d, the terminal device 1102d is a network device. For the network device (any one of the network device 1101a to the network device 1101c), the terminal device 1102d is a terminal device.

In embodiments of this application, both the network device and the terminal device may be collectively referred to as communication apparatuses. The network device 1101a to the network device 1101c in FIG. 11 may be referred to as communication apparatuses having a network device function. The terminal device 1102a to the terminal device 1102f in FIG. 11 may be referred to as communication apparatuses having a terminal device function.

It should be understood that FIG. 11 is merely a simplified diagram provided as an example for ease of understanding. The communication system may further include another network device and/or another terminal device that are/is not shown in FIG. 11.

To resolve a problem that complete channel state information in a space domain dimension cannot be obtained, embodiments of this application provide a channel measurement method. In the channel measurement method, a quantity of ports of the CSI-RS in a CSI-RS resource used to obtain channel state information can be increased. For example, a network device sends first information to a terminal device. The first information indicates a CSI-RS resource occupied by a CSI-RS. The CSI-RS resource occupied by the CSI-RS meets one or more of the following: the CSI-RS resource occupied by the CSI-RS includes a first CSI-RS resource, where an RB set occupied by the first CSI-RS resource corresponds to a plurality of orthogonal codes; the CSI-RS resource occupied by the CSI-RS includes a second CSI-RS resource, where start time domain positions corresponding to an RB on which a CSI-RS in the second CSI-RS resource is located include a start time domain position in a first set and a start time domain position in a second set, the first set and the second set each include at least one start time domain position, and any start time domain position in the second set is different from a start time domain position in the first set; the CSI-RS resource occupied by the CSI-RS includes a plurality of CSI-RS resources; or the CSI-RS resource occupied by the CSI-RS includes a third CSI-RS resource, where different port sets of the third CSI-RS resource correspond to different RB sets. The network device sends the CSI-RS to the terminal device on the CSI-RS resource occupied by the CSI-RS. After receiving the CSI-RS, the terminal device may obtain CSI, and send the CSI to the network device. In this way, more complete channel state information in a space domain dimension can be obtained.

It may be understood that the channel state information measurement method provided in embodiments of this application is applicable to the terminal device and the network device shown in FIG. 11. For specific implementation, refer to the following method embodiments. Details are not described herein.

It may be understood that the solutions in embodiments of this application may be further applied to another communication system, and a corresponding name may alternatively be replaced with a name of a corresponding function in the another communication system. It should be understood that FIG. 11 is merely a simplified diagram provided as an example for ease of understanding. The communication system may further include another network device and/or another terminal device that are/is not shown in FIG. 11.

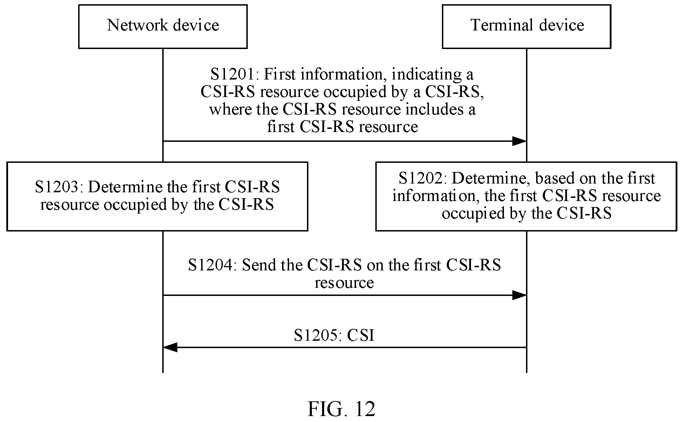

The following specifically describes, with reference to FIG. 12 to FIG. 24, the channel measurement method provided in embodiments of this application.

For example, FIG. 12 is a schematic flowchart of a channel measurement method according to an embodiment of this application. The channel measurement method is applicable to communication between the terminal device and the network device shown in FIG. 11.

As shown in FIG. 12, the channel measurement method includes the following steps.

S1201: The network device sends first information to the terminal device. Correspondingly, the terminal device receives the first information from the network device.

The first information indicates a CSI-RS resource occupied by a CSI-RS. In this embodiment, the CSI-RS resource indicated by the first information includes a first CSI-RS resource, and an RB set occupied by the CSI-RS in the first CSI-RS resource corresponds to a plurality of orthogonal codes.

The RB set occupied by the first CSI-RS resource includes at least two RBs.

In the plurality of orthogonal codes corresponding to the RB set occupied by the first CSI-RS resource, each orthogonal code corresponding to the RB set occupied by the first CSI-RS resource may be referred to as an RB-level OCC. In other words, the first CSI-RS resource corresponds to a plurality of RB-level OCCs.

Any two of the plurality of RB-level OCCs corresponding to the first CSI-RS resource are orthogonal to each other.

For example, assuming that the first CSI-RS resource corresponds to two RB-level OCCs, the two RB-level OCCs corresponding to the first CSI-RS resource may include [+1, +1] and [+1, -1]. [+1, +1] and [+1, -1] are orthogonal to each other. For another example, assuming that the first CSI-RS resource corresponds to four RB-level OCCs, the four RB-level OCCs corresponding to the first CSI-RS resource may include [+1, +1, +1, +1], [+1, -1, +1, -1], [+1, +1, -1, -1], and [+1, -1, -1, +1], where any two RB-level OCCs are orthogonal to each other.

A quantity of RB-level OCCs corresponding to the first CSI-RS resource is related to a quantity of RBs in the RB set, or the quantity of RB-level OCCs corresponding to the first CSI-RS resource is related to a length of an OCC sequence. A quantity of elements of the RB-level OCC is related to the quantity of RB-level OCCs. Therefore, the quantity of elements of the RB-level OCC corresponding to the first CSI-RS resource is related to the quantity of RBs in the RB set, or the quantity of elements of the RB-level OCC corresponding to the first CSI-RS resource is related to the length of the OCC sequence. It may be understood that there is a correspondence between a quantity of ports of the CSI-RS in the first CSI-RS resource and one or more of the following: a quantity of CDM groups in the RB occupied by the first CSI-RS resource, a CDM type of the CSI-RS in the first CSI-RS resource, or the quantity of RBs occupied by the first CSI-RS resource.

For example, the quantity of ports of the CSI-RS in the first CSI-RS resource may meet a relationship shown in the following formula (5):

$$P = c * d * r \qquad \text{Formula (5)}$$

$P$ is the quantity of ports of the CSI-RS in the first CSI-RS resource, $c$ is the quantity of CDM groups in the RB occupied by the first CSI-RS resource, and $d$ is a quantity of REs multiplexed in each CDM group in the CDM type of the CSI-RS in the first CSI-RS resource. $r$ is the quantity of RBs occupied by the first CSI-RS resource. $P, c, d,$ and r are all positive integers.

The relationship shown in the foregoing formula (5) is merely used as an example. During actual implementation, there may be another correspondence. For example, when two RBs occupied by the first CSI-RS resource correspond to one element in the RB-level OCC, the quantity of ports of the CSI-RS in the first CSI-RS resource may meet a relationship shown in the following formula (6):

$$P = c * d * r/s \hspace{3cm} \text{Formula (6)}$$

s is a quantity of RBs corresponding to one RB-level OCC, and s is a positive integer. It may be understood that one RB-level OCC of the first CSI-RS resource corresponds to one or more ports of the first CSI-RS resource. Each RB occupied by the first CSI-RS resource corresponds to one element of the RB-level OCC. The following describes the CSI-RS ports in the first CSI-RS resource with reference to the RB-level OCCs corresponding to the first CSI-RS resource.

Assuming that the quantity of ports of the CSI-RS in the first CSI-RS resource is 48, the quantity of RB-level OCCs corresponding to the first CSI-RS resource may be 2, which are separately [+1, +1] and [+1, -1]. In this case, a correspondence between the RB-level OCCs corresponding to the first CSI-RS resource and the CSI-RS ports in the first CSI-RS resource.

Table 14

| RB-level OCC | CDM group in an RB | Ports corresponding to the CDM group | CSI-RS ports in the first CSI-RS resource |
|---|---|---|---|
| [+1, +1] | CDM group 0 | Port 0 and port 1 | Port 0 to port 23 |
|  | CDM group 1 | Port 2 and port 3 |  |
|  | CDM group 2 | Port 4 and port 5 |  |
|  | CDM group 3 | Port 6 and port 7 |  |
|  | CDM group 4 | Port 8 and port 9 |  |
|  | CDM group 5 | Port 10 and port 11 |  |
|  | CDM group 6 | Port 12 and port 13 |  |
|  | CDM group 7 | Port 14 and port 15 |  |
|  | CDM group 8 | Port 16 and port 17 |  |
|  | CDM group 9 | Port 18 and port 19 |  |
|  | CDM group 10 | Port 20 and port 21 |  |
|  | CDM group 11 | Port 22 and port 23 |  |
| [+1, -1] | CDM group 0 | Port 24 and port 25 | Port 24 to port 47 |
|  | CDM group 1 | Port 26 and port 27 |  |
|  | CDM group 2 | Port 28 and port 29 |  |
|  | CDM group 3 | Port 30 and port 31 |  |
|  | CDM group 4 | Port 32 and port 33 |  |
|  | CDM group 5 | Port 34 and port 35 |  |
|  | CDM group 6 | Port 36 and port 37 |  |
|  | CDM group 7 | Port 38 and port 39 |  |
|  | CDM group 8 | Port 40 and port 41 |  |
|  | CDM group 9 | Port 42 and port 43 |  |
|  | CDM group 10 | Port 44 and port 45 |  |
|  | CDM group 11 | Port 46 and port 47 |  |

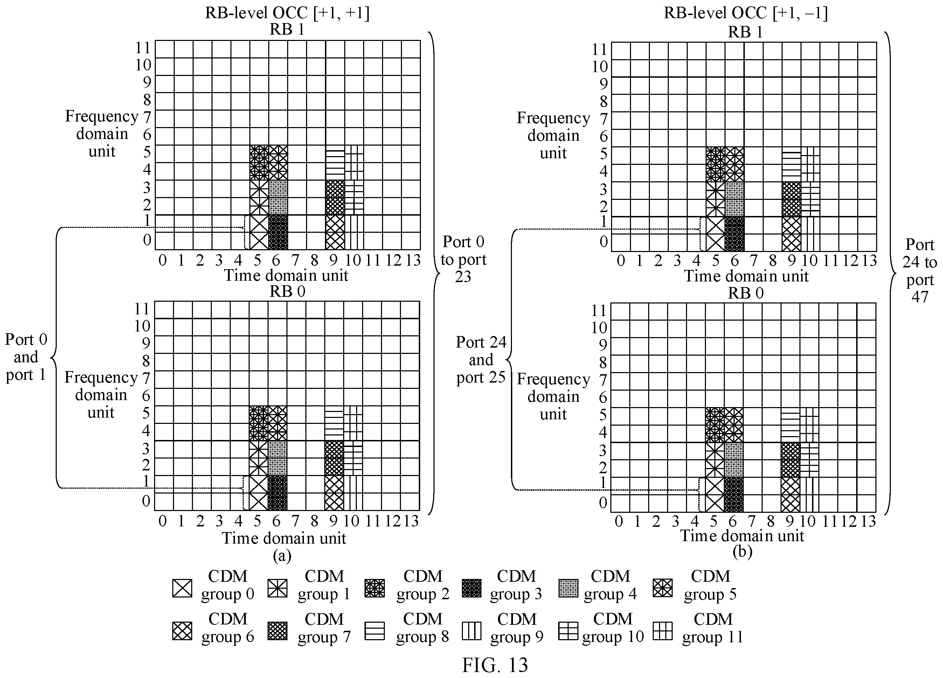

If CDM groups in each of the two RBs occupied by the first CSI-RS resource include a CDM group 0 to a CDM group 11, it is assumed that REs occupied by the CDM groups in each RB are shown in (a) in FIG. 8, and ports distinguished by combinations of an RB-level OCC and a CDM group are shown in Table 14. In this case, a diagram of a relationship between an RB occupied by the first CSI-RS resource, REs occupied by CDM groups in the RB, the RB-level OCC [+1, +1], and ports is shown in (a) in FIG. 13. In this case, a diagram of a relationship between an RB occupied by the first CSI-RS resource, REs occupied by CDM groups in the RB, the RB-level OCC [+1, -1], and ports is shown in (b) in FIG. 13. A same CDM group in different RBs and a same RB-level OCC correspond to ports that can be distinguished by the CDM group. For example, a combination of a CDM group 0 in an RB 0, a CDM group 0 in an RB 1, and the RB-level OCC [+1, +1] corresponds to the port 0 and the port 1; and a combination of the CDM group 0 in the RB 0, the CDM group 0 in the RB 1, and the RB-level OCC [+1, -1] corresponds to the port 24 and the port 25.

Assuming that the quantity of ports of the CSI-RS in the first CSI-RS resource is 96, the quantity of RB-level OCCs corresponding to the first CSI-RS resource may be 4. For example, the RB-level OCCs corresponding to the first CSI-RS resource may include [+1, +1, +1, +1], [+1, -1, +1, -1], [+1, +1, -1, -1], and [+1, -1, -1, +1]. In this case, a correspondence between the RB-level OCCs corresponding to the first CSI-RS resource and the CSI-RS ports in the first CSI-RS resource is shown in Table 15. In this case, RBs occupied by the first CSI-RS resource, REs occupied by CDM groups in the RBs, the RB-level OCCs, and the ports are similar to those in the case of 48 ports. For example, ports distinguished by a combination of an RB-level OCC and a CDM group are similar to those in the case of 48 ports. For details, refer to related descriptions in Table 14. For a diagram of a relationship between an RB occupied by the first CSI-RS resource, REs occupied by CDM groups in the RB, an RB-level OCC, and ports, refer to related descriptions in FIG. 13. Details are not described herein again.

Table 15

| RB-level OCC | CSI-RS ports in the first CSI-RS resource |
|---|---|
| [+1, +1, +1, +1] | Port 0 to port 23 |
| [+1, -1, +1, -1] | Port 24 to port 47 |
| [+1, +1, -1, -1] | Port 48 to port 71 |
| [+1, -1, -1, +1] | Port 72 to port 95 |

It may be understood that, in Table 14 and Table 15, a correspondence between an RB-level OCC and a set in the first CSI-RS resource is merely used as an example. During actual implementation, correspondences between an RB-level OCC and CSI-RS ports in the first CSI-RS resource in Table 14 or Table 15 may be interchanged. For example, in Table 14, the RB-level OCC [+1, +1] may correspond to the port 24 to the port 47, and the RB-level OCC [+1, -1] may correspond to the port 0 to the port 23. Details are not described herein again.

For another example, the quantity of ports of the CSI-RS in the first CSI-RS resource may be 64, and a relationship between an RB occupied by the first CSI-RS resource, REs occupied by CDM groups in the RB, an RB-level OCC, and ports is similar to the case in which the quantity of ports of the CSI-RS in the first CSI-RS resource is 48. Details are not described herein again.

In a possible design solution, the first information includes the plurality of orthogonal codes corresponding to the RB set occupied by the first CSI-RS resource. In other words, the first information indicates the plurality of orthogonal codes corresponding to the RB set occupied by the first CSI-RS resource.

In some possible design solutions, the plurality of orthogonal codes corresponding to the RB set occupied by the first CSI-RS resource may alternatively be predefined in a protocol, or the plurality of orthogonal codes corresponding to the RB set occupied by the first CSI-RS resource are preconfigured in the network device and the terminal device.

In addition, the first information may further include one or more of the following of each CSI-RS resource in the CSI-RS resource occupied by the CSI-RS: a quantity of ports corresponding to an RB on which the CSI-RS resource is located, a CDM type of the CSI-RS in the CSI-RS resource, a frequency domain density of the CSI-RS resource, a start time domain position corresponding to the RB on which the CSI-RS in the CSI-RS resource is located, and a start frequency domain position of a CDM group corresponding to the RB on which the CSI-RS in the CSI-RS resource is located.

In this embodiment of this application, the first information includes the plurality of orthogonal codes corresponding to the RB set occupied by the first CSI-RS resource, so that a plurality of groups of port sets are distinguished by using the plurality of orthogonal codes, and therefore resource utilization can be improved.

In this way, the first information may indicate the first CSI-RS resource based on the plurality of orthogonal codes and one or more of the following: a quantity of ports of the CSI-RS in each CSI-RS resource in the CSI-RS resource occupied by the CSI-RS, a CDM type of the CSI-RS in the CSI-RS resource, a start time domain position corresponding to an RB on which a CSI-RS in each CSI-RS resource is located, and a start frequency domain position of a CDM group corresponding to the RB on which the CSI-RS in each CSI-RS resource is located.

It may be understood that the CSI-RS resource occupied by the CSI-RS may further include a CSI-RS resource other than the first CSI-RS resource. In this case, the first information may further indicate a resource other than the first CSI-RS resource in the CSI-RS resource occupied by the CSI-RS. For example, for a CSI-RS resource indicated in channel measurement configuration information, refer to related descriptions in FIG. 1. Details are not described herein again.

For the quantity of ports of the CSI-RS in each CSI-RS resource in the CSI-RS resource occupied by the CSI-RS, the CDM type of the CSI-RS in the CSI-RS resource, the start time domain position corresponding to the RB on which the CSI-RS in each CSI-RS resource is located, and the start frequency domain position of the CDM group corresponding to the RB on which the CSI-RS in each CSI-RS resource is located, refer to related descriptions of the channel measurement configuration information. Details are not described herein again.

S1202: The terminal device determines, based on the first information, the first CSI-RS resource occupied by the CSI-RS.

It may be understood that, in this embodiment of this application, at least one second combination may be preconfigured in the terminal device. The second combination may include a quantity of ports of the CSI-RS in a CSI-RS resource, a frequency domain density of the CSI-RS resource, a CDM type of the CSI-RS in the CSI-RS resource, a correspondence between a time domain position and a frequency domain position that correspond to an RB on which a CSI-RS in the CSI-RS resource is located, and an RB-level OCC. For specific implementation of a time-frequency position corresponding to the RB on which the CSI-RS in the CSI-RS resource is located, refer to related descriptions of the first combination in S102. Details are not described herein again.

Optionally, the second combination may further include one or more of the following: an index of at least one CDM group corresponding to the CSI-RS resource, an index of a frequency domain unit, in a CDM group, of a CSI-RS-occupied RE in the CSI-RS resource, an index of a time domain unit, in a CDM group, of the RE occupied by the CSI-RS resource, or a row index.

For ease of understanding, the following uses 48 ports and 64 ports as examples to describe the second combination. In this case, for an implementation principle of the second combination, refer to the following Table 16. In Table 16, an example in which a CSI-RS resource occupies two RBs, a quantity of ports of the CSI-RS in the CSI-RS resource is 48 or 64, an RB-level OCC includes two elements, and each element corresponds to one RB is used. It may be understood that the at least one second combination may include second combinations corresponding to any plurality of rows from an $(m1)^{th}$ row to an $(m1+5)^{th}$ row in the following Table 16. In addition, second combinations in Table 16 are merely used as examples. The at least one second combination may further include another possible second combination, for example, a second combination corresponding to a larger quantity of CSI-RS ports. Details are not described herein again.

Table 16

| Row index | $X$ | $\rho$ | CDM type of the CSI-RS in a CSI-RS resource | $(\bar{k}, \bar{l})$ | CDM group indexes $j$ | $k'$ | $l'$ | RB-level OCCs |
|---|---|---|---|---|---|---|---|---|
| m1 | 48 | 0.5 | fd-CDM2 | $(k_0, l_0)$, $(k_1, l_0)$, $(k_2, l_0)$, $(k_0, l_0 + 1)$, $(k_1, l_0 + 1)$, $(k_2, l_0 + 1)$, $(k_0, l_1)$, $(k_1, l_1)$, $(k_2, l_1)$, $(k_0, l_1 + 1)$, $(k_1, l_1 + 1)$, $(k_2, l_1 + 1)$ | 0, 1, 2, 3, 4, 5, 6, 7, 8, 9, 10, 11 | 0, 1 | 0 | [+1, +1]; [+1, -1] |
| m1+1 | 48 | 0.5 | cdm4-FD2-TD2 | $(k_0, l_0)$, $(k_1, l_0)$, $(k_2, l_0)$, $(k_0, l_1)$, $(k_1, l_1)$, $(k_2, l_1)$ | 0, 1, 2, 3, 4, 5 | 0, 1 | 0, 1 | [+1, +1]; [+1, -1] |
| m1+2 | 48 | 0.5 | cdm8-FD2-TD4 | $(k_0, l_0)$, $(k_1, l_0)$, $(k_2, l_0)$ | 0, 1, 2 | 0, 1 | 0, 1, 2, 3 | [+1, +1]; [+1, -1] |
| m1+3 | 64 | 0.5 | fd-CDM2 | $(k_0, l_0)$, $(k_1, l_0)$, $(k_2, l_0)$, $(k_3, l_0)$, $(k_0, l_0 + 1)$, $(k_1, l_0 + 1)$, $(k_2, l_0 + 1)$, $(k_3, l_0 + 1)$, $(k_0, l_1)$, $(k_1, l_1)$, $(k_2, l_1)$, $(k_3, l_1)$, $(k_0, l_1 + 1)$, $(k_1, l_1 + 1)$, $(k_2, l_1 + 1)$, $(k_3, l_1 + 1)$ | 0, 1, 2, 3, 4, 5, 6, 7, 8, 9, 10, 11, 12, 13, 14, 15 | 0, 1 | 0 | [+1, +1]; [+1, -1] |
| m1+4 | 64 | 0.5 | cdm4-FD2-TD2 | $(k_0, l_0)$, $(k_1, l_0)$, $(k_2, l_0)$, $(k_3, l_0)$, $(k_0, l_1)$, $(k_1, l_1)$, $(k_2, l_1)$, $(k_3, l_1)$ | 0, 1, 2, 3, 4, 5, 6, 7 | 0, 1 | 0, 1 | [+1, +1]; [+1, -1] |
| m1+5 | 64 | 0.5 | cdm8-FD2-TD4 | $(k_0, l_0)$, $(k_1, l_0)$, $(k_2, l_0)$, $(k_3, l_0)$ | 0, 1, 2, 3 | 0, 1 | 0, 1, 2, 3 | [+1, +1]; [+1, -1] |

In Table 16, m1 is a positive integer. For example, m1 may be an integer greater than or equal to 19.

For $(\bar{k}, \bar{l})$, $k'$, $l'$, $k_0$, $k_1$, $k_2$, $k_3$, $k_4$, $l_0$, and $l_1$, refer to related descriptions in Table 1. Details are not described herein again. It may be understood that Table 16 is merely used as an example. During actual implementation, a sequence of the second combinations may be different from that in Table 16, and row indexes of different second combinations may be interchanged. Alternatively, a total quantity of ports corresponding to a CSI-RS resource may be another quantity, for example, 96. In other words, there may also be a second combination corresponding to another quantity of ports. Details are not described herein.

The terminal device may determine the second combination based on the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located; and further determine the CSI-RS resource based on the second combination.

The following further provides descriptions by using examples with reference to 48 ports and 64 ports.

As shown in Table 17, it is assumed that the first information indicates that the quantity of ports of the CSI-RS in the first CSI-RS resource is 48, the frequency domain density of the first CSI-RS resource is 1 (or 0.5), the CDM type of the CSI-RS in the first CSI-RS resource is that two ports are multiplexed on two REs, the start time domain position corresponding to the RB on which the CSI-RS in the first CSI-RS resource is located includes a time domain unit 5 and a time domain unit 9, and the start frequency domain position of the CDM group corresponding to the RB on which the CSI-RS in the first CSI-RS resource is located includes a frequency domain unit 0, a frequency domain unit 2, and a frequency domain unit 4.

Table 17

| $X$ | $\rho$ | CDM type of the CSI-RS in a CSI-RS resource | Start frequency domain positions of CDM groups corresponding to an RB on which a CSI-RS in the CSI-RS resource is located | Start time domain positions corresponding to the RB on which the CSI-RS in the CSI-RS resource is located |
|---|---|---|---|---|
| 48 | 0.5 | fd-CDM2 | 0, 2, 4 | 5, 9 |

In this case, when the first CSI-RS resource occupies two RBs, and RB-level OCCs include [+1, +1] and [+1, -1], the terminal device may determine, based on the first information and a second combination (the (m1)th row in Table 16), that time-frequency resources occupied by the first CSI-RS resource on each of the two occupied RBs are shown in (a) in FIG. 8. A correspondence between an RB-level OCC and CSI-RS ports in the first CSI-RS resource is shown in Table 14. For a diagram of a relationship between an RB occupied by the first CSI-RS resource, REs occupied by CDM groups in the RB, an RB-level OCC, and ports, refer to related descriptions in FIG. 13. Details are not described herein again. As shown in Table 18, it is assumed that the first information indicates that the quantity of ports of the CSI-RS in the first CSI-RS resource is 96, the frequency domain density of the first CSI-RS resource is 1 (or 0.5), the CDM type of the CSI-RS in the first CSI-RS resource is that two ports are multiplexed on two REs, the start time domain position corresponding to the RB on which the CSI-RS in the first CSI-RS resource is located includes a time domain unit 5 and a time domain unit 9, and the start frequency domain position of the CDM group corresponding to the RB on which the CSI-RS in the first CSI-RS resource is located includes a frequency domain unit 0, a frequency domain unit 2, and a frequency domain unit 4.

Table 18

| $X$ | $\rho$ | CDM type of the CSI-RS in a CSI-RS resource | Start frequency domain positions of CDM groups corresponding to an RB on which a CSI-RS in the CSI-RS resource is located | Start time domain positions corresponding to the RB on which the CSI-RS in the CSI-RS resource is located | RB-level OCCs |
|---|---|---|---|---|---|
| 96 | 0.25 | fd-CDM2 | 0, 2, 4 | 5, 9 | [+1, +1, +1, +1]; [+1, -1, +1, -1]; [+1, +1, -1, -1]; [+1, -1, -1, +1] |

In this case, when the first CSI-RS resource occupies four RBs, and RB-level OCCs include [+1, +1, +1, +1], [+1, -1, +1, -1], [+1, +1, -1, -1], and [+1, -1, -1, +1], the terminal device may determine, based on the first information and a second combination, for example, the (m1)th row in Table 16, that time-frequency resources occupied by the first CSI-RS resource on each RB are shown in (a) in FIG. 8. A correspondence between an RB-level OCC and a CSI-RS port set in the first CSI-RS resource is shown in Table 15. In this embodiment of this application, the first information may be carried in higher layer signaling, for example, RRC signaling or a medium access control control element (medium access control control element, MAC CE).

S1203: The network device determines the first CSI-RS resource occupied by the CSI-RS.

The second combination may be preconfigured in the network device. The network device may determine the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located. Then, the network device determines the second combination based on the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located; and further determines, based on the second combination, the CSI-RS resource occupied by the CSI-RS.

For an implementation principle of S1203, refer to related descriptions in S1202. Details are not described herein again.

It may be understood that, in the method provided in FIG. 12, an execution sequence of S1201, S1202, and S1203 is not limited. For example, S1203 may be performed before S1201, or S1202 may be performed after S1203. Details are not described herein.

S1204: The network device sends the CSI-RS on the first CSI-RS resource. Correspondingly, the terminal device receives the CSI-RS on the first CSI-RS resource.

That the network device sends the CSI-RS on the first CSI-RS resource may include: The network device encodes the CSI-RS based on the RB-level OCC, and sends the encoded RB-level OCC. That the terminal device receives the CSI-RS on the CSI-RS resource occupied by the CSI-RS may include: The terminal device receives, based on the RB-level OCC, the encoded CSI-RS on the CSI-RS resource occupied by the CSI-RS, and decodes the encoded CSI-RS based on the RB-level OCC, to obtain the CSI-RS.

For an implementation principle of S1204, refer to related descriptions in S104. Details are not described herein again.

S1205: The terminal device sends CSI to the network device. Correspondingly, the network device receives the CSI from the terminal device.

The CSI is obtained by measuring the CSI-RS.

For an implementation principle of S1205, refer to related descriptions in S105. Details are not described herein again.

Based on the channel measurement method provided in FIG. 12, the terminal device may receive the first information, receive the CSI-RS based on the CSI-RS resource that is occupied by the CSI-RS and that is indicated by the first information, and perform channel measurement. The CSI-RS resource occupied by the CSI-RS is the first CSI-RS resource, and the first CSI-RS resource corresponds to the plurality of orthogonal codes. In this way, a total quantity of ports corresponding to the CSI-RS resource occupied by the CSI-RS can be increased, to obtain more complete channel state information in a space domain dimension, and therefore accuracy of a channel measurement result is improved.

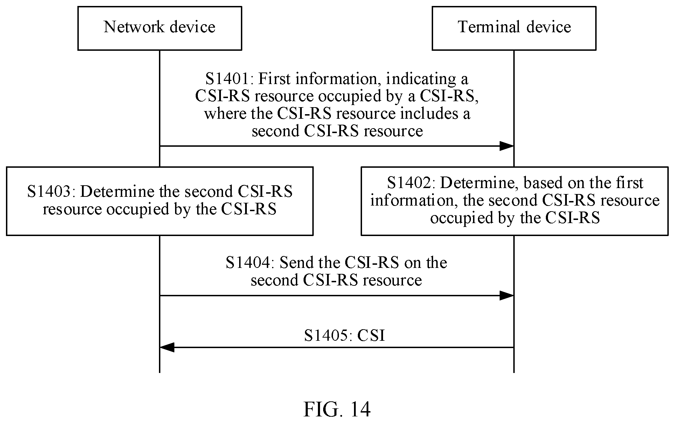

In some possible embodiments, time domain positions corresponding to the CSI-RS resource may be increased, to increase time-frequency resources, and therefore increase the quantity of CSI-RS ports. In this case, based on a resource indication manner corresponding to Table 1, the network device may further indicate a start time domain position and a start frequency domain position that are in a newly added time-frequency resource and that correspond to the RB on which the CSI-RS in the CSI-RS resource is located, to increase a quantity of ports corresponding to the CSI-RS. The following describes a channel measurement method in this scenario with reference to FIG. 14.

As shown in FIG. 14, the channel measurement method includes the following steps.

S1401: A network device sends first information to a terminal device. Correspondingly, the terminal device receives the first information from the network device.

The first information indicates a CSI-RS resource occupied by a CSI-RS. In this embodiment, the CSI-RS resource indicated by the first information includes a second CSI-RS resource, where start time domain positions corresponding to an RB on which a CSI-RS in the second CSI-RS resource is located include a start time domain position in a first set and a start time domain position in a second set, the first set and the second set each include at least one start time domain position, and any start time domain position in the second set is different from a start time domain position in the first set.

For example, the start time domain position in the first set may be the same as the start time domain position corresponding to the CDM group in Table 1. The start time domain position in the second set may be a time domain position other than the start time domain position corresponding to the CDM group in Table 1.

In a possible design solution, a quantity of start time domain positions in the first set and a quantity of start time domain positions in the second set each are related to one or more of the following: a quantity of ports of the CSI-RS in the second CSI-RS resource, a CDM type of the CSI-RS in the second CSI-RS resource, or a quantity of start frequency domain positions of a CDM group corresponding to the RB on which the CSI-RS in the second CSI-RS resource is located. In other words, the quantity of start time domain positions in the first set and data of start time domain positions in the second set each may be determined based on one or more of the following: the quantity of ports of the CSI-RS in the second CSI-RS resource, the CDM type of the CSI-RS in the second CSI-RS resource, or the quantity of start frequency domain positions of the CDM group corresponding to the RB on which the CSI-RS in the second CSI-RS resource is located.

Optionally, the quantity of start time domain positions in the first set and the quantity of start time domain positions in the second set are related to the quantity of ports of the CSI-RS in the second CSI-RS resource and the CDM type of the CSI-RS in the second CSI-RS resource. In this case, the quantity of start time domain positions in the first set and the quantity of start time domain positions in the second set may be determined based on a corresponding quantity of ports of the CSI-RS in a CSI-RS resource and a corresponding CDM type of the CSI-RS in the CSI-RS resource in Table 1. For example, when the quantity of ports of the CSI-RS in the second CSI-RS resource is 48, and the CDM type of the CSI-RS in the second CSI-RS resource is fd-CDM2, the quantity of start time domain positions in the first set is 2, and the quantity of start time domain positions in the second set is 2. For another example, when the quantity of ports of the CSI-RS in the second CSI-RS resource is 64, and the CDM type of the CSI-RS in the second CSI-RS resource is cdm8-FD2-TD4, the quantity of start time domain positions in the first set is 1, and the quantity of start time domain positions in the second set is 1.

The first information may indicate one or more of the following to indicate the second CSI-RS resource: the quantity of ports of the CSI-RS in the CSI-RS resource, a frequency domain density of the CSI-RS resource, the CDM type of the CSI-RS in the CSI-RS resource, the start frequency domain position of the CDM group corresponding to the RB on which the CSI-RS in the CSI-RS resource is located, and the start time domain positions corresponding to the RB on which the CSI-RS in the CSI-RS resource is located.

The following describes, in different cases with reference to that the second CSI-RS resource includes 48 ports or 64 ports, content indicated by the first information.

Case 1: The quantity of ports of the CSI-RS in the second CSI-RS resource is 48, the CDM type of the CSI-RS in the second CSI-RS resource is that two ports are multiplexed on two REs, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$ and a time domain unit $l_1$, and the start time domain position in the second set includes a time domain unit $l_2$ and a time domain unit $l_3$.

Case 2: The quantity of ports of the CSI-RS in the second CSI-RS resource is 48, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$ and a time domain unit $l_1$, and the start time domain position in the second set includes a time domain unit $l_2$ and a time domain unit $l_3$.

Case 3: The quantity of ports of the CSI-RS in the second CSI-RS resource is 48, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$, and the start time domain position in the second set includes a time domain unit $l_1$.

In the case 1 to the case 3, a quantity of time domain positions corresponding to the CSI-RS resource occupied by the CSI-RS can be doubled, to indicate a CSI-RS resource with 48 ports.

Case 4: The quantity of ports of the CSI-RS in the second CSI-RS resource is 64, the CDM type of the CSI-RS in the second CSI-RS resource is that two ports are multiplexed on two REs, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$ and a time domain unit $l_1$, and the start time domain position in the second set includes a time domain unit $l_2$ and a time domain unit $l_3$.

Case 5: The quantity of ports of the CSI-RS in the second CSI-RS resource is 64, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$ and a time domain unit $l_1$, and the start time domain position in the second set includes a time domain unit $l_2$

and a time domain unit $l_3$.

Case 6: The quantity of ports of the CSI-RS in the second CSI-RS resource is 64, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$, and the start time domain position in the second set includes a time domain unit $l_1$.

In the case 4 to the case 6, a quantity of time domain positions corresponding to the CSI-RS resource occupied by the CSI-RS can be doubled, to indicate a CSI-RS resource with 64 ports.

In this embodiment of this application, the first information may be carried in higher layer signaling, for example, RRC signaling or a MAC CE.

S1402: The terminal device determines, based on the first information, the second CSI-RS resource occupied by the CSI-RS.

It may be understood that, in this embodiment of this application, a third combination may be configured in the terminal device. The third combination includes a quantity of ports of the CSI-RS in a CSI-RS resource, a frequency domain density of the CSI-RS resource, a CDM type of the CSI-RS in the CSI-RS resource, and time-frequency positions corresponding to an RB on which a CSI-RS in the CSI-RS resource is located. For specific implementation of the time-frequency positions corresponding to the RB on which the CSI-RS in the CSI-RS resource is located, refer to related descriptions of the first combination in S102. Details are not described herein again.

Optionally, the third combination may further include one or more of the following: an index of at least one CDM group corresponding to the CSI-RS resource, an index of a frequency domain unit, in a CDM group, of a CSI-RS-occupied RE in the CSI-RS resource, an index of a time domain unit, in a CDM group, of the RE occupied by the CSI-RS resource, or a row index.

For ease of understanding, the following describes the third combination with reference to examples in which the CSI-RS resource includes 48 ports and 64 ports. In this case, for an implementation principle of the third combination, refer to the following Table 19.

Table 19

| Row index | $X$ | $\rho$ | CDM type of the CSI-RS in a CSI-RS resource | $(\bar{k},\bar{l})$ | CDM group indexes $j$ | $k'$ | $l'$ |
|---|---|---|---|---|---|---|---|
| m2 | 48 | 1, 0.5 | fd-CDM2 | $(k_0, l_0)$, $(k_1, l_0)$, $(k_2, l_0)$, $(k_0, l_0+1)$, $(k_1, l_0+1)$, $(k_2, l_0+1)$, $(k_0, l_1)$, $(k_1, l_1)$, $(k_2, l_1)$, $(k_0, l_1+1)$, $(k_1, l_1+1)$, $(k_2, l_1+1)$, $(k_0, l_2)$, $(k_1, l_2)$, $(k_2, l_2)$, $(k_0, l_2+1)$, $(k_1, l_2+1)$, $(k_2, l_2+1)$, $(k_0, l_3)$, $(k_1, l_3)$, $(k_2, l_3)$, $(k_0, l_3+1)$, $(k_1, l_3+1)$, $(k_2, l_3+1)$ | 0, 1, 2, 3, 4, 5, 6, 7, 8, 9, 10, 11, 12, 13, 14, 15, 16, 17, 18, 19, 20, 21, 22, 23 | 0, 1 | 0 |
| m2+1 | 48 | 1, 0.5 | cdm4-FD2-TD2 | $(k_0, l_0)$, $(k_1, l_0)$, $(k_2, l_0)$, $(k_0, l_1)$, $(k_1, l_1)$, $(k_2, l_1)$, $(k_0, l_2)$, $(k_1, l_2)$, $(k_2, l_2)$, $(k_0, l_3)$, $(k_1, l_3)$, $(k_2, l_3)$ | 0, 1, 2, 3, 4, 5, 6, 7, 8, 9, 10, 11 | 0, 1 | 0, 1 |
| m2+2 | 48 | 1, 0.5 | cdm8-FD2-TD4 | $(k_0, l_0)$, $(k_1, l_0)$, $(k_2, l_0)$, $(k_0, l_1)$, $(k_1, l_1)$, $(k_2, l_1)$ | 0, 1, 2, 3, 4, 5 | 0, 1 | 0, 1, 2, 3 |
| m2+3 | 64 | 1, 0.5 | fd-CDM2 | $(k_0, l_0)$, $(k_1, l_0)$, $(k_2, l_0)$, $(k_3, l_0)$, $(k_0, l_0+1)$, $(k_1, l_0+1)$, $(k_2, l_0+1)$, $(k_3, l_0+1)$, $(k_0, l_1)$, $(k_1, l_1)$, $(k_2, l_1)$, $(k_3, l_1)$, $(k_0, l_1+1)$, $(k_1, l_1+1)$, $(k_2, l_1+1)$, $(k_3, l_1+1)$, $(k_0, l_2)$, $(k_1, l_2)$, $(k_2, l_2)$, $(k_3, l_2)$, $(k_0, l_2+1)$, $(k_1, l_2+1)$, $(k_2, l_2+1)$, $(k_3, l_2+1)$, $(k_0, l_3)$, $(k_1, l_3)$, $(k_2, l_3)$, $(k_3, l_3)$, $(k_0, l_3+1)$, $(k_1, l_3+1)$, $(k_2, l_3+1)$, $(k_3, l_3+1)$ | 0, 1, 2, 3, 4, 5, 6, 7, 8, 9, 10, 11, 12, 13, 14, 15, 16, 17, 18, 19, 21, 21, 22, 23, 24, 25, 26, 27, 28, 29, 30, 31 | 0, 1 | 0 |

(continued)

| Row index | X | ρ | CDM type of the CSI-RS in a CSI-RS resource | $(\bar{k},\bar{l})$ | CDM group indexes $j$ | $k'$ | $l'$ |
|---|---|---|---|---|---|---|---|
| m2+4 | 64 | 1, 0.5 | cdm4-FD2-TD2 | $(k_0, l_0), (k_1, l_0), (k_2, l_0), (k_3, l_0), (k_0, l_1), (k_1, l_1), (k_2, l_1), (k_3, l_1), (k_0, l_2), (k_1, l_2), (k_2, l_2), (k_3, l_2), (k_0, l_3), (k_1, l_3), (k_2, l_3), (k_3, l_3)$ | 0, 1, 2, 3, 4, 5, 6, 7, 8, 9, 10, 11, 12, 13, 14, 15 | 0, 1 | 0, 1 |
| m2+5 | 64 | 1, 0.5 | cdm8-FD2-TD4 | $(k_0, l_0), (k_1, l_0), (k_2, l_0), (k_3, l_0), (k_0, l_1), (k_1, l_1), (k_2, l_1), (k_3, l_1)$ | 0, 1, 2, 3, 4, 5, 6,7 | 0, 1 | 0, 1, 2, 3 |

For $(\bar{k}, \bar{l})$, $k'$, $l'$, $k_0$, $k_1$, $k_2$, $k_3$, $k_4$, $l_0$, and $l_1$, refer to related descriptions in Table 1. Details are not described herein again. In Table 19, m1 is a positive integer. For example, m1 may be an integer greater than or equal to 19.

It may be understood that Table 19 is merely used as an example. During actual implementation, a sequence of third combinations may be different from that in Table 19. Row indexes of different third combinations may be interchanged. Alternatively, a total quantity of ports corresponding to a CSI-RS resource may be another quantity, for example, 96. In other words, there may also be a second combination corresponding to another quantity of ports. Details are not described herein.

For ease of understanding, the following describes the third combination by using an example in which one CSI-RS resource occupies eight RBs, and each RB corresponds to 48 ports.

With reference to an example in which in Table 19, $k_0$=0, $k_1$=2, $k_2$=4, $k_3$=6, $k_4$=8, $k_5$=10, $l_0$=5, and $l_1$=9, the third combinations of Table 19 are shown in the following Table 20.

Table 20

| Row index | X | ρ | CDM type of the CSI-RS in a CSI-RS resource | $(\bar{k},\bar{l})$ | CDM group indexes $j$ | $k'$ | $l'$ |
|---|---|---|---|---|---|---|---|
| m2 | 48 | 1, 0.5 | fd-CDM2 | (0, 5), (2, 5), (4, 5), (0, 6), (2, 6), (4, 6), (0, 9), (2, 9), (4, 9), (0, 10), (2, 10), (4, 10), (0, 7), (2, 7), (4, 7), (0, 8), (2, 8), (4, 8), (0, 11), (2, 11), (4, 11), (0, 12), (2, 12), (4, 12) | 0, 1, 2, 3, 4, 5, 6, 7, 8, 9, 10, 11, 12, 13, 14, 15, 16, 17, 18, 19, 20, 21, 22, 23 | 0, 1 | 0 |
| m2+1 | 48 | 1, 0.5 | cdm4-FD2-TD2 | (0, 5), (2, 5), (4, 5), (0, 6), (2, 6), (4, 6), (0, 7), (2, 7), (4, 7), (0, 11), (2, 11), (4, 11) | 0, 1, 2, 3, 4, 5, 6, 7, 8, 9, 10, 11, | 0, 1 | 0, 1 |
| m2+2 | 48 | 1, 0.5 | cdm8-FD2-TD4 | (0, 5), (2, 5), (4, 5), (0, 9), (2, 9), (4, 9) | 0, 1, 2, 3, 4, 5 | 0, 1 | 0, 1, 2, 3 |
| m2+3 | 64 | 1, 0.5 | fd-CDM2 | (0, 5), (2, 5), (4, 5), (0, 6), (2, 6), (4, 6), (0, 9), (2, 9), (4, 9), (0, 10), (2, 10), (4, 10), (0, 7), (2, 7), (4, 7), (0, 8), (2, 8), (4, 8), (0, 11), (2, 11), (4, 11), (0, 12), (2, 12), (4, 12) | 0, 1, 2, 3, 4, 5, 6, 7, 8, 9, 10, 11, 12, 13, 14, 15, 16, 17, 18, 19, 20, 21, 22, 23 | 0, 1 | 0 |
| m2+4 | 64 | 1, 0.5 | cdm4-FD2-TD2 | (0, 5), (2, 5), (4, 5), (0, 6), (2, 6), (4, 6), (0, 7), (2, 7), (4, 7), (0, 11), (2, 11), (4, 11) | 0, 1, 2, 3, 4, 5, 6, 7, 8, 9, 10, 11, | 0, 1 | 0, 1 |
| m2+5 | 64 | 1, 0.5 | cdm8-FD2-TD4 | (0, 5), (2, 5), (4, 5), (0, 9), (2, 9), (4, 9) | 0, 1, 2, 3, 4, 5 | 0, 1 | 0, 1, 2, 3 |

The terminal device may determine the second combination based on the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, and the start time domain positions corresponding to the RB on which the CSI-RS in the CSI-RS resource is located; and further determine, based on the third combination, the CSI-RS resource occupied by the CSI-RS.

The following further provides descriptions by using examples with reference to 48 ports and 64 ports.

Assuming that the second CSI-RS resource includes 48 ports, the first information may indicate the second CSI-RS resource in a manner of indicating any one of a case 9-1 to a case 9-3 in the following Table 21.

Table 21

| Case | X | $\rho$ | CDM type of the CSI-RS in a CSI-RS resource | Start frequency domain positions of CDM groups corresponding to an RB on which a CSI-RS in the CSI-RS resource is located | Start time domain positions corresponding to the RB on which the CSI-RS in the CSI-RS resource is located |
|------|---|---|---|---|---|
| Case 9-1 | 48 | 1 | fd-CDM2 | 0, 2, 4 | 5, 7, 9, 11 |
| Case 9-2 | 48 | 1 | cdm4-FD2-TD2 | 0, 2, 4 | 5, 7, 9, 11 |
| Case 9-3 | 48 | 1 | cdm8-FD2-TD4 | 0, 2, 4 | 5, 9 |

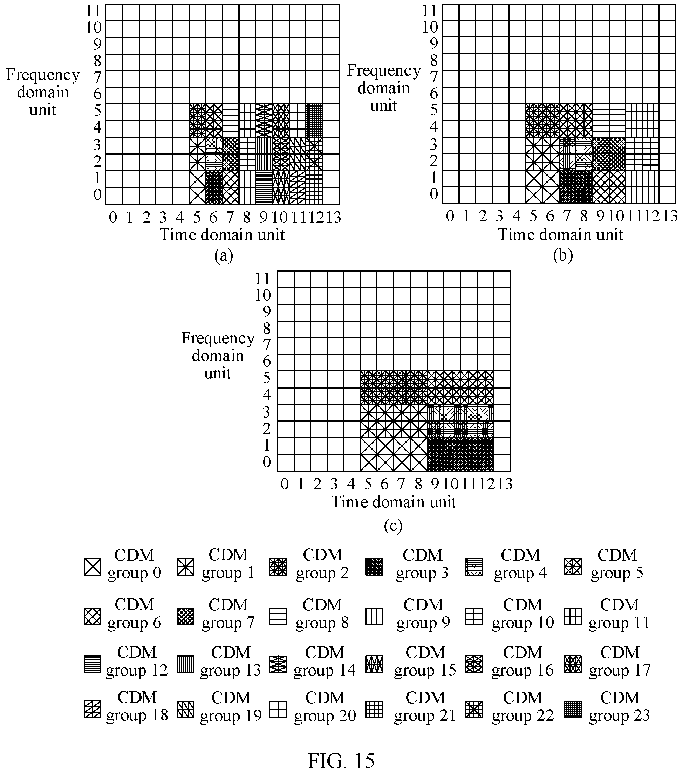

Ports, in one RB occupied by the second CSI-RS resource, corresponding to the case 9-1 to the case 9-3 in Table 21 are sequentially shown in (a) to (c) in FIG. 15.

It may be understood that, in Table 21, $\rho$ may alternatively be 0.5 or another value. This is not limited herein. In two cases of $\rho$=1 and $\rho$=0.5, an implementation principle of an RB that is occupied by the second CSI-RS and that is indicated by any row in Table 21 is similar to that in FIG. 10, and details are not described herein again. Similarly, assuming that the second CSI-RS resource includes 64 ports, the first information may indicate the second CSI-RS resource in a manner of indicating any one of a case 10-1 to a case 10-3 in the following Table 22.

Table 22

| Case | X | $\rho$ | CDM type of the CSI-RS in a CSI-RS resource | Start frequency domain positions of CDM groups corresponding to an RB on which a CSI-RS in the CSI-RS resource is located | Start time domain positions corresponding to the RB on which the CSI-RS in the CSI-RS resource is located |
|------|---|---|---|---|---|
| Case 10-1 | 64 | 1 | fd-CDM2 | 0, 2, 4, 6 | 5, 7, 9, 11 |
| Case 10-2 | 64 | 1 | cdm4-FD2-TD2 | 0, 2, 4, 6 | 5, 7, 9, 11 |
| Case 10-3 | 64 | 1 | cdm8-FD2-TD4 | 0, 2, 4, 6 | 5, 9 |

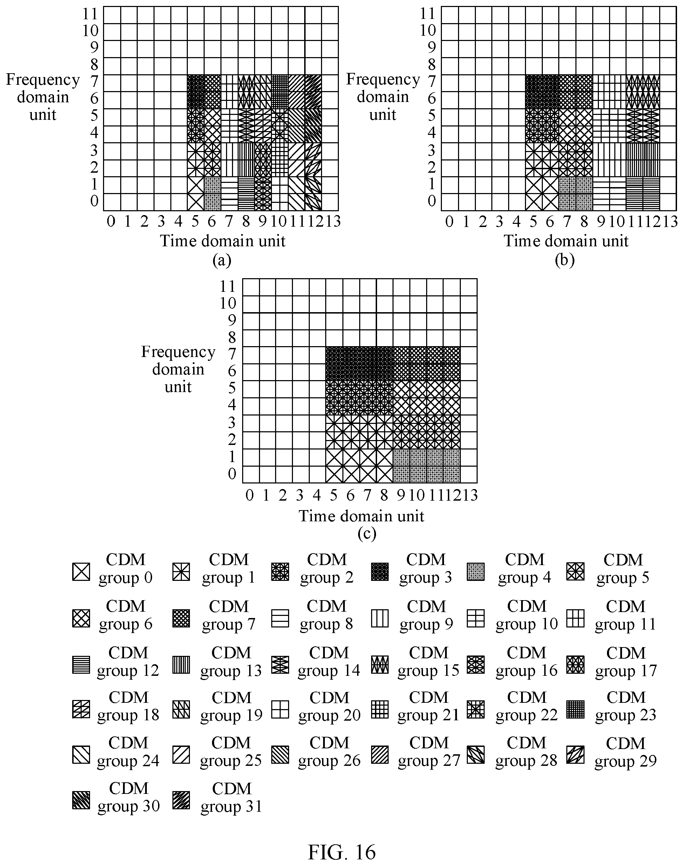

In this case, ports, in one RB occupied by the second CSI-RS resource, corresponding to the case 10-1 to the case 10-3 in Table 22 are sequentially shown in (a) to (c) in FIG. 16.

It may be understood that in Table 21 or Table 22, $\rho$ may alternatively be 0.5 or another value. This is not limited herein. In two cases of $\rho$=1 and $\rho$=0.5, an implementation principle of an RB that is occupied by the second CSI-RS and that is indicated by any row in Table 21 is similar to that in FIG. 10, and details are not described herein again.

S1403: The network device determines the second CSI-RS resource occupied by the CSI-RS.

The third combination may be preconfigured in the network device. The network device may first determine the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, and the start time domain positions corresponding to the RB on which the CSI-RS in the CSI-RS resource is located. Then, the network device determines, based on the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, the start time domain positions corresponding to the RB on which the CSI-RS in the CSI-RS resource is located, and the third combination, the CSI-RS resource occupied by the CSI-RS.

For an implementation principle of S1403, refer to related descriptions in S1402. Details are not described herein again.

It may be understood that, in the method provided in FIG. 14, an execution sequence of S1401, S1402, and S1403 is not limited. For example, S1403 may be performed before S1401, or S1402 may be performed after S1403.

Details are not described herein.

S1404: The network device sends the CSI-RS on the second CSI-RS resource. Correspondingly, the terminal device receives the CSI-RS on the second CSI-RS resource.

For an implementation principle of S1404, refer to related descriptions in S104 or S1204. Details are not described herein again.

S1405: The terminal device sends CSI. Correspondingly, the network device receives the CSI from the terminal device.

The CSI is obtained by measuring the CSI-RS.

For an implementation principle of S1405, refer to related descriptions in S105. Details are not described herein again.

Based on the channel measurement method provided in FIG. 14, the terminal device may receive the first information, receive the CSI-RS based on the CSI-RS resource that is occupied by the CSI-RS and that is indicated by the first information, and perform channel measurement. The CSI-RS resource occupied by the CSI-RS is the second CSI-RS resource, and the start time domain positions of the second CSI-RS resource include the start time domain position in the first set and the start time domain position in the second set. In this way, a total quantity of ports corresponding to the CSI-RS resource occupied by the CSI-RS can be increased by indicating more start time domain positions, to obtain more complete channel state information in a space domain dimension, and therefore accuracy of a channel measurement result is improved.

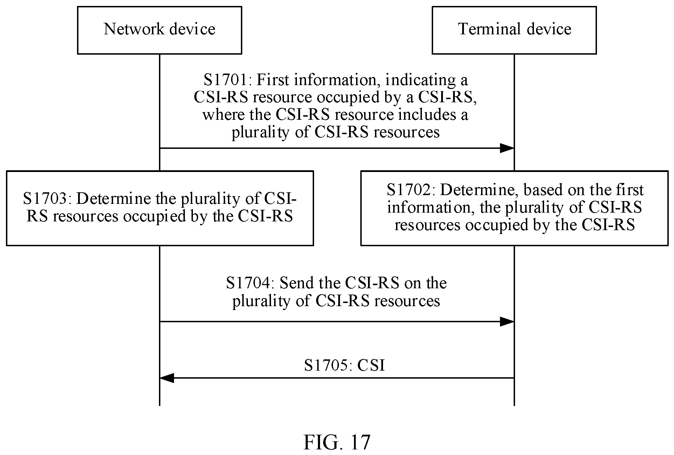

In some possible embodiments, in a channel measurement process, CSI-RS measurement may be performed in a plurality of CSI-RS resources. In this way, a quantity of ports corresponding to the CSI-RS may be increased. In this case, the network device may indicate, to the terminal device, the plurality of CSI-RS resources corresponding to the CSI-RS. The following describes a channel measurement method in this scenario with reference to FIG. 17. As shown in FIG. 17, the channel measurement method includes the following steps.

S1701: A network device sends first information to a terminal device. Correspondingly, the terminal device receives the first information from the network device.

The first information indicates a CSI-RS resource occupied by a CSI-RS. In this embodiment, the CSI-RS resource indicated by the first information includes a plurality of CSI-RS resources. In other words, the CSI-RS occupies the plurality of CSI-RS resources. In other words, the first information indicates the plurality of CSI-RS resources occupied by the CSI-RS.

In other words, the first information may indicate each of the plurality of CSI-RS resources occupied by the CSI-RS.

In a possible design solution, the first information may indicate one or more of the following of each of the plurality of CSI-RS resources occupied by the CSI-RS, to indicate the plurality of CSI-RS resources occupied by the CSI-RS: a quantity of ports of the CSI-RS in the CSI-RS resource, a frequency domain density of the CSI-RS resource, a CDM type of the CSI-RS in the CSI-RS resource, a start frequency domain position of a CDM group corresponding to an RB on which a CSI-RS in the CSI-RS resource is located, and a start time domain position corresponding to the RB on which the CSI-RS in the CSI-RS resource is located.

For an implementation principle of each of the plurality of CSI-RS resources occupied by the CSI-RS, refer to related descriptions of the channel measurement configuration information in S101. Details are not described herein again.

The following uses an example in which a quantity of CSI-RS ports is 48. In this case, two CSI-RS resources with 24 ports may be configured. In this case, the first information may indicate two CSI-RS resources, for example, a CSI-RS resource 0 and a CSI-RS resource 1. For example, the first information may indicate the CSI-RS resource 0 and the CSI-RS resource 1 according to the following Table 23. It may be understood that time domain positions that correspond to the plurality of CSI-RS resources and that are indicated by the first information may be located in a same slot (slot), or may be located in different slots. Details are not described herein.

Table 23

| CSI-RS resource | $X$ | $\rho$ | CDM type of the CSI-RS in the CSI-RS resource | Start frequency domain positions of CDM groups corresponding to an RB on which a CSI-RS in the CSI-RS resource is located | Start time domain positions corresponding to the RB on which the CSI-RS in the CSI-RS resource is located |
|---|---|---|---|---|---|
| CSI-RS resource 0 | 24 | 1 | fd-CDM2 | 0, 2, 4 | 5, 9 |
| CSI-RS resource 1 | 24 | 1 | fd-CDM2 | 0, 2, 4 | 7, 11 |

S 1702: The terminal device determines, based on the first information, the plurality of CSI-RS resources occupied by the CSI-RS.

A first combination may be preconfigured in the terminal device. For an implementation principle of the first combination, refer to related descriptions in S102.

The terminal device may determine, based on the first information, each of the plurality of CSI-RS resources occupied by the CSI-RS. For a principle of determining each of the plurality of CSI-RS resources occupied by the CSI-RS, refer to related descriptions in S 102. Details are not described herein again.

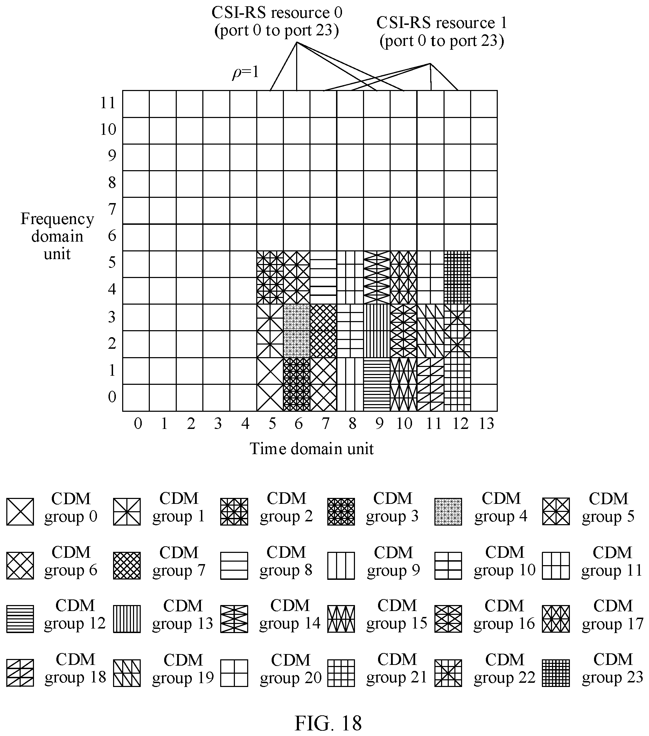

For example, the CSI-RS resources indicated by the first information are the CSI-RS resource 0 and the CSI-RS resource 1 shown in Table 23. In the CSI-RS resource 0 and the CSI-RS resource 1 that are determined by the terminal device, ports in RBs in which the CSI-RS resources are located are sequentially shown in FIG. 18.

S1703: The network device determines the plurality of CSI-RS resources occupied by the CSI-RS.

The first combination may be preconfigured in the network device. The network device may first determine the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, and the start time domain position corresponding to the RB on which the CSI-RS in the CSI-RS resource is located. Then, the network device determines, based on the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, the start time domain position corresponding to the RB on which the CSI-RS in the CSI-RS resource is located, and the first combination, the CSI-RS resource occupied by the CSI-RS.

For an implementation principle of S1703, refer to related descriptions in S1702. Details are not described herein again.

It may be understood that, in the method provided in FIG. 17, an execution sequence of S1701, S1702, and S1703 is not limited. For example, S1703 may be performed before S1701, or S1702 may be performed after S1703. Details are not described herein.

S1704: The network device sends the CSI-RS on the plurality of CSI-RS resources. Correspondingly, the terminal device receives the CSI-RS on the plurality of CSI-RS resources.

For an implementation principle of S1704, refer to related descriptions in S104. Details are not described herein again.

For example, the network device sends the CSI-RS on the plurality of CSI-RS resources occupied by the CSI-RS. Correspondingly, the terminal device receives the CSI-RS on the plurality of CSI-RS resources occupied by the CSI-RS.

S1705: The terminal device sends CSI. Correspondingly, the network device receives the CSI from the terminal device.

The CSI is obtained by measuring the CSI-RS.

For an implementation principle of S1705, refer to related descriptions in S105. Details are not described herein again.

Based on the channel measurement method provided in FIG. 17, the terminal device may receive the first information, receive the CSI-RS based on the CSI-RS resources that are occupied by the CSI-RS and that are indicated by the first information, and perform channel measurement. The CSI-RS occupies the plurality of CSI-RS resources. In this way, a total quantity of ports corresponding to the CSI-RS resources occupied by the CSI-RS can be increased, to obtain more complete channel state information in a space domain dimension, and therefore accuracy of a channel measurement result is improved.

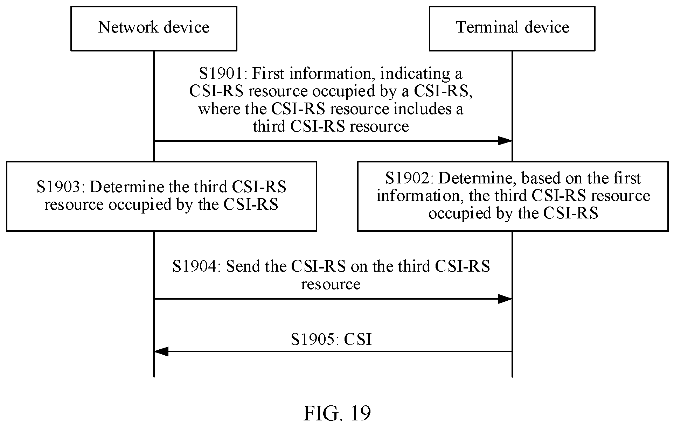

In some possible embodiments, in a channel measurement process, CSI-RS ports in at least one CSI-RS resource occupied by the CSI-RS include ports in a plurality of port sets. Different port sets may occupy different RBs. In this case, port sets corresponding to a same CSI-RS resource occupy a part of RBs. In this case, the network device may indicate, to the terminal device, the CSI-RS resource corresponding to the CSI-RS. In this way, a quantity of ports corresponding to the CSI-RS can be increased. The following describes a channel measurement method in this scenario with reference to FIG. 19. The channel measurement method includes the following steps.

S1901: A network device sends first information to a terminal device. Correspondingly, the terminal device receives the first information from the network device.

The first information indicates a CSI-RS resource occupied by a CSI-RS. In this embodiment, the CSI-RS resource indicated by the first information includes a third CSI-RS resource, and different port sets of the third CSI-RS resource correspond to different RB sets, in other words, RB sets corresponding to different port sets of the third CSI-RS resource are different.

That the two RB sets are different means that any RB included in the two RB sets differs among the two RB sets.

In a possible design solution, the first information may indicate one or more of the following of the third CSI-RS resource occupied by the CSI-RS, to indicate the third CSI-RS resource: a quantity of ports of the CSI-RS in the third CSI-RS resource, a frequency domain density of the third CSI-RS resource, a CDM type of the CSI-RS in the third CSI-RS resource, start RBs corresponding to different port sets of the third CSI-RS resource, a start frequency domain position of a CDM group corresponding to an RB on which a CSI-RS in the third CSI-RS resource is located, and a start time domain position corresponding to the RB on which the CSI-RS in the third CSI-RS resource is located. The start frequency domain position of the CDM group corresponding to the RB on which the CSI-RS in the third CSI-RS resource is located may be the same or different for RBs corresponding to different port sets. Each port set of the third CSI-RS resource corresponds to one RB set, and a start RB corresponding to one port set of the third CSI-RS resource may also be referred to as a start RB of an RB set.

In this embodiment of this application, the first information may further indicate a start RB of each port set of the third CSI-RS resource.

It may be understood that, in this embodiment of this application, there are a plurality of CSI-RS port sets in the third CSI-RS resource, each port set of the third CSI-RS resource includes at least one port of the third CSI-RS resource, and any port differs among different port sets of the third CSI-RS resource.

In a possible design solution, the frequency domain density of the third CSI-RS resource is less than or equal to a first density threshold.

Optionally, the first density threshold is 0.5.

It is assumed that the quantity of ports of the CSI-RS in the third CSI-RS resource is 48, the frequency domain density of the CSI-RS resource is 0.5, 48 CSI-RS ports in the third CSI-RS resource include ports in a port set 1 and ports in a port set 2, the start frequency domain position of the CDM group corresponding to the RB on which the CSI-RS in the third CSI-RS resource is located includes a time domain unit 5 and a time domain unit 9, the start time domain position corresponding to the RB on which the CSI-RS in the third CSI-RS resource is located includes a frequency domain unit 0, a frequency domain unit 2, and a frequency domain unit 4, the third CSI-RS resource occupies four RBs, including an RB 0 to an RB 3, a start RB of a port set 0 to a port set 23 is the RB 0, and a start RB of a port set 24 to a port set 47 is an RB 1. In this case, content indicated by the first information is shown in the following Table 24.

Table 24

| $X$ | CDM type of the CSI-RS in a CSI-RS resource | $\rho$ | Start frequency domain positions of CDM groups corresponding to an RB on which a CSI-RS in the CSI-RS resource is located | Start time domain positions corresponding to the RB on which the CSI-RS in the CSI-RS resource is located | RB set | Start RB of the RB set |
|---|---|---|---|---|---|---|
| 48 | fd-CDM2 | 0.5 | 0, 2, 4 | 5, 9 | RB set 0 (port 0 to port 23) | RB 0 |
| | | | | | RB set 1 (port 24 to port 47) | RB 1 |

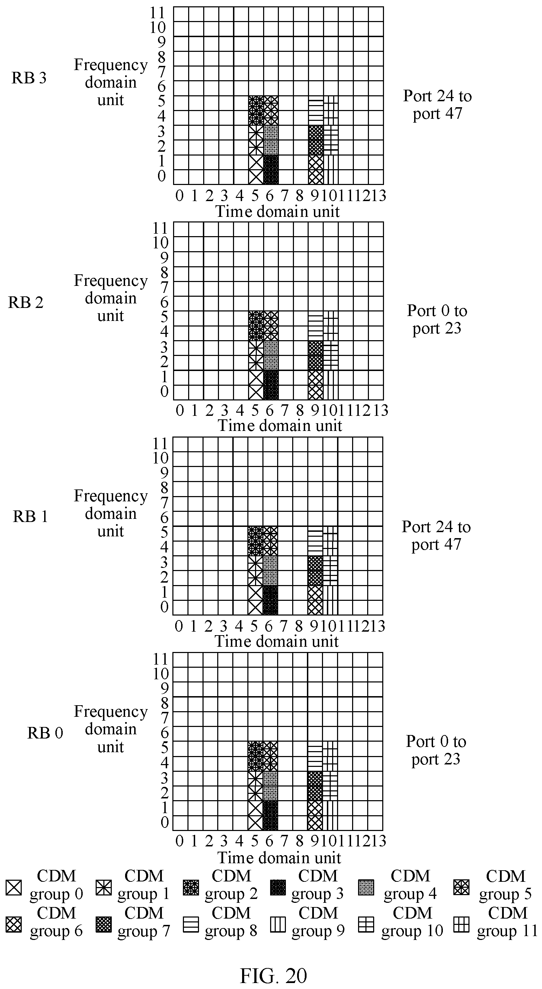

For example, the third CSI-RS resource occupies four RBs. In the four RBs, a port 0 to a port 23 occupy one RB in every two RBs, and a port 24 to a port 47 occupy one RB in every two RBs. As shown in FIG. 20, assuming that the four RBs occupied by the third CSI-RS resource include an RB 0 to an RB 3, it can be learned from Table 24 that the port 0 to the port 23 occupy the RB 0 and an RB 2, and the port 24 to the port 47 occupy an RB 1 and the RB 3.

Optionally, the first information may further indicate that a same port of the third CSI-RS resource corresponds to different RBs in two adjacent CSI-RS measurements. In this way, overheads can be reduced.

Further, on the third CSI-RS resource, an RB corresponding to a port $p$ in a $k$th CSI-RS measurement meets a relationship shown in the following formula (7):

$$P(k,p) = (P(0,p) + k) \bmod N \qquad (7)$$

$p$ represents a port index, $k$ represents the $k$th measurement, $P(0, p)$ represents a start frequency domain index of the port $p$ in an initial CSI-RS measurement, $P(k, p)$ is a frequency domain index of the port $p$ in the $k$th CSI-RS measurement, $N$

represents a parameter determined based on the frequency domain density of the third CSI-RS resource, and $k$ is a positive integer greater than or equal to 1. For example, $N$ may be a reciprocal of the frequency domain density. It may be understood that:

The frequency domain index is a frequency domain index in an RB group occupied by the CSI-RS resource occupied by the CSI-RS, and each RB group includes N contiguous RBs. There may be one or more RB groups.

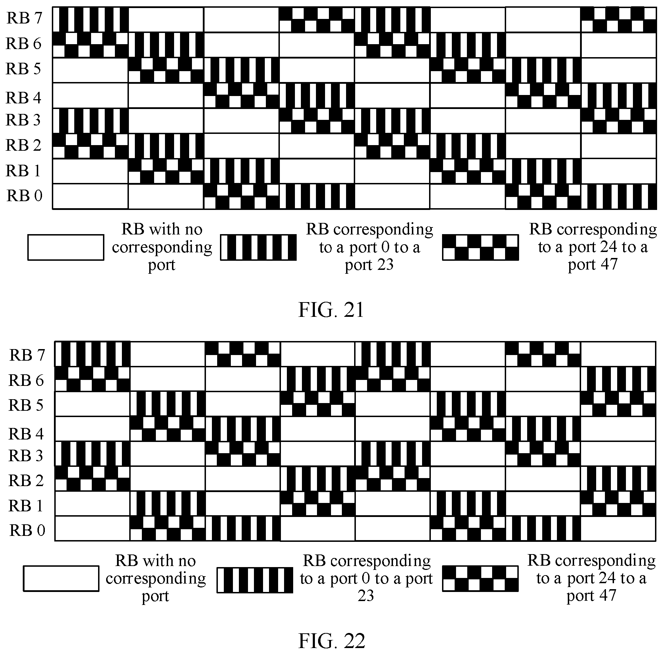

For example, the CSI-RS resource occupies eight RBs. If a start RB of a port 0 to a port 23 is an RB 3, a start RB of a port 24 to a port 47 is an RB 2, and the frequency domain density of the third CSI-RS resource is 0.25, RBs occupied by different port sets in a 1st CSI-RS measurement to an 8th CSI-RS measurement are shown in FIG. 21.

Further, the first information further indicates that the same port of the third CSI-RS resource corresponds to non-contiguous RBs in the two adjacent CSI-RS measurements. In this way, for a same port, CSI-RSs on more RBs can be measured, so that the accuracy of the channel measurement result is further improved.

Further, the first information further indicates a quantity of RBs between the RBs occupied by the same port of the third CSI-RS resource in the two adjacent CSI-RS measurements.

In this way, for a same port, CSI-RSs on more non-contiguous RBs can be measured, so that the accuracy of the channel measurement result can be further improved in a frequency selective channel.

For example, the CSI-RS resource occupies eight RBs. If in a 1st measurement, a start RB of a port 0 to a port 23 is an RB 3, a start RB of a port 24 to a port 47 is an RB 2, and there is one RB between RBs occupied by a same port set in two adjacent measurements, RBs occupied by different port sets in the 1st CSI-RS measurement to an 8th CSI-RS measurement are shown in FIG. 22.

S1902: The terminal device determines, based on the first information, the third CSI-RS resource occupied by the CSI-RS.

In this embodiment of this application, a fourth combination may be configured in the terminal device. The fourth combination includes a quantity of ports of the CSI-RS in a CSI-RS resource, a frequency domain density of the CSI-RS resource, a CDM type of the CSI-RS in the CSI-RS resource, and a time-frequency position corresponding to an RB on which a CSI-RS in the CSI-RS resource is located. In this case, the third CSI-RS resource determined by the terminal device is shown in FIG. 20.

S1903: The network device determines the third CSI-RS resource occupied by the CSI-RS.

The fourth combination may be preconfigured in the network device. The network device may first determine the quantity of ports of the CSI-RS in the CSI-RS resource, the frequency domain density of the CSI-RS resource, the CDM type of the CSI-RS in the CSI-RS resource, a start frequency domain position of a CDM group corresponding to the RB on which the CSI-RS in the CSI-RS resource is located, and a start time domain position corresponding to the RB on which the CSI-RS in the CSI-RS resource is located. Then, the network device determines, based on the quantity of ports of the CSI-RS in the CSI-RS resource, the frequency domain density of the CSI-RS resource, the CDM type of the CSI-RS in the CSI-RS resource, the start frequency domain position of the CDM group corresponding to the RB on which the CSI-RS in the CSI-RS resource is located, the start time domain position corresponding to the RB on which the CSI-RS in the CSI-RS resource is located, and the fourth combination, the CSI-RS resource occupied by the CSI-RS.

For an implementation principle of S1903, refer to related descriptions in S1902. Details are not described herein again.

It may be understood that, in the method provided in FIG. 19, an execution sequence of S1901, S1902, and S1903 is not limited. For example, S1903 may be performed before S1901, or S1902 may be performed after S1903. Details are not described herein.

S1904: The network device sends the CSI-RS on the third CSI-RS resource. Correspondingly, the terminal device receives the CSI-RS on the third CSI-RS resource.

For an implementation principle of S1904, refer to related descriptions in S104. Details are not described herein again.

S 1905: The terminal device sends CSI. Correspondingly, the network device receives the CSI from the terminal device. The CSI is obtained by measuring the CSI-RS.

For an implementation principle of S1905, refer to related descriptions in S105. Details are not described herein again.

Based on the channel measurement method provided in FIG. 19, the terminal device may receive the first information, receive the CSI-RS based on the CSI-RS resource that is occupied by the CSI-RS and that is indicated by the first information, and perform channel measurement. The CSI-RS resource occupied by the CSI-RS is the third CSI-RS resource, and different port sets in the third CSI-RS resource correspond to different RBs. In this way, a total quantity of ports corresponding to the CSI-RS resource occupied by the CSI-RS can be closer to a quantity of transmit antennas of the network device, to obtain more complete channel state information in a space domain dimension, and therefore accuracy of a channel measurement result is improved.

It may be understood that, in FIG. 12, FIG. 14, FIG. 17, and FIG. 19, that the quantity of ports of the CSI-RS in the CSI-RS resource is 48, 64, or 96 is merely used as an example. During actual implementation, the quantity of CSI-RS ports may be larger, for example, 128 or 256. Details are not described herein.

In addition, to enable the CSI-RS to correspond to more ports, and therefore further improve accuracy of channel state information, in some possible embodiments, at least two of the methods provided in FIG. 12, FIG. 14, FIG. 17, and FIG. 19 may be combined. In other words, content indicated by the first information may combine at least two of those in the methods provided in FIG. 12, FIG. 14, FIG. 17, and FIG. 19. In other words, the CSI-RS resource occupied by the CSI-RS meets one or more of the following: the CSI-RS resource occupied by the CSI-RS includes a first CSI-RS resource, where a resource block RB set occupied by the first CSI-RS resource corresponds to a plurality of orthogonal codes; the CSI-RS resource occupied by the CSI-RS includes a second CSI-RS resource, where start time domain positions corresponding to an RB on which a CSI-RS in the second CSI-RS resource is located include a start time domain position in a first set and a start time domain position in a second set, the first set and the second set each include at least one start time domain position, and any start time domain position in the second set is different from a start time domain position in the first set; the CSI-RS resource occupied by the CSI-RS includes a plurality of CSI-RS resources; or the CSI-RS resource occupied by the CSI-RS includes a third CSI-RS resource, where different port sets of the third CSI-RS resource correspond to different RB sets. In this way, a quantity of ports may be increased more. In other words, a quantity of ports of the CSI-RS in the CSI-RS resource may be increased more than a quantity of ports in any method provided in FIG. 12, FIG. 14, FIG. 17, and FIG. 19. The following further provides descriptions with reference to specific manners.

Manner 1: The solution provided in FIG. 12 is combined with the solution in FIG. 14, that is, RB-level OCCs are combined with time domain resource addition.

For specific implementation of the manner 1, refer to related descriptions of the solution provided in FIG. 12 and the solution provided in FIG. 14. For example, an RB set occupied by a CSI-RS resource includes two RBs, and RB-level OCCs are used. For the RB set, one RB-level OCC corresponds to 48 ports. A frequency domain density of the CSI-RS resource, a CDM type of the CSI-RS in the CSI-RS resource, start frequency domain positions of CDM groups corresponding to an RB on which a CSI-RS in the CSI-RS resource is located, and start time domain positions corresponding to the RB on which the CSI-RS in the CSI-RS resource is located are shown in the 2nd row in Table 21. The RB-level OCCs include [+1, +1] and [+1, -1]. In this case, a quantity of ports of the CSI-RS in the CSI-RS resource, the frequency domain density of the CSI-RS resource, the CDM type of the CSI-RS in the CSI-RS resource, the start frequency domain positions of the CDM groups corresponding to the RB on which the CSI-RS in the CSI-RS resource is located, and the start time domain positions corresponding to the RB on which the CSI-RS in the CSI-RS resource is located that are indicated by the first information are shown in Table 25.

Table 25

| $X$ | $\rho$ | CDM type of the CSI-RS in a CSI-RS resource | Start frequency domain positions of CDM groups corresponding to an RB on which a CSI-RS in the CSI-RS resource is located | Start time domain positions corresponding to the RB on which the CSI-RS in the CSI-RS resource is located | RB-level OCCs |
|---|---|---|---|---|---|
| 96 | 0.5 | fd-CDM2 | 0, 2, 4 | 5, 7, 9, 11 | [+1, +1]; [+1, -1] |

It can be learned that the quantity of ports of the CSI-RS in the CSI-RS resource indicated in Table 25 is twice the quantity of ports indicated in Table 17. The quantity of CSI-RS ports in the CSI-RS resource indicated in Table 26 is twice the quantity of ports indicated in the 2nd row in Table 22.

Manner 2: The solution in FIG. 12 is combined with the solution in FIG. 17, that is, RB-level OCCs are combined with CSI-RS resource addition.

For specific implementation of the manner 2, refer to related descriptions of the solution provided in FIG. 12 and the solution provided in FIG. 17.

For example, it is assumed that the CSI-RS occupies two CSI-RS resources: a CSI-RS resource 0 and a CSI-RS resource 1, each CSI-RS resource occupies two RBs, each CSI-RS resource includes 48 ports, and RB-level OCCs include [+1, +1] and [+1, -1]. In this case, parameters that are of each of the CSI-RS resource 0 and the CSI-RS resource 1 and that are indicated by the first information are shown in the following Table 26: a quantity of CSI-RS ports, a frequency domain density of the CSI-RS resource, a CDM type of the CSI-RS in the CSI-RS resource, start frequency domain positions of CDM groups corresponding to an RB on which a CSI-RS in the CSI-RS resource is located, and start time domain positions corresponding to the RB on which the CSI-RS in the CSI-RS resource is located.

Table 26

| CSI-RS resource | X | $\rho$ | CDM type of the CSI-RS in the CSI-RS resource | Start frequency domain positions of CDM groups corresponding to an RB on which a CSI-RS in the CSI-RS resource is located | Start time domain positions corresponding to the RB on which the CSI-RS in the CSI-RS resource is located | RB-level OCCs |
|---|---|---|---|---|---|---|
| CSI-RS resource 0 | 48 | 0.5 | fd-CDM2 | 0, 2, 4 | 5, 9 | [+1, +1]; [+1, -1] |
| CSI-RS resource 1 | 48 | 0.5 | fd-CDM2 | 0, 2, 4 | 7, 11 | [+1, +1]; [+1, -1] |

It can be learned that the quantity of ports of the CSI-RS indicated in Table 26 is twice the quantity of ports indicated in Table 16. A total quantity of ports in the CSI-RS resources indicated in Table 26 is twice the quantity of ports of the CSI-RS in the CSI-RS resources indicated in Table 24.

Manner 3: The solution in FIG. 12 is combined with the solution in FIG. 19, that is, RB-level OCCs are combined with port set combing.

For specific implementation of the manner 3, refer to related descriptions of the solution provided in FIG. 12 and the solution provided in FIG. 19.

It is assumed that port sets, X, a CDM type of the CSI-RS in a CSI-RS resource, a frequency domain density of the CSI-RS port in the CSI-RS resource, start frequency domain positions of CDM groups corresponding to an RB on which a CSI-RS in the CSI-RS resource is located, and start time domain positions corresponding to the RB on which the CSI-RS in the CSI-RS resource is located that are indicated by the first information are shown in Table 18. Two port sets of the CSI-RS resource each occupy four RBs, and corresponding RB-level OCCs include [+1, +1] and [+1, -1]. In this case, content indicated by the first information is shown in Table 27.

Table 27

| X | CDM type of the CSI-RS in a CSI-RS resource | $\rho$ | Start frequency domain positions of CDM groups corresponding to an RB on which a CSI-RS in the CSI-RS resource is located | Start time domain positions corresponding to the RB on which the CSI-RS in the CSI-RS resource is located | RB set | Start RB of the RB set |
|---|---|---|---|---|---|---|
| 96 | fd-CDM2 | 0.25 | 0, 2, 4 | 5, 9 | RB set 2 | RB 0 |
| | | | | | RB set 3 | RB 2 |

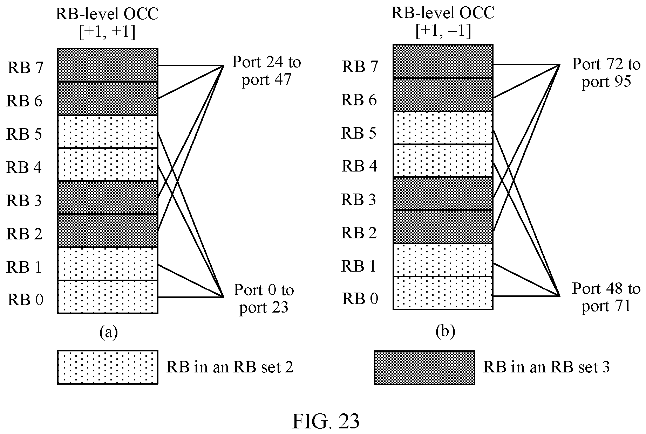

It is assumed that the CSI-RS resource occupies eight RBs in total, and the first information is shown in Table 27. In this case, a relationship between each RB and an RB-level OCC is shown in FIG. 23. In the CSI-RS indicated by the first information corresponding to Table 27, a correspondence between an RB set, a port set, an RB-level OCC, and ports in the CSI-RS port set in the CSI-RS resource is shown in Table 28.

Table 28

| RB set | RB-level OCC | CSI-RS ports in the CSI-RS resource |
|---|---|---|
| RB set 2 | [+1, +1] | Port 0 to port 48 |
| | [+1, -1] | Port 24 to port 47 |
| RB set 3 | [+1, +1] | Port 48 to port 71 |
| | [+1, -1] | Port 72 to port 95 |

Assuming that the CSI-RS occupies eight RBs, CSI-RS-occupied REs in each RB are shown in FIG. 23.

It can be learned that a total quantity of ports in the CSI-RS resource indicated in Table 27 is twice the quantity of ports indicated in Table 17. The total quantity of ports in the CSI-RS resource indicated in Table 27 is twice the quantity of ports of the CSI-RS in the CSI-RS resource indicated in Table 24. In other words, the quantity of ports of the CSI-RS in the manner 3 is a multiple of, for example, twice, the quantity of ports of the CSI-RS in the solution shown in FIG. 12. The quantity of ports of the CSI-RS in the manner 3 is a multiple of, for example, twice, the quantity of ports of the CSI-RS in FIG. 19.

Manner 4: The solution in FIG. 14 is combined with the solution in FIG. 17, that is, time domain resource addition is combined with CSI-RS resource addition.

For specific implementation of the manner 4, refer to related descriptions of the solution provided in FIG. 14 and the solution provided in FIG. 17. Details are not described herein again. In this case, a quantity of ports of the CSI-RS in the manner 4 is a multiple of, for example, twice, the quantity of ports of the CSI-RS in the solution shown in FIG. 14. The quantity of ports of the CSI-RS in the manner 4 is a multiple of, for example, twice, the quantity of ports of the CSI-RS in FIG. 17.

Manner 5: The solution in FIG. 14 is combined with the solution in FIG. 19, that is, time domain resource addition is combined with port set combing.

For specific implementation of the manner 5, refer to related descriptions of the solution provided in FIG. 14 and the solution provided in FIG. 19. Details are not described herein again. In this case, a quantity of ports of the CSI-RS in the manner 5 is a multiple of, for example, twice, the quantity of ports of the CSI-RS in the solution shown in FIG. 14. The quantity of ports of the CSI-RS in the manner 4 is a multiple of, for example, twice, the quantity of ports of the CSI-RS in FIG. 19.

Manner 6: The solution in FIG. 17 is combined with the solution in FIG. 19, that is, CSI-RS resource addition is combined with port set combing.

For specific implementation of the manner 6, refer to related descriptions of the solution provided in FIG. 17 and the solution provided in FIG. 19.

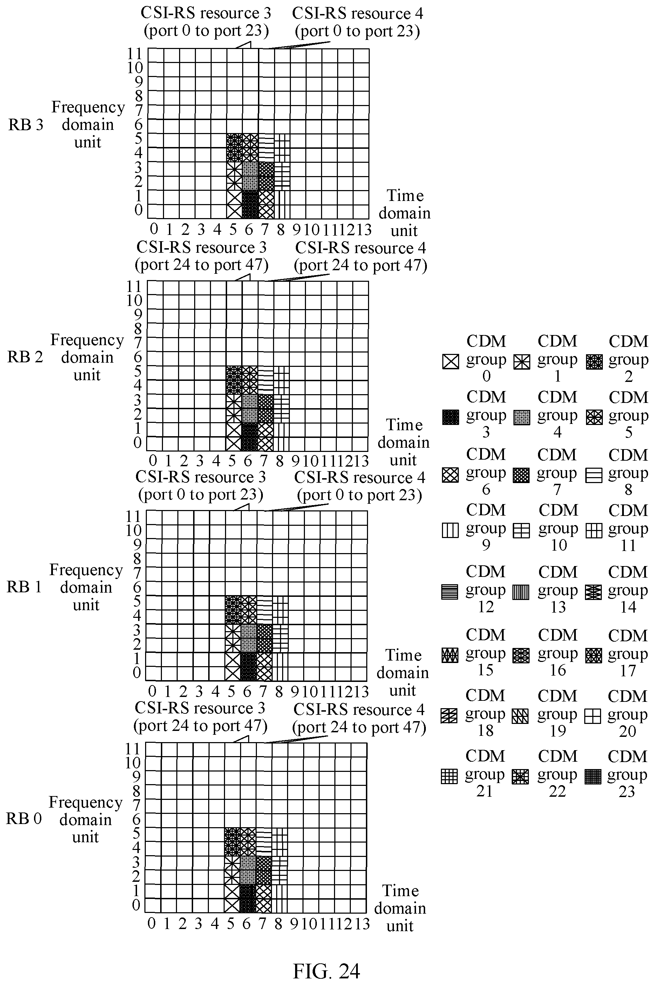

For example, a quantity of ports in one RB on which a CSI-RS is located is 24. It is assumed that two CSI-RS resources are configured: a CSI-RS resource 2 and a CSI-RS resource 3. The two resources indicated by the first information are shown in the following Table 29. In this case, CSI-RS-occupied REs are shown in FIG. 24.

Table 29

| CSI-RS resource | $X$ | CDM type of the CSI-RS in the CSI-RS resource | $\rho$ | Start frequency domain positions of CDM groups corresponding to an RB on which a CSI-RS in the CSI-RS resource is located | Start time domain positions corresponding to the RB on which the CSI-RS in the CSI-RS resource is located | Port set | Start RB of the port set |
|---|---|---|---|---|---|---|---|
| CSI-RS resource 2 | 48 | fd-CDM2 | 0.5 | 0, 2, 4 | 5, 9 | Port 0 to port 23 | RB 0 |
| | | | | | | Port 24 to port 47 | RB 1 |
| CSI-RS resource 3 | 48 | fd-CDM2 | 0.5 | 0, 2, 4 | 7, 11 | Port 0 to port 23 | RB 0 |
| | | | | | | Port 24 to port 47 | RB 1 |

Manner 7: The solution provided in FIG. 12, the solution provided in FIG. 14, and the solution provided in FIG. 17 are combined.

For specific implementation of the manner 7, refer to related descriptions of the solution provided in FIG. 12, the solution provided in FIG. 14, and the solution provided in FIG. 17. Details are not described herein again. In this case, a quantity of ports of the CSI-RS in the manner 7 is a multiple of, for example, three times or four times, the quantity of ports of the CSI-RS in any one of the solutions provided in FIG. 12, FIG. 14, and FIG. 17.

Manner 8: The solution provided in FIG. 12, the solution provided in FIG. 14, and the solution provided in FIG. 19 are combined.

For specific implementation of the manner 8, refer to related descriptions of the solution provided in FIG. 12, the solution provided in FIG. 14, and the solution provided in FIG. 19. Details are not described herein again. In this case, a quantity of ports of the CSI-RS in the manner 8 is a multiple of, for example, three times or four times, the quantity of ports of the CSI-RS in any one of the solutions provided in FIG. 12, FIG. 14, and FIG. 19.

Manner 9: The solution provided in FIG. 12, the solution provided in FIG. 17, and the solution provided in FIG. 19 are combined.

For specific implementation of the manner 9, refer to related descriptions of the solution provided in FIG. 12, the solution provided in FIG. 17, and the solution provided in FIG. 19. Details are not described herein again. In this case, a quantity of ports of the CSI-RS in the manner 9 is a multiple of, for example, three times or four times, the quantity of ports of the CSI-RS in any one of the solutions provided in FIG. 12, FIG. 17, and FIG. 19.

Manner 10: The solution provided in FIG. 14, the solution provided in FIG. 17, and the solution provided in FIG. 19 are combined.

For specific implementation of the manner 10, refer to related descriptions of the solution provided in FIG. 12, the solution provided in FIG. 17, and the solution provided in FIG. 19. Details are not described herein again. In this case, a quantity of ports of the CSI-RS in the manner 10 is a multiple of, for example, three times or four times, the quantity of ports of the CSI-RS in any one of the solutions provided in FIG. 12, FIG. 17, and FIG. 19.

Manner 11: The solution provided in FIG. 12, the solution provided in FIG. 14, the solution provided in FIG. 17, and the solution provided in FIG. 19 are combined.

For specific implementation of the manner 11, refer to related descriptions of the solution provided in FIG. 12, the solution provided in FIG. 14, the solution provided in FIG. 17, and the solution provided in FIG. 19. Details are not described herein again. In this case, a quantity of ports of the CSI-RS in the manner 10 is a multiple of, for example, four times, the quantity of ports of the CSI-RS in any one of the solutions provided in FIG. 12, FIG. 14, FIG. 17, and FIG. 19.

In conclusion, according to the channel measurement method provided in embodiments of this application, the terminal device may receive the first information. The first information may indicate the CSI-RS resource occupied by the CSI-RS. The CSI-RS resource occupied by the CSI-RS corresponds to the plurality of orthogonal codes, and/or the start time domain positions include the start time domain position in the first set and the start time domain position in the second set, and/or the CSI-RS resource occupied by the CSI-RS includes the plurality of CSI-RS resources, and/or different port sets correspond to different RBs. In this way, the quantity of ports corresponding to the CSI-RS can be larger, and can be closer to the quantity of transmit antennas of the network device. In this case, through channel measurement based on the CSI-RS, a result of channel measurement can be more accurate, so that more complete channel state information in a space domain dimension can be obtained, and precision of the channel state information is improved.

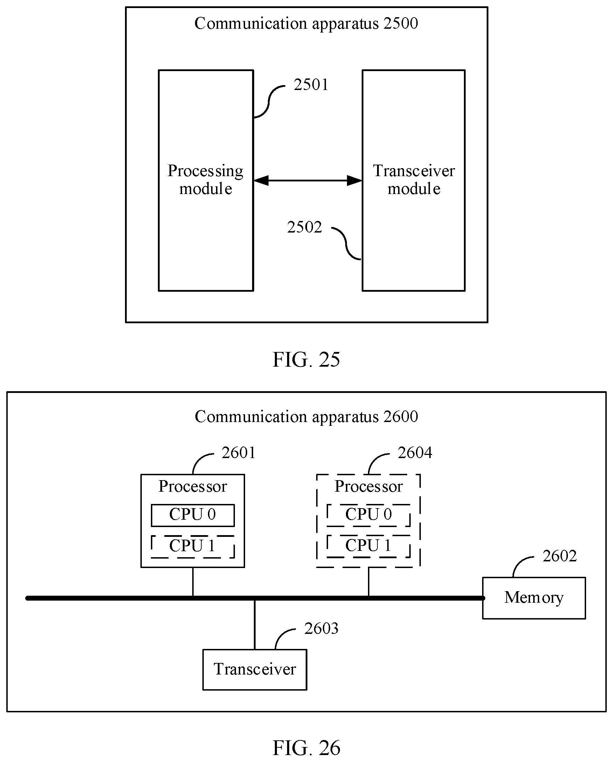

The foregoing describes in detail, with reference to FIG. 12 to FIG. 24, the channel measurement methods provided in embodiments of this application. The following describes in detail, with reference to FIG. 25 and FIG. 26, communication apparatuses configured to perform the channel measurement methods provided in embodiments of this application.

For example, FIG. 25 is a diagram of a structure of a communication apparatus according to an embodiment of this application. As shown in FIG. 25, the communication apparatus 2500 includes a processing module 2501 and a transceiver module 2502. For ease of description, FIG. 25 shows only main parts of the communication apparatus 2500.

In some embodiments, the communication apparatus 2500 may be applied to the communication system shown in FIG. 11, and performs functions of the terminal device in the channel measurement method shown in FIG. 12, FIG. 14, FIG. 17, or FIG. 19.

The transceiver module 2502 is configured to receive first information from a network device, where the first information indicates a CSI-RS resource occupied by a CSI-RS, and the CSI-RS resource occupied by the CSI-RS meets one or more of the following: the CSI-RS resource occupied by the CSI-RS includes a first CSI-RS resource, where an RB set occupied by the first CSI-RS resource corresponds to a plurality of orthogonal codes; the CSI-RS resource occupied by the CSI-RS includes a second CSI-RS resource, where start time domain positions corresponding to an RB on which a CSI-RS in the second CSI-RS resource is located include a start time domain position in a first set and a start time domain position in a second set, the first set and the second set each include at least one start time domain position, and any start time domain position in the second set is different from a start time domain position in the first set; the CSI-RS resource occupied by the CSI-RS includes a plurality of CSI-RS resources; or the CSI-RS resource occupied by the CSI-RS includes a third CSI-RS resource, where different port sets of the third CSI-RS resource correspond to different RB sets.

The transceiver module 2502 is further configured to receive the CSI-RS from the network device on the CSI-RS resource occupied by the CSI-RS.

The processing module 2501 is further configured to generate CSI, where the CSI is obtained by measuring the CSI-RS.

The transceiver module 2502 is further configured to send the CSI to the network device.

In a possible design solution, the first information includes the plurality of orthogonal codes corresponding to the RB set occupied by the first CSI-RS resource.

In a possible design solution, a quantity of start time domain positions in the first set and a quantity of start time domain positions in the second set each are related to one or more of the following: a quantity of ports of the CSI-RS in the second CSI-RS resource, a CDM type of the CSI-RS in the second CSI-RS resource, or a quantity of start frequency domain positions of a CDM group corresponding to the RB on which the CSI-RS in the second CSI-RS resource is located.

In a possible design solution, the quantity of ports of the CSI-RS in the second CSI-RS resource is 48, the CDM type of the CSI-RS in the second CSI-RS resource is that two ports are multiplexed on two REs, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 48, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 48, the CDM type of the CSI-RS in the CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$, and the start time domain position in the second set includes a time domain unit $l_1$.

In a possible design solution, the quantity of ports of the CSI-RS in the second CSI-RS resource is 64, the CDM type of the CSI-RS in the second CSI-RS resource is that two ports are multiplexed on two REs, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 64, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 64, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$, and the start time domain position in the second set includes a time domain unit $l_1$.

In a possible design solution, a frequency domain density of the third CSI-RS resource is less than or equal to a first density threshold.

Optionally, the first density threshold is 0.5.

Optionally, the first information further indicates that a same port of the third CSI-RS resource corresponds to different RBs in two adjacent CSI-RS measurements.

Further, on the third CSI-RS resource, an RB corresponding to a port $p$ in a $k^{th}$ CSI-RS measurement satisfies the following relationship: $P(k,p) = (P(0, p) + k) \bmod N$, where $p$ represents a port index, $k$ represents the $k^{th}$ measurement, $P(0, p)$ represents a start frequency domain index of the port $p$ in an initial CSI-RS measurement, $P(k, p)$ is a frequency domain index of the port $p$ in the $k^{th}$ CSI-RS measurement, $N$ represents a parameter determined based on the frequency domain density of the third CSI-RS resource, and $k$ is a positive integer greater than or equal to 1.

Further, the first information further indicates that the same port of the third CSI-RS resource corresponds to non-contiguous RBs in the two adjacent CSI-RS measurements.

Further, the first information further indicates a quantity of RBs between the RBs occupied by the same port of the third CSI-RS resource in the two adjacent CSI-RS measurements.

In a possible design solution, the first information includes one or more of the following of each CSI-RS resource in the CSI-RS resource occupied by the CSI-RS: a quantity of ports corresponding to an RB on which the CSI-RS resource is located, a CDM type of the CSI-RS in the CSI-RS resource, a start time domain position corresponding to an RB on which a CSI-RS in each CSI-RS resource is located, and a start frequency domain position of a CDM group corresponding to the RB on which the CSI-RS in each CSI-RS resource is located.

Optionally, the transceiver module 2502 may include a receiving module and a sending module (not shown in FIG. 25). The transceiver module 2502 is configured to implement a sending function and a receiving function of the communication apparatus 2500.

Optionally, the communication apparatus 2500 may further include a storage module (not shown in FIG. 25). The storage module stores a program or instructions. When the processing module 2501 executes the program or the instructions, the communication apparatus 2500 may be enabled to perform functions of the terminal device in the channel measurement method shown in any one of FIG. 12, FIG. 14, FIG. 17, or FIG. 19.

It should be understood that the processing module 2501 in the communication apparatus 2500 may be implemented by a processor or a processor-related circuit component, and may be a processor or a processing unit. The transceiver module 2502 may be implemented by a transceiver or a transceiver-related circuit component, and may be a transceiver or a transceiver unit.

It should be noted that the communication apparatus 2500 may be a terminal device, may be a chip (system) or another part or component that may be disposed in the terminal device, or may be an apparatus including the terminal device. This is not limited in this application.

In addition, for technical effect of the communication apparatus 2500, refer to the technical effect of the channel measurement method shown in any one of FIG. 12, FIG. 14, FIG. 17, or FIG. 19. Details are not described herein again.

In some other embodiments, the communication apparatus 2500 may be applied to the communication system shown in FIG. 11, and performs functions of the network device in the channel measurement method shown in FIG. 12, FIG. 14, FIG. 17, or FIG. 19.

The processing module 2501 is configured to generate first information.

The transceiver module 2502 is configured to send the first information to a terminal device, where the first information indicates a CSI-RS resource occupied by a CSI-RS, and the CSI-RS resource occupied by the CSI-RS meets one or more of the following: the CSI-RS resource occupied by the CSI-RS includes a first CSI-RS resource, where an RB set occupied by the first CSI-RS resource corresponds to a plurality of orthogonal codes; the CSI-RS resource occupied by the CSI-RS includes a second CSI-RS resource, where start time domain positions corresponding to an RB on which a CSI-RS in the second CSI-RS resource is located include a start time domain position in a first set and a start time domain position in a second set, the first set and the second set each include at least one start time domain position, and any start time domain position in the second set is different from a start time domain position in the first set; the CSI-RS resource occupied by the CSI-RS includes a plurality of CSI-RS resources; or the CSI-RS resource occupied by the CSI-RS includes a third CSI-RS resource, where different port sets of the third CSI-RS resource correspond to different RB sets.

The transceiver module 2502 is further configured to send the CSI-RS to the terminal device on the CSI-RS resource occupied by the CSI-RS.

The transceiver module 2502 is further configured to receive CSI from the terminal device, where the CSI is obtained by measuring the CSI-RS.

In a possible design solution, the first information includes the plurality of orthogonal codes corresponding to the RB set occupied by the first CSI-RS resource.

In a possible design solution, a quantity of start time domain positions in the first set and a quantity of start time domain positions in the second set each are related to one or more of the following: a quantity of ports of the CSI-RS in the second CSI-RS resource, a CDM type of the CSI-RS in the second CSI-RS resource, or a quantity of start frequency domain positions of a CDM group corresponding to the RB on which the CSI-RS in the second CSI-RS resource is located.

In a possible design solution, the quantity of ports of the CSI-RS in the second CSI-RS resource is 48, the CDM type of the CSI-RS in the second CSI-RS resource is that two ports are multiplexed on two REs, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 48, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 48, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located includes a frequency domain unit $k_0$, a frequency domain unit $k_1$, and a frequency domain unit $k_2$, the start time domain position in the first set includes a time domain unit $l_0$, and the start time domain position in the second set includes a time domain unit $l_1$.

In a possible design solution, the quantity of ports of the CSI-RS in the second CSI-RS resource is 64, the CDM type of the CSI-RS in the second CSI-RS resource is that two ports are multiplexed on two REs, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 64, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$ and a time domain unit $l_1$, and the start time domain position in the second set includes a time domain unit $l_2$ and a time domain unit $l_3$.

In a possible design solution, the quantity of ports of the CSI-RS in the second CSI-RS resource is 64, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located includes a frequency domain unit $k_0$, a frequency domain unit $k_1$, a frequency domain unit $k_2$, and a frequency domain unit $k_3$, the start time domain position in the first set includes a time domain unit $l_0$, and the start time domain position in the second set includes a time domain unit $l_1$.

In a possible design solution, a frequency domain density of the third CSI-RS resource is less than or equal to a first density threshold.

Optionally, the first density threshold is 0.5.

Optionally, the first information further indicates that a same port of the third CSI-RS resource corresponds to different RBs in two adjacent CSI-RS measurements.

Further, on the third CSI-RS resource, an RB corresponding to a port $p$ in a $k^{th}$ CSI-RS measurement satisfies the following relationship: $P(k,p) = (P(0, p) + k) \bmod N$, where $p$ represents a port index, $k$ represents the $k^{th}$ measurement, $P(0, p)$ represents a start frequency domain index of the port $p$ in an initial CSI-RS measurement, $P(k, p)$ is a frequency domain index of the port $p$ in the $k^{th}$ CSI-RS measurement, $N$ represents a parameter determined based on the frequency domain density of the third CSI-RS resource, and $k$ is a positive integer greater than or equal to 1.

Further, the first information further indicates that the same port of the third CSI-RS resource corresponds to non-contiguous RBs in the two adjacent CSI-RS measurements.

Further, the first information further indicates a quantity of RBs between the RBs occupied by the same port of the third CSI-RS resource in the two adjacent CSI-RS measurements.

In a possible design solution, the first information includes one or more of the following of each CSI-RS resource in the CSI-RS resource occupied by the CSI-RS: a quantity of ports corresponding to an RB on which the CSI-RS resource is located, a CDM type of the CSI-RS in the CSI-RS resource, a start time domain position corresponding to an RB on which a CSI-RS in each CSI-RS resource is located, and a start frequency domain position of a CDM group corresponding to the RB on which the CSI-RS in each CSI-RS resource is located.

Optionally, the transceiver module 2502 may include a receiving module and a sending module (not shown in FIG. 25). The transceiver module 2502 is configured to implement a sending function and a receiving function of the communication apparatus 2500.

Optionally, the communication apparatus 2500 may further include a storage module (not shown in FIG. 25). The storage module stores a program or instructions. When the processing module 2501 executes the program or the instructions, the communication apparatus 2500 may be enabled to perform functions of the network device in the channel measurement method shown in any one of FIG. 12, FIG. 14, FIG. 17, or FIG. 19.

It should be understood that the processing module 2501 in the communication apparatus 2500 may be implemented by a processor or a processor-related circuit component, and may be a processor or a processing unit. The transceiver module 2502 may be implemented by a transceiver or a transceiver-related circuit component, and may be a transceiver or a transceiver unit.

It should be noted that the communication apparatus 2500 may be a network device, may be a chip (system) or another part or component that may be disposed in the network device, or may be an apparatus including the network device. This is not limited in this application.

In addition, for technical effect of the communication apparatus 2500, refer to the technical effect of the channel measurement method shown in any one of FIG. 12, FIG. 14, FIG. 17, or FIG. 19. Details are not described herein again.

For example, FIG. 26 is a diagram of a structure of another communication apparatus according to an embodiment of this application. The communication apparatus may be a terminal device or a network device, or may be a chip (system) or another part or component that may be disposed in the terminal device or the network device. As shown in FIG. 26, the communication apparatus 2600 may include a processor 2601. Optionally, the communication apparatus 2600 may further include a memory 2602 and/or a transceiver 2603. The processor 2601 is coupled to the memory 2602 and the transceiver 2603, for example, may be connected to the memory 2602 and the transceiver 2603 through a communication bus.

The following describes in detail each part of the communication apparatus 2600 with reference to FIG. 26.

The processor 2601 is a control center of the communication apparatus 2600, and may be one processor or may be a collective term of a plurality of processing elements. For example, the processor 2601 is one or more central processing units (central processing units, CPUs), or may be an application-specific integrated circuit (application-specific integrated circuit, ASIC) or one or more integrated circuits configured to implement embodiments of this application, for example, one or more digital signal processors (digital signal processors, DSPs) or one or more field programmable gate arrays (field programmable gate arrays, FPGAs).

Optionally, the processor 2601 may perform various functions of the communication apparatus 2600 by running or executing a software program stored in the memory 2602 and invoking data stored in the memory 2602.

During specific implementation, in an embodiment, the processor 2601 may include one or more CPUs, for example, a CPU 0 and a CPU 1 in FIG. 26.

During specific implementation, in an embodiment, the communication apparatus 2600 may also include a plurality of processors, for example, the processor 2601 and a processor 2604 shown in FIG. 26. Each of the processors may be a single-core (single-CPU) processor, or may be a multi-core (multi-CPU) processor. The processor herein may be one or more devices, circuits, and/or processing cores configured to process data (for example, computer program instructions).

The memory 2602 is configured to store a software program for executing the solutions of this application, and the processor 2601 controls execution. For a specific implementation, refer to the foregoing method embodiments. Details are not described herein again.

Optionally, the memory 2602 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in an instruction form or a data structure form and that can be accessed by a computer. However, the memory 2602 is not limited thereto. The memory 2602 may be integrated with the processor 2601, or may exist independently, and is coupled to the processor 2601 through an interface circuit (not shown in FIG. 26) of the communication apparatus 2600. This is not specifically limited in this embodiment of this application.

The transceiver 2603 is configured to communicate with another communication apparatus. For example, the communication apparatus 2600 is a terminal device, and the transceiver 2603 may be configured to communicate with a network device or communicate with another terminal device. For another example, the communication apparatus 2600 is a network device, and the transceiver 2603 may be configured to communicate with a terminal device or communicate with another network device.

Optionally, the transceiver 2603 may include a receiver and a transmitter (not separately shown in FIG. 26). The receiver is configured to implement a receiving function, and the transmitter is configured to implement a sending function.

Optionally, the transceiver 2603 may be integrated with the processor 2601, or may exist independently, and is coupled to the processor 2601 through the interface circuit (not shown in FIG. 26) of the communication apparatus 2600. This is not specifically limited in this embodiment of this application.

It should be noted that the structure of the communication apparatus 2600 shown in FIG. 26 does not constitute a limitation on the communication apparatus. An actual communication apparatus may include more or fewer parts than those shown in the figure, or combine some parts, or have different part arrangements.

In addition, for technical effect of the communication apparatus 2600, refer to the technical effect of the channel measurement method in the foregoing method embodiments. Details are not described herein again.

It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM and is used as an external cache. By way of example, and not limitation, RAMs in various forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement the embodiments, all or some of the embodiments may be implemented in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A channel measurement method, wherein the method comprises:
    receiving first information from a network device, wherein the first information indicates a channel state information reference signal CSI-RS resource occupied by a CSI-RS, and the CSI-RS resource occupied by the CSI-RS meets one or more of the following:

    the CSI-RS resource occupied by the CSI-RS comprises a first CSI-RS resource, wherein a resource block RB set occupied by the first CSI-RS resource corresponds to a plurality of orthogonal codes;
    the CSI-RS resource occupied by the CSI-RS comprises a second CSI-RS resource, wherein start time domain positions corresponding to an RB on which a CSI-RS in the second CSI-RS resource is located comprise a start time domain position in a first set and a start time domain position in a second set, the first set and the second set each comprise at least one start time domain position, and any start time domain position in the second set is different from a start time domain position in the first set;
    the CSI-RS resource occupied by the CSI-RS comprises a plurality of CSI-RS resources; or
    the CSI-RS resource occupied by the CSI-RS comprises a third CSI-RS resource, wherein different port sets of the third CSI-RS resource correspond to different RB sets;
    receiving the CSI-RS from the network device on the CSI-RS resource occupied by the CSI-RS; and
    sending channel state information CSI to the network device, wherein the CSI is obtained by measuring the CSI-RS.

2.  The method according to claim 1, wherein the first information comprises the plurality of orthogonal codes corresponding to the RB set occupied by the first CSI-RS resource.

3.  The method according to claim 1, wherein a quantity of start time domain positions in the first set and a quantity of start time domain positions in the second set each are related to one or more of the following: a quantity of ports of the CSI-RS in the second CSI-RS resource, a code division multiplexing CDM type of the CSI-RS in the second CSI-RS resource, or a quantity of start frequency domain positions of a CDM group corresponding to the RB on which the CSI-RS in the second CSI-RS resource is located.

4.  The method according to claim 1 or 3, wherein the quantity of ports of the CSI-RS in the second CSI-RS resource is 48, the CDM type of the CSI-RS in the second CSI-RS resource is that two ports are multiplexed on two resource elements REs, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$ and a time domain unit $l_1$, and the start time domain position in the second set comprises a time domain unit $l_2$ and a time domain unit $l_3$.

5.  The method according to claim 1 or 3, wherein the quantity of ports of the CSI-RS in the second CSI-RS resource is 48, the CDM type of the CSI-RS in the second CSI-RS resource is that four ports are multiplexed on a total of four REs corresponding to two frequency domain units at different frequency domain positions and two time domain units, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$ and a time domain unit $l_1$, and the start time domain position in the second set comprises a time domain unit $l_2$ and a time domain unit $l_3$.

6. The method according to claim 1 or 3, wherein the quantity of ports of the CSI-RS in the second CSI-RS resource is 48, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$, and the start time domain position in the second set comprises a time domain unit $l_1$.

7. The method according to claim 1 or 3, wherein the quantity of ports of the CSI-RS in the second CSI-RS resource is 64, the CDM type of the CSI-RS in the second CSI-RS resource is that two ports are multiplexed on two REs, a CDM group corresponding to an RB on which the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$ and a time domain unit $l_1$, and the start time domain position in the second set comprises a time domain unit $l_2$ and a time domain unit $l_3$.

8. The method according to claim 1 or 3, wherein the quantity of ports of the CSI-RS in the second CSI-RS resource is 64, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$ and a time domain unit $l_1$, and the start time domain position in the second set comprises a time domain unit $l_2$ and a time domain unit $l_3$.

9. The method according to claim 1 or 3, wherein the quantity of ports of the CSI-RS in the second CSI-RS resource is 64, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$, and the start time domain position in the second set comprises a time domain unit $l_1$.

10. The method according to claim 1, wherein a frequency domain density of the third CSI-RS resource is less than or equal to a first density threshold.

11. The method according to claim 10, wherein the first density threshold is 0.5.

12. The method according to claim 10 or 11, wherein the first information further indicates that a same port of the third CSI-RS resource corresponds to different RBs in two adjacent CSI-RS measurements.

13. The method according to claim 12, wherein on the third CSI-RS resource, an RB corresponding to a port $p$ in a $k^{th}$ CSI-RS measurement satisfies the following relationship:

$$P(k,p) = (P(0,p) + k) \bmod N,$$

wherein
$p$ represents a port index, $k$ represents the $k^{th}$ measurement, $P(0,p)$ represents a start frequency domain index of the port $p$ in an initial CSI-RS measurement, $P(k, p)$ is a frequency domain index of the port $p$ in the $k^{th}$ CSI-RS measurement, $N$ represents a parameter determined based on the frequency domain density of the third CSI-RS resource, and $k$ is a positive integer greater than or equal to 1.

14. The method according to claim 12, wherein the first information further indicates that the same port of the third CSI-RS resource corresponds to non-contiguous RBs in the two adjacent CSI-RS measurements.

15. The method according to claim 14, wherein the first information further indicates a quantity of RBs between the RBs occupied by the same port of the third CSI-RS resource in the two adjacent CSI-RS measurements.

16. The method according to any one of claims 1 to 15, wherein the first information comprises one or more of the following of each CSI-RS resource in the CSI-RS resource occupied by the CSI-RS: a quantity of ports corresponding to an RB on which the CSI-RS is located, a CDM type of the CSI-RS in the CSI-RS resource, a start time domain position corresponding to the RB on which the CSI-RS in the CSI-RS resource is located, and a start frequency domain position of a CDM group corresponding to the RB on which the CSI-RS in the CSI-RS resource is located.

17. A channel measurement method, wherein the method comprises:
sending first information to a terminal device, wherein the first information indicates a CSI-RS resource occupied by a channel state information reference signal CSI-RS, and the CSI-RS resource occupied by the CSI-RS meets one or more of the following:

the CSI-RS resource occupied by the CSI-RS comprises a first CSI-RS resource, wherein a resource block RB set occupied by the first CSI-RS resource corresponds to a plurality of orthogonal codes;
the CSI-RS resource occupied by the CSI-RS comprises a second CSI-RS resource, wherein start time domain positions corresponding to an RB on which a CSI-RS in the second CSI-RS resource is located comprise a start time domain position in a first set and a start time domain position in a second set, the first set and the second set each comprise at least one start time domain position, and any start time domain position in the second set is different from a start time domain position in the first set;
the CSI-RS resource occupied by the CSI-RS comprises a plurality of CSI-RS resources; or
the CSI-RS resource occupied by the CSI-RS comprises a third CSI-RS resource, wherein different port sets of the third CSI-RS resource correspond to different RB sets;
sending the CSI-RS to the terminal device on the CSI-RS resource occupied by the CSI-RS; and
receiving channel state information CSI from the terminal device, wherein the CSI is obtained by measuring the CSI-RS.

18. The method according to claim 17, wherein the first information comprises the plurality of orthogonal codes corresponding to the RB set occupied by the first CSI-RS resource.

19. The method according to claim 17, wherein a quantity of start time domain positions in the first set and a quantity of start time domain positions in the second set each are related to one or more of the following: a quantity of ports of the CSI-RS in the second CSI-RS resource, a code division multiplexing CDM type of the CSI-RS in the second CSI-RS resource, or a quantity of start frequency domain positions of a CDM group corresponding to the RB on which the CSI-RS in the second CSI-RS resource is located.

20. The method according to claim 17 or 19, wherein the quantity of ports of the CSI-RS in the second CSI-RS resource is 48, the CDM type of the CSI-RS in the second CSI-RS resource is that two ports are multiplexed on two resource elements REs, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$ and a time domain unit $l_1$, and the start time domain position in the second set comprises a time domain unit $l_2$ and a time domain unit $l_3$.

21. The method according to claim 17 or 19, wherein the quantity of ports of the CSI-RS in the second CSI-RS resource is 48, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$ and a time domain unit $l_1$, and the start time domain position in the second set comprises a time domain unit $l_2$ and a time domain unit $l_3$.

22. The method according to claim 17 or 19, wherein the quantity of ports of the CSI-RS in the second CSI-RS resource is 48, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$, and the start time domain position in the second set comprises a time domain unit $l_1$.

23. The method according to claim 17 or 19, wherein the quantity of ports of the CSI-RS in the second CSI-RS resource is 64, the CDM type of the CSI-RS in the second CSI-RS resource is that two ports are multiplexed on two REs, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$ and a time domain unit $l_1$, and the start time domain position in the second set comprises a time domain unit $l_2$ and a time domain unit $l_3$.

24. The method according to claim 17 or 19, wherein the quantity of ports of the CSI-RS in the second CSI-RS resource is 64, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$ and a time domain unit $l_1$, and the start time domain position in the second set comprises a time domain unit $l_2$ and a time domain unit $l_3$.

25. The method according to claim 17 or 19, wherein the quantity of ports of the CSI-RS in the second CSI-RS resource is 64, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$, and the start time domain position in the second set comprises a time domain unit $l_1$.

26. The method according to claim 17, wherein a frequency domain density of the third CSI-RS resource is less than or equal to a first density threshold.

27. The method according to claim 26, wherein the first density threshold is 0.5.

28. The method according to claim 26 or 27, wherein the first information further indicates that a same port of the third CSI-RS resource corresponds to different RBs in two adjacent CSI-RS measurements.

29. The method according to claim 28, wherein on the third CSI-RS resource, an RB corresponding to a port $p$ in a $k^{th}$ CSI-RS measurement satisfies the following relationship:

$$P(k, p) = (P(0, p) + k) \bmod N,$$

wherein

$p$ represents a port index, $k$ represents the $k^{th}$ measurement, $P(0, p)$ represents a start frequency domain index of the port $p$ in an initial CSI-RS measurement, $P(k, p)$ is a frequency domain index of the port $p$ in the $k^{th}$ CSI-RS measurement, $N$ represents a parameter determined based on the frequency domain density of the third CSI-RS resource, and $k$ is a positive integer greater than or equal to 1.

30. The method according to claim 28, wherein the first information further indicates that the same port of the third CSI-RS resource corresponds to non-contiguous RBs in the two adjacent CSI-RS measurements.

31. The method according to claim 30, wherein the first information further indicates a quantity of RBs between the RBs occupied by the same port of the third CSI-RS resource in the two adjacent CSI-RS measurements.

32. The method according to any one of claims 17 to 31, wherein the first information comprises one or more of the following of each CSI-RS resource in the CSI-RS resource occupied by the CSI-RS: a quantity of ports corresponding to an RB on which the CSI-RS resource is located, a CDM type of a CSI-RS in the CSI-RS resource, a start time domain position corresponding to the RB on which the CSI-RS in the CSI-RS resource is located, and a start frequency domain position of a CDM group corresponding to the RB on which the CSI-RS in the CSI-RS resource is located.

33. A communication apparatus, wherein the apparatus comprises a processing module and a transceiver module; the transceiver module is configured to receive first information from a network device, wherein the first information indicates a CSI-RS resource occupied by a channel state information reference signal CSI-RS, and the CSI-RS resource occupied by the CSI-RS meets one or more of the following:

the CSI-RS resource occupied by the CSI-RS comprises a first CSI-RS resource, wherein a resource block RB set occupied by the first CSI-RS resource corresponds to a plurality of orthogonal codes;

the CSI-RS resource occupied by the CSI-RS comprises a second CSI-RS resource, wherein start time domain positions corresponding to an RB on which a CSI-RS in the second CSI-RS resource is located comprise a start time domain position in a first set and a start time domain position in a second set, the first set and the second set each comprise at least one start time domain position, and any start time domain position in the second set is different from a start time domain position in the first set;

the CSI-RS resource occupied by the CSI-RS comprises a plurality of CSI-RS resources; or

the CSI-RS resource occupied by the CSI-RS comprises a third CSI-RS resource, wherein different port sets of the third CSI-RS resource correspond to different RB sets;

the transceiver module is further configured to receive the CSI-RS from the network device on the CSI-RS resource occupied by the CSI-RS;

the processing module is further configured to generate channel state information CSI, wherein the CSI is obtained by measuring the CSI-RS; and

the transceiver module is further configured to send the CSI to the network device.

34. The apparatus according to claim 33, wherein the first information comprises the plurality of orthogonal codes corresponding to the RB set occupied by the first CSI-RS resource.

35. The apparatus according to claim 33, wherein a quantity of start time domain positions in the first set and a quantity of start time domain positions in the second set each are related to one or more of the following: a quantity of ports of the CSI-RS in the second CSI-RS resource, a code division multiplexing CDM type of the CSI-RS in the second CSI-RS resource, or a quantity of start frequency domain positions of a CDM group corresponding to the RB on which the CSI-RS in the second CSI-RS resource is located.

36. The apparatus according to claim 33 or 35, wherein the quantity of ports of the CSI-RS in the second CSI-RS resource is 48, the CDM type of the CSI-RS in the second CSI-RS resource is that two ports are multiplexed on two resource elements REs, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$ and a time domain unit $l_1$, and the start time domain position in the second set comprises a time domain unit $l_2$ and a time domain unit $l_3$.

37. The apparatus according to claim 33 or 35, wherein the quantity of ports of the CSI-RS in the second CSI-RS resource is 48, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$ and a time domain unit $l_1$, and the start time domain position in the second set comprises a time domain unit $l_2$ and a time domain unit $l_3$.

38. The apparatus according to claim 33 or 35, wherein the quantity of ports of the CSI-RS in the second CSI-RS resource is 48, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$, and the start time domain position in the second set comprises a time domain unit $l_1$.

39. The apparatus according to claim 33 or 35, wherein the quantity of ports of the CSI-RS in the second CSI-RS resource is 64, the CDM type of the CSI-RS in the second CSI-RS resource is that two ports are multiplexed on two REs, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$ and a time domain unit $l_1$, and the start time domain position in the second set comprises a time domain unit $l_2$ and a time domain

unit $l_3$.

40. The apparatus according to claim 33 or 35, wherein the quantity of ports of the CSI-RS in the second CSI-RS resource is 64, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$ and a time domain unit $l_1$, and the start time domain position in the second set comprises a time domain unit $l_2$ and a time domain unit $l_3$.

41. The apparatus according to claim 33 or 35, wherein the quantity of ports of the CSI-RS in the second CSI-RS resource is 64, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$, and the start time domain position in the second set comprises a time domain unit $l_1$.

42. The apparatus according to claim 33, wherein a frequency domain density of the third CSI-RS resource is less than or equal to a first density threshold.

43. The apparatus according to claim 42, wherein the first density threshold is 0.5.

44. The apparatus according to claim 42 or 43, wherein the first information further indicates that a same port of the third CSI-RS resource corresponds to different RBs in two adjacent CSI-RS measurements.

45. The apparatus according to claim 44, wherein on the third CSI-RS resource, an RB corresponding to a port $p$ in a $k^{th}$ CSI-RS measurement satisfies the following relationship:

$$P(k,p) = (P(0,p) + k) \bmod N,$$

wherein
$p$ represents a port index, $k$ represents the $k^{th}$ measurement, $P(0, p)$ represents a start frequency domain index of the port $p$ in an initial CSI-RS measurement, $P(k, p)$ is a frequency domain index of the port $p$ in the $k^{th}$ CSI-RS measurement, $N$ represents a parameter determined based on the frequency domain density of the third CSI-RS resource, and $k$ is a positive integer greater than or equal to 1.

46. The apparatus according to claim 44, wherein the first information further indicates that the same port of the third CSI-RS resource corresponds to non-contiguous RBs in the two adjacent CSI-RS measurements.

47. The apparatus according to claim 46, wherein the first information further indicates a quantity of RBs between the RBs occupied by the same port of the third CSI-RS resource in the two adjacent CSI-RS measurements.

48. The apparatus according to any one of claims 33 to 47, wherein the first information comprises one or more of the following of each CSI-RS resource in the CSI-RS resource occupied by the CSI-RS: a quantity of ports corresponding to an RB on which the CSI-RS resource is located, a CDM type of the CSI-RS in the CSI-RS resource, a start time domain position corresponding to the RB on which the CSI-RS in the CSI-RS resource is located, and a start frequency domain position of a CDM group corresponding to the RB on which the CSI-RS in the CSI-RS resource is located.

49. A communication apparatus, wherein the communication apparatus comprises a processing module and a transceiver module;

the processing module is configured to generate first information;
the transceiver module is configured to send the first information to a terminal device, wherein the first information indicates a CSI-RS resource occupied by a channel state information reference signal CSI-RS, and the CSI-RS resource occupied by the CSI-RS meets one or more of the following:

the CSI-RS resource occupied by the CSI-RS comprises a first CSI-RS resource, wherein a resource block RB set occupied by the first CSI-RS resource corresponds to a plurality of orthogonal codes;

the CSI-RS resource occupied by the CSI-RS comprises a second CSI-RS resource, wherein start time domain positions corresponding to an RB on which a CSI-RS in the second CSI-RS resource is located comprise a start time domain position in a first set and a start time domain position in a second set, the first set and the second set each comprise at least one start time domain position, and any start time domain position in the second set is different from a start time domain position in the first set;

the CSI-RS resource occupied by the CSI-RS comprises a plurality of CSI-RS resources; or

the CSI-RS resource occupied by the CSI-RS comprises a third CSI-RS resource, wherein different port sets of the third CSI-RS resource correspond to different RB sets;

the transceiver module is further configured to send the CSI-RS to the terminal device on the CSI-RS resource occupied by the CSI-RS; and

the transceiver module is further configured to receive channel state information CSI from the terminal device, wherein the CSI is obtained by measuring the CSI-RS.

50. The apparatus according to claim 49, wherein the first information comprises the plurality of orthogonal codes corresponding to the RB set occupied by the first CSI-RS resource.

51. The apparatus according to claim 49, wherein a quantity of start time domain positions in the first set and a quantity of start time domain positions in the second set each are related to one or more of the following: a quantity of ports of the CSI-RS in the second CSI-RS resource, a code division multiplexing CDM type of the CSI-RS in the second CSI-RS resource, or a quantity of start frequency domain positions of a CDM group corresponding to the RB on which the CSI-RS in the second CSI-RS resource is located.

52. The apparatus according to claim 49 or 51, wherein the quantity of ports of the CSI-RS in the second CSI-RS resource is 48, the CDM type of the CSI-RS in the second CSI-RS resource is that two ports are multiplexed on two resource elements REs, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$ and a time domain unit $l_1$, and the start time domain position in the second set comprises a time domain unit $l_2$ and a time domain unit $l_3$.

53. The apparatus according to claim 49 or 51, wherein the quantity of ports of the CSI-RS in the second CSI-RS resource is 48, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$ and a time domain unit $l_1$, and the start time domain position in the second set comprises a time domain unit $l_2$ and a time domain unit $l_3$.

54. The apparatus according to claim 49 or 51, wherein the quantity of ports of the CSI-RS in the second CSI-RS resource is 48, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located comprises a frequency domain unit $k_0$, a frequency domain unit $k_1$, and a frequency domain unit $k_2$, the start time domain position in the first set comprises a time domain unit $l_0$, and the start time domain position in the second set comprises a time domain unit $l_1$.

55. The apparatus according to claim 49 or 51, wherein the quantity of ports of the CSI-RS in the second CSI-RS resource is 64, the CDM type of the CSI-RS in the second CSI-RS resource is that two ports are multiplexed on two REs, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$ and a time domain unit $l_1$, and the start time domain position in the second set comprises a time domain unit $l_2$ and a time domain unit $l_3$.

56. The apparatus according to claim 49 or 51, wherein the quantity of ports of the CSI-RS in the second CSI-RS resource is 64, the CDM type of the CSI-RS in the second CSI-RS resource is that four ports are multiplexed on a total of four REs corresponding to two frequency domain units and two time domain units, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$ and a time domain unit $l_1$, and the start time domain position in the second set comprises a time domain unit $l_2$ and a time domain unit $l_3$.

57. The apparatus according to claim 49 or 51, wherein the quantity of ports of the CSI-RS in the second CSI-RS resource is 64, the CDM type of the CSI-RS in the second CSI-RS resource is that eight ports are multiplexed on a total of eight REs corresponding to two frequency domain units and four time domain units, the start frequency domain position of the CDM group corresponding to the RB on which the CSI-RS in the second CSI-RS resource is located comprises a frequency domain unit $k_0$, a frequency domain unit $k_1$, a frequency domain unit $k_2$, and a frequency domain unit $k_3$, the start time domain position in the first set comprises a time domain unit $l_0$, and the start time domain position in the second set comprises a time domain unit $l_1$.

58. The apparatus according to claim 49, wherein a frequency domain density of the third CSI-RS resource is less than or equal to a first density threshold.

59. The apparatus according to claim 58, wherein the first density threshold is 0.5.

60. The apparatus according to claim 58 or 59, wherein the first information further indicates that a same port of the third CSI-RS resource corresponds to different RBs in two adjacent CSI-RS measurements.

61. The apparatus according to claim 60, wherein on the third CSI-RS resource, an RB corresponding to a port $p$ in a $k^{th}$ CSI-RS measurement satisfies the following relationship:

$$P(k,p) = (P(0,p) + k) mod\ N,$$

wherein
$p$ represents a port index, $k$ represents the $k^{th}$ measurement, $P(0, p)$ represents a start frequency domain index of the port $p$ in an initial CSI-RS measurement, $P(k, p)$ is a frequency domain index of the port $p$ in the $k^{th}$ CSI-RS measurement, $N$ represents a parameter determined based on the frequency domain density of the third CSI-RS resource, and $k$ is a positive integer greater than or equal to 1.

62. The apparatus according to claim 60, wherein the first information further indicates that the same port of the third CSI-RS resource corresponds to non-contiguous RBs in the two adjacent CSI-RS measurements.

63. The apparatus according to claim 62, wherein the first information further indicates a quantity of RBs between the RBs occupied by the same port of the third CSI-RS resource in the two adjacent CSI-RS measurements.

64. The apparatus according to any one of claims 49 to 63, wherein the first information comprises one or more of the following of each CSI-RS resource in the CSI-RS resource occupied by the CSI-RS: a quantity of ports corresponding to an RB on which the CSI-RS resource is located, a CDM type of the CSI-RS in the CSI-RS resource, a start time domain position corresponding to the RB on which the CSI-RS in the CSI-RS resource is located, and a start frequency domain position of a CDM group corresponding to the RB on which the CSI-RS in the CSI-RS resource is located.

65. A communication apparatus, comprising a processor and a memory, wherein the memory is configured to store computer instructions, and when the processor executes the instructions, the communication apparatus is enabled to perform the channel measurement method according to any one of claims 1 to 16 or the channel measurement method according to any one of claims 17 to 32.

66. A communication apparatus, comprising a processor and an interface circuit, wherein

the interface circuit is configured to receive code instructions and transmit the code instructions to the processor; and
the processor is configured to run the code instructions to perform the channel measurement method according to any one of claims 1 to 16 or the channel measurement method according to any one of claims 17 to 32.

67. A communication apparatus, wherein the communication apparatus comprises a processor and a transceiver, the transceiver is used by the communication apparatus to exchange information with another communication apparatus, and the processor executes program instructions to perform the channel measurement method according to any one of claims 1 to 16 or the channel measurement method according to any one of claims 17 to 32.

68. The communication apparatus according to any one of claims 65 to 67, wherein the communication apparatus is a chip.

69. A computer-readable storage medium, wherein the computer-readable storage medium comprises a computer program or instructions, and when the computer program or the instructions are run on a computer, the computer is enabled to perform the channel measurement method according to any one of claims 1 to 16 or the channel measurement method according to any one of claims 17 to 32.

70. A computer program product, wherein the computer program product comprises a computer program or instructions, and when the computer program or the instructions are run on a computer, the computer is enabled to perform the channel measurement method according to any one of claims 1 to 16 or the channel measurement method according to any one of claims 17 to 32.

```
┌─────────────────────┐                    ┌─────────────────────┐
│   Network device    │                    │   Terminal device   │
└─────────────────────┘                    └─────────────────────┘
```

S101: Channel measurement
configuration information

S102: Determine, based on the channel
measurement configuration
information, a CSI-RS resource
occupied by a CSI-RS

S103: Determine, based on the channel
measurement configuration
information, the CSI-RS resource
occupied by the CSI-RS

S104: Send the CSI-RS on the CSI-RS resource

S105: CSI

S106: Send data based on the CSI reported
by the terminal device

FIG. 1

Frequency
domain
unit

Time domain unit

(a)

Frequency
domain
unit

Time domain unit

(b)

⊠  CDM group 0

FIG. 2

FIG. 3

(a)

(b)

FIG. 4

FIG. 5

FIG. 6

FIG. 7

FIG. 8

FIG. 9

$\rho=1$        $\rho=0.5$

(a)        (b)

RB unoccupied by a CSI-RS

RB occupied by a CSI-RS

FIG. 10

1102a    1101a    1101b    1101c

1102d

1102b

1102c    1102e    1102f

FIG. 11

| Network device | | Terminal device |
| --- | --- | --- |

S1201: First information, indicating a
CSI-RS resource occupied by a CSI-RS,
where the CSI-RS resource includes a
first CSI-RS resource

S1203: Determine the first CSI-RS
resource occupied by the CSI-RS

S1202: Determine, based on the first
information, the first CSI-RS resource
occupied by the CSI-RS

S1204: Send the CSI-RS on the first CSI-RS
resource

S1205: CSI

FIG. 12

FIG. 13

Network device

Terminal device

S1401: First information, indicating a
CSI-RS resource occupied by a CSI-RS,
where the CSI-RS resource includes a
second CSI-RS resource

S1403: Determine the second CSI-RS
resource occupied by the CSI-RS

S1402: Determine, based on the first
information, the second CSI-RS resource
occupied by the CSI-RS

S1404: Send the CSI-RS on the
second CSI-RS resource

S1405: CSI

FIG. 14

FIG. 15

FIG. 16

```
┌─────────────────────┐                    ┌─────────────────────┐
│   Network device    │                    │   Terminal device   │
└─────────────────────┘                    └─────────────────────┘
          │                                           │
          │  S1701: First information, indicating a   │
          │  CSI-RS resource occupied by a CSI-RS,    │
          │  where the CSI-RS resource includes a     │
          │      plurality of CSI-RS resources        │
          │──────────────────────────────────────────▶
          │                                           │
┌─────────┴───────────────────┐      ┌──────────────┴──────────────────────┐
│ S1703: Determine the        │      │ S1702: Determine, based on the first│
│ plurality of CSI-           │      │ information, the plurality of CSI-RS│
│ RS resources occupied by    │      │ resources occupied by the CSI-RS    │
│ the CSI-RS                   │      │                                     │
└─────────┬───────────────────┘      └──────────────┬──────────────────────┘
          │                                           │
          │    S1704: Send the CSI-RS on the         │
          │      plurality of CSI-RS resources       │
          │──────────────────────────────────────────▶
          │                                           │
          │              S1705: CSI                   │
          ◀──────────────────────────────────────────│
          │                                           │
```

FIG. 17

FIG. 18

Network device                    Terminal device

S1901: First information, indicating a
CSI-RS resource occupied by a CSI-RS,
where the CSI-RS resource includes a
third CSI-RS resource

S1903: Determine the third CSI-RS
resource occupied by the CSI-RS

S1902: Determine, based on the first
information, the third CSI-RS resource
occupied by the CSI-RS

S1904: Send the CSI-RS on the third CSI-RS
resource

S1905: CSI

FIG. 19

FIG. 20

FIG. 21

FIG. 22

FIG. 23

FIG. 24

Communication apparatus 2500

Processing
module

2501

Transceiver
module

2502

FIG. 25

Communication apparatus 2600

2601

Processor

CPU 0

CPU 1

2604

Processor

CPU 0

CPU 1

2602

Memory

2603

Transceiver

FIG. 26

# EP 4 753 174 A1

## INTERNATIONAL SEARCH REPORT

International application No.

**PCT/CN2024/112428**

### A. CLASSIFICATION OF SUBJECT MATTER

H04B17/309(2015.01)i

According to International Patent Classification (IPC) or to both national classification and IPC

### B. FIELDS SEARCHED

Minimum documentation searched (classification system followed by classification symbols)

IPC:H04B,H04L,H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, DWPI: 不同, 端口, 集合, 频域, 位置, 密度, 起始, 时域, 正交码, 指示, 资源, 资源块, 测量, 报告, CDM, CSI, CSI-RS, OCC, port, RB, resource, block, measurement, report, time, frequency

### C. DOCUMENTS CONSIDERED TO BE RELEVANT

| Category* | Citation of document, with indication, where appropriate, of the relevant passages | Relevant to claim No. |
|---|---|---|
| X | CN 114221685 A (SAMSUNG ELECTRONICS CO., LTD.) 22 March 2022 (2022-03-22) description, paragraphs [0044]-[0069] and [0149]-[0153] | 1, 16-17, 32-33, 48-49, 64-70 |
| X | CN 113853025 A (DATANG MOBILE COMMUNICATIONS EQUIPMENT CO., LTD.) 28 December 2021 (2021-12-28) description, paragraphs [0430]-[0454] | 1, 16-17, 32-33, 48-49, 64-70 |
| A | WO 2021168806 A1 (HUAWEI TECHNOLOGIES CO., LTD.) 02 September 2021 (2021-09-02) entire document | 1-70 |
| A | WO 2023107763 A1 (QUALCOMM INC.) 15 June 2023 (2023-06-15) entire document | 1-70 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 November 2024** | **18 November 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | | International application No.<br>**PCT/CN2024/112428** | | | |

| Patent document<br>cited in search report | | | Publication date<br>(day/month/year) | Patent family member(s) | | | Publication date<br>(day/month/year) |
|---|---|---|---|---|---|---|---|
| CN | 114221685 | A | 22 March 2022 | US | 2021242917 | A1 | 05 August 2021 |
| | | | | WO | 2017048107 | A1 | 23 March 2017 |
| | | | | KR | 20180043811 | A | 30 April 2018 |
| | | | | US | 2018262252 | A1 | 13 September 2018 |
| | | | | CN | 108292943 | A | 17 July 2018 |
| | | | | IN | 201827011842 | A | 16 November 2018 |
| CN | 113853025 | A | 28 December 2021 | WO | 2022001946 | A1 | 06 January 2022 |
| | | | | EP | 4175389 | A1 | 03 May 2023 |
| | | | | US | 2023291521 | A1 | 14 September 2023 |
| | | | | CN | 118265168 | A | 28 June 2024 |
| WO | 2021168806 | A1 | 02 September 2021 | US | 2022408288 | A1 | 22 December 2022 |
| | | | | EP | 4087346 | A1 | 09 November 2022 |
| | | | | CN | 115039472 | A | 09 September 2022 |
| | | | | IN | 202247046174 | A | 19 August 2022 |
| WO | 2023107763 | A1 | 15 June 2023 | EP | 4445537 | A1 | 16 October 2024 |
| | | | | US | 2023179353 | A1 | 08 June 2023 |
| | | | | KR | 20240116905 | A | 30 July 2024 |
| | | | | CN | 118339797 | A | 12 July 2024 |
| | | | | IN | 202427028585 | A | 21 June 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311052476